# EUROPEAN PATENT SPECIFICATION

(11) **EP 4 341 326 B1**
(45) Date of publication and mention of the grant of the patent: **23.04.2025**
(21) Application number: 22726365.4
(22) Date of filing: 05.05.2022
(51) Int. Cl.: C08G 77/54, C08G 77/388, C08G 77/48, C07F 7/10, C07F 7/18, C08L 83/14

(54) **PROCESSES FOR MAKING POLYSILOXAZANES AND USING SAME FOR PRODUCING AMINO-FUNCTIONAL POLYORGANOSILOXANES**
VERFAHREN ZUR HERSTELLUNG VON POLYSILOXAZANEN UND VERWENDUNG DAVON ZUR HERSTELLUNG VON AMINOFUNKTIONELLEN POLYORGANOSILOXANEN
PROCÉDÉS DE FABRICATION DE POLYSILOXAZANES ET LEUR UTILISATION POUR LA PRODUCTION DE POLYORGANOSILOXANES À FONCTION AMINO

(30) Priority: 18.05.2021 US 202163189726 P
(43) Date of publication of application: 27.03.2024
(73) Proprietor: Dow Silicones Corporation, Midland, Michigan 48686 (US)
(72) Inventor: REKKEN, Brian, Midland, Michigan 48686-0994 (US); TELGENHOFF, Michael, Midland, Michigan 48686-0994 (US)
(74) Representative: Murgitroyd & Company
(86) International application number: PCT/US2022/072123
(87) International publication number: WO 2022/246363

(56) References cited:
- US-A- 5 026 890

## Description

### CROSS REFERENCE TO RELATED APPLICATIONS

This application claims the benefit of U.S. Provisional Patent Application Serial No. 63/189,726 filed on 18 May 2021 under 35 U.S.C. §119 (e).

### TECHNICAL FIELD

An improved process for preparing a cyclic siloxazane via a hydrosilylation reaction of an allyl-functional amine and a SiH terminated siloxane oligomer is disclosed. The cyclic siloxazane is useful for capping silanol groups in silanol-functional polyorganosiloxanes. The cyclic siloxazane, and/or an α-alkoxy-ω-amino-functional polysiloxane prepared therefrom, can be used for preparing amino-functional polyorganosiloxanes.

### BACKGROUND

U.S. Patent 5,026,890 to Webb et al. discloses reaction of an olefinic amine such as allylamine with a polydiorganosiloxane such as 1,1,3,3-tetramethyldisiloxane in the presence of a platinum containing hydrosilylation catalyst. Depending on the reaction conditions, the product may be bis(aminoalkyl)polydiorganosiloxanes and alkenylaminodisiloxanes, which are spontaneously converted to cyclic disiloxazanes. The cyclic disiloxazanes may in turn be converted by hydrolysis to bis(aminoalkyl)octaorganotetrasiloxanes. For example, 1,1,3,3,-tetramethyl-2-oxa-7-aza-1,3-disilacycloheptane could be made via the addition of 1,1,3,3-tetramethyldisiloxane to a large excess of allylamine while heating to reflux.

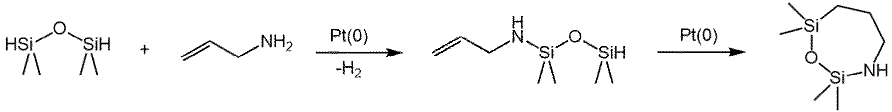

When the tetramethyldisiloxane (TMDSO) was added in a 1:1 ratio relative to allyl amine (AA), a runaway reaction occurred. U.S. Patent 5,026,890 does not show a successful reaction with a TMDSO:AA ratio less than 1:2. This process suffered from the drawbacks of low volume efficiency, slow production, low yield of the cyclic siloxazane, and significant safety concerns. The process required handling the excess allylamine, which is a toxic material. Furthermore, the process suffered from an unmanageable amount of initial hydrogen generation and had potential for an uncontrolled exothermic reaction, which makes the process in U.S. Patent 5,026,890 impractical to practice on an industrial scale.

Amino-functional polyorganosiloxanes, such as amine-terminated polydiorganosiloxanes are useful in personal care applications, such as hair care. Amine-terminated polydiorganosiloxanes may be useful, for example, in hair conditioning applications. Amine-terminated polydiorganosiloxanes made by condensation may suffer from the drawback of instability as shown by viscosity changes and/or development of an ammonia odor after aging, which is undesirable for personal care applications. Traditionally, primary amine terminated polyorganosiloxanes are expensive to make by equilibration as they require costly starting materials and catalysts and require multiple process steps to complete.

Another method for making amine-terminated polyorganosiloxanes uses allylamine- or a derivative that hydrolyzes into allylamine. These are used to do hydrosilylation chemistry with SiH terminated polymers to form the amine-terminated polyorganosiloxanes; however, this method suffers from the drawback that the amine-terminated polyorganosiloxane product may contain at least trace amounts of either SiH or allylamine, either of which would have to be removed before the product can be used in any personal care applications.

Another method of making amine-terminated polyorganosiloxanes is by ammonolysis of chloropropyl terminated siloxanes. This costly, multi-step method may suffer from the drawback of leaving residual salt (i.e., ammonium chloride) in the amine-terminated polyorganosiloxane product that may require extensive washing to remove, which is cost ineffective and poorly sustainable. Also, any residual ammonium chloride may produce a foul smell, which is undesirable for personal care applications.

### SUMMARY

A process for preparing a cyclic siloxazane comprises hydrosilylation reaction of an allyl-functional amine and an SiH-terminated siloxane oligomer in the presence of a hydrosilylation reaction catalyst. The cyclic siloxazane can be used as a capping agent for silanol-functional silanes and/or polyorganosiloxanes to make amino-functional silanes and/or polyorganosiloxanes.

### DETAILED DESCRIPTION

### Part I. Synthesis of Cyclic Siloxazanes

A process for preparing a cyclic siloxazane comprises:
1) combining starting materials comprising
   a) an allyl-functional amine,
   b) a platinum catalyst capable of catalyzing hydrosilylation reaction,
      optionally c) a hydrosilylation reaction promoter (hydrocarbyloxy-functional di-hydrocarbylsilane)of formula 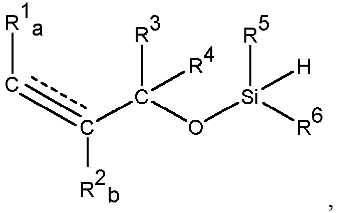 where - - - - - represents a bond selected from the group consisting of a double bond and a triple bond, subscript a is 1 or 2, subscript b is 0 or 1, with the provisos that when - - - - **-** is a double bond, then a = 2 and b **=** 1, and when **- - - - -** is a triple bond, then a = 1 and b = 0; each R¹ is independently selected from the group consisting of hydrogen, an alkyl group of 1 to 15 carbon atoms, and an aryl group of 6 to 20 carbon atoms; R² is selected from the group consisting of hydrogen, an alkyl group of 1 to 15 carbon atoms, and an aryl group of 6 to 20 carbon atoms; R³ is selected from the group consisting of hydrogen, an alkyl group of 1 to 15 carbon atoms, and an aryl group of 6 to 20 carbon atoms; R⁴ is selected from the group consisting of hydrogen, an alkyl group of 1 to 15 carbon atoms, and an aryl group of 6 to 20 carbon atoms; R⁵ is an independently selected monovalent hydrocarbon group of 1 to 15 carbon atoms; and R⁶ is an independently selected monovalent hydrocarbon group of 1 to 15 carbon atoms;
   thereby forming a reaction mixture, and thereafter
2) adding to the reaction mixture:
   d) an SiH-terminated siloxane oligomer of formula 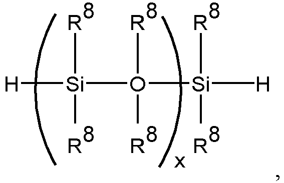 where each R⁸ is an independently selected monovalent hydrocarbon group of 1 to 18 carbon atoms and subscript x is 1 or 2; thereby preparing a reaction product comprising the cyclic siloxazane and a by-product comprising hydrogen (H₂); and
   optionally 3) purging with an inert gas, thereby removing at least some of the hydrogen, during step 2);
   optionally 4) heating the reaction mixture at a temperature of 110 °C to 150 °C for 1 to 6 hours; and
   optionally 5) performing a reactive distillation of the reaction product, thereby purifying the cyclic siloxazane.

### Starting Material a) Allyl-Functional Amine

Starting material a) in the process for making the cyclic siloxazane is an allyl-functional amine. The allyl-functional amine may have formula: 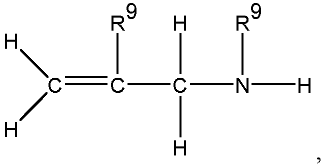 where each R⁹ is independently selected from the group consisting of hydrogen and an alkyl group of 1 to 15 carbon atoms, alternatively 1 to 12 carbon atoms, and alternatively 1 to 6 carbon atoms. Suitable alkyl groups are exemplified by methyl, ethyl, propyl (e.g., iso-propyl and/or n-propyl), butyl (e.g., isobutyl, n-butyl, tert-butyl, and/or sec-butyl), pentyl (e.g., isopentyl, neopentyl, and/or tert-pentyl), hexyl, heptyl, octyl, nonyl, and decyl, as well as branched saturated monovalent hydrocarbyl groups of 6 or more carbon atoms including cycloalkyl groups such as cyclopentyl and cyclohexyl. Alternatively, each alkyl group for R⁹ may be methyl. Alternatively, each R⁹ may be a hydrogen atom. Alternatively, at least one R⁹ per molecule may be an alkyl group such as methyl. Without wishing to be bound by theory, it is thought that the cyclic siloxazane may be used as a capping agent for silanol functional silanes and polyorganosiloxanes to make primary amine-functional silanes and polyorganosiloxanes when each R⁹ is a hydrogen atom.

Allyl-functional amines are known in the art and are commercially available. For example, allylamine of formula CH₂=CH-CH₂NH₂, N-allyl-methylamine, N-allylcyclopentylamine, 2-methyl-allylamine, and allylcyclohexylamine are commercially available from Millipore Sigma of St. Louis, Missouri, USA. Alternatively, the allyl-functional amine may be allylamine.

### Starting Material b) Platinum Catalyst

Starting material b) in the process for making the cyclic siloxazane is a platinum catalyst. Platinum catalysts are known in the art and are commercially available. The platinum catalyst may be platinum metal. Alternatively, the platinum catalyst may contain platinum metal. Suitable platinum catalysts include b-i) a compound of platinum metal, which may include chloroplatinic acid (Speier's Catalyst), chloroplatinic acid hexahydrate, and platinum dichloride. Alternatively, starting material b) may comprise b-ii) a complex of the compound for b-i) with a low molecular weight organopolysiloxane or b-iii) a platinum compound microencapsulated in a matrix or coreshell type structure. Complexes of platinum with low molecular weight organopolysiloxanes include 1,3--1,1,3,3-tetramethyl-divinyl-disiloxane complexes with platinum (Karstedt's Catalyst) and Pt(0) complex in tetramethyltetravinylcyclotetrasiloxane (Ashby's Catalyst). Alternatively, the hydrosilylation reaction catalyst may be b-iv) a complex, as described above, microencapsulated in a resin matrix. The platinum catalyst may be suitable for catalyzing hydrosilylation reaction and/or for dehydrogenative coupling of a silicon hydrogen bond, Si-H, from starting material d) and a nitrogen-hydrogen bond, N-H, from starting material a) to generate a silicon nitrogen bond, Si-N, and dihydrogen, H₂. While platinum catalysts are described above, other platinum group metal hydrosilylation reaction catalysts may also be useful. This may involve using a metal selected from rhodium, ruthenium, palladium, osmium, and iridium. Alternatively, a hydrosilylation reaction catalyst may be a compound of such a metal, for example, chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium.

Alternatively, starting material b), the hydrosilylation reaction catalyst, may be selected from the group consisting of: i) platinum metal, ii) a compound of platinum, iii) a complex of the compound with an organopolysiloxane, iv) the compound microencapsulated in a matrix or coreshell type structure, v) the complex of the compound microencapsulated in a matrix or coreshell type structure, and vi) a combination of two or more thereof.

Exemplary hydrosilylation reaction catalysts are described in U.S. Patents 3,159,601; 3,220,972; 3,296,291; 3,419,593; 3,516,946; 3,814,730; 3,989,668; 4,784,879; 5,036,117; and 5,175,325; and EP 0 347 895 B. Microencapsulated hydrosilylation reaction catalysts and methods of preparing them are known in the art, as exemplified in U.S. Patents 4,766,176 and 5,017,654. Hydrosilylation reaction catalysts are commercially available, for example, SYL-OFF^{™} 4000 Catalyst and SYL-OFF^{™} 2700 are available from Dow Silicones Corporation.

The amount of catalyst useful herein depends on various factors including the type and amount of other starting materials used in the process, however, the amount of catalyst may be sufficient to provide 10 ppm to 500 ppm Pt based on combined weights of all starting materials used in the process for preparing the cyclic siloxazane, alternatively 20 ppm to 100 ppm, and alternatively 35 ppm to 60 ppm on the same basis.

### Starting Material c) Hydrosilylation Reaction Promoter

Starting material c) in the process for making the cyclic siloxazane is an optional hydrosilylation reaction promoter. Starting material c) may be a hydrocarbyloxy-functional di-hydrocarbylsilane. The hydrocarbyloxy-functional di-hydrocarbylsilane may have formula: 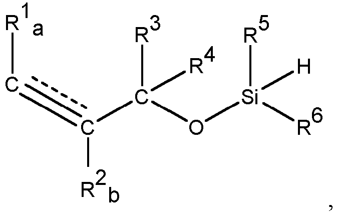 where - - - - - represents a bond selected from the group consisting of a double bond and a triple bond, subscript a is 1 or 2, subscript b is 0 or 1, with the provisos that when - - - - - is a double bond, then a = 2 and b = 1, and when - - - - - is a triple bond, then a = 1 and b = 0; each R¹ is independently selected from the group consisting of hydrogen, an alkyl group of 1 to 15 carbon atoms, and an aryl group of 6 to 20 carbon atoms; R² is selected from the group consisting of hydrogen, an alkyl group of 1 to 15 carbon atoms, and an aryl group of 6 to 20 carbon atoms; R³ is selected from the group consisting of hydrogen, an alkyl group of 1 to 15 carbon atoms, and an aryl group of 6 to 20 carbon atoms, and R⁴ is selected from the group consisting of hydrogen, an alkyl group of 1 to 15 carbon atoms, and an aryl group of 6 to 20 carbon atoms; R⁵ is an independently selected monovalent hydrocarbon group of 1 to 15 carbon atoms; and R⁶ is an independently selected monovalent hydrocarbon group of 1 to 15 carbon atoms. Alternatively, at least one of R⁵ and R⁶ may be an aryl group. Alternatively, both R⁵ and R⁶ are aryl groups.

In the formula above, the alkyl group for R¹, R², R³, R⁴, R⁵, and R⁶ may be as described above for R⁹. Suitable aryl groups are exemplified by cyclopentadienyl, phenyl, tolyl, xylyl, anthracenyl, benzyl, 1-phenylethyl, 2-phenylethyl, 2,4,6-trimethylphenyl, 2,4,6-triisopropylphenyl, and naphthyl. Monocyclic aryl groups may have 5 to 9 carbon atoms, alternatively 6 to 7 carbon atoms, and alternatively 5 to 6 carbon atoms. Polycyclic aryl groups may have 10 to 17 carbon atoms, alternatively 10 to 14 carbon atoms, and alternatively 12 to 14 carbon atoms. Alternatively, the aryl group may be phenyl. Alternatively, R¹, R², and R³ may each be hydrogen. Alternatively, R⁴ may be selected from the group consisting of hydrogen and methyl.

Alternatively, the bond shown by - - - - - may be a double bond, and R¹, R², R³, R⁴ may each be hydrogen. Alternatively, R⁵ may be selected from the group consisting of alkyl and aryl, and R⁶ may be aryl. Alternatively, R⁵ may be aryl and R⁶ may be aryl. Alternatively, R⁵ may be selected from the group consisting of methyl, 2,4,6-trimethylphenyl and 2,4,6-triisopropylphenyl. Alternatively, R⁶ may be selected from the group consisting of 2,4,6-trimethylphenyl and 2,4,6-triisopropylphenyl.

Alternatively, the bond shown by - - - - - may be a triple bond, and R¹, R², and R³ may each be hydrogen. Alternatively, R⁴ may be selected from the group consisting of hydrogen and alkyl, e.g., methyl. Alternatively, R⁵ may be selected from the group consisting of alkyl and aryl, and R⁶ may be aryl. Alternatively, R⁵ may be aryl and R⁶ may be aryl. Alternatively, R⁵ may be selected from the group consisting of methyl, 2,4,6-trimethylphenyl and 2,4,6-triisopropylphenyl. Alternatively, R⁶ may be selected from the group consisting of 2,4,6-trimethylphenyl and 2,4,6-triisopropylphenyl.

Alternatively, starting material c), the promoter, may be selected from the group consisting of: 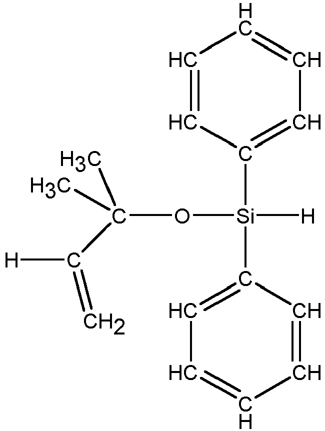 (1,1,-dimethyl-2-propenyl)oxydiphenylsilane, 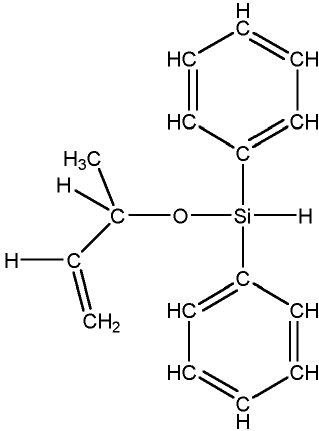 (1-methyl-2-propenyl)oxydiphenylsilane, 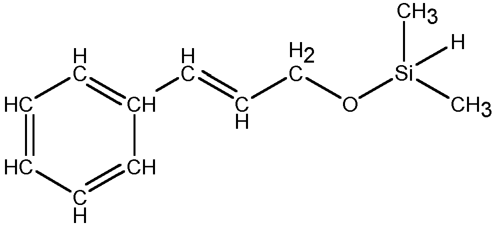 *trans*-(3-phenyl-2-propenyl)oxy-dimethylsilane, 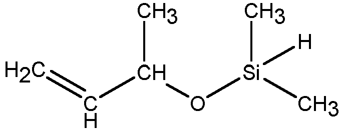 (1-methyl-2-propenyl)oxy-dimethylsilane) 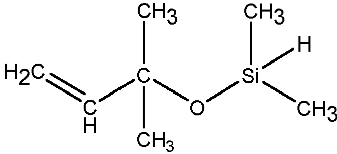 (1,1-dimethyl-2-propenyl)oxy-dimethylsilane), 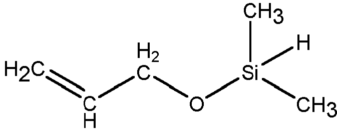 allyloxy-dimethylsilane, 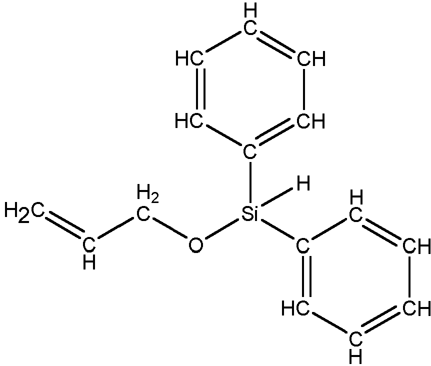 allyloxy-diphenylsilane, 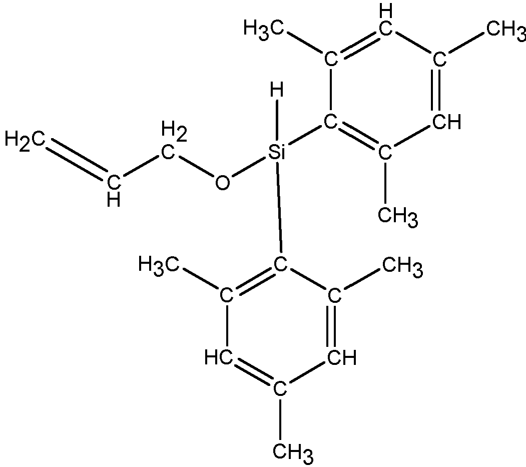 allyloxy-bis(2,4,6-trimethylphenyl)silane, 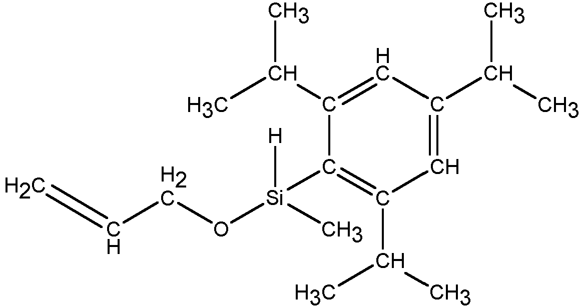 allyloxy-methyl-(2,4,6,-tri-isopropylphenyl)silane, and 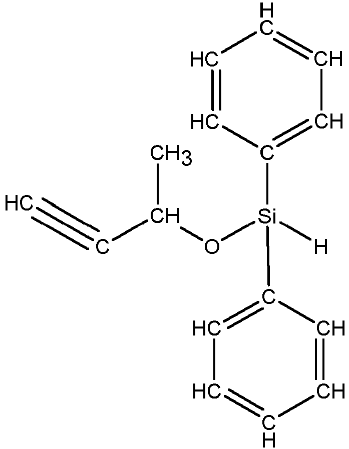 (1-methyl-2-propyn-1-yl)oxy-diphenylsilane. Alternatively, starting material c) may be a hydrocarbyloxy-functional aryl silane, such as (1,1,-dimethyl-2-propenyl)oxydiphenylsilane; (1-methyl-2-propenyl)oxydiphenylsilane; allyloxy-diphenylsilane; allyloxy-bis(2,4,6-trimethylphenyl)silane; allyloxy-methyl-(2,4,6,-tri-isopropylphenyl)silane; and/or (1-methyl-2-propyn-1-yl)oxy-diphenylsilane. Alternatively, starting material c), the promoter, may be selected from the group consisting of allyloxy-bis(2,4,6-trimethylphenyl)silane; allyloxy-methyl-(2,4,6-triisopropylphenyl)silane; and (1-methyl-2-propyn-1-yl)oxy-diphenylsilane.

Suitable promoters of some of the formulas above and methods for their preparation are known, for example, in Japan Patent Publications JP 11209384 (A) and JP 2002255975 (A). Alternatively, promoters for use in the process herein may be synthesized, for example, by a process comprising combining starting materials comprising: an allyl-functional alcohol and an allyl-functional amine to form a mixture, and adding the mixture to an SiH functional halosilane, which may optionally be performed in the presence of a solvent (such as that described herein as starting material e)). The resulting reaction product may be purified, for example by filtration, stripping, and/or distillation to recover the promoter. Alternatively, promoters for use in the process herein may be synthesized, for example, by the methods of Reference Examples 1 and 2, described below.

Alternatively, the promoter, such as the hydrocarbyloxy-functional arylsilanes described above, may be synthesized, for example, by a process comprising:
1) combining starting materials comprising:
   *a*) an unsaturated alcohol, and
   *b*) an amine,
   thereby forming *c*) a mixture, and
2) adding *c*) the mixture to *d*) an SiH functional halosilane; thereby forming *f*) a reaction product comprising *g*) the promoter. The process may optionally be performed in the presence of *e*) a solvent. Steps *1*) and *2*) may be performed at RT; alternatively, steps *1*) and 2) may be performed at a temperature of -20 °C to 40 °C; alternatively, 0 °C to 20 °C.

The process described above may optionally further comprise step *3*): recovering *g*) the promoter from *f*) the reaction mixture. Recovering in step *3*) may be performed by any convenient means, for example by filtration, washing with solvent, stripping, and/or distillation to recover *g*) the promoter from unreacted starting materials, by-products, if any, and *e*) solvent, if used. One or more of the process steps may be performed under an inert atmosphere, such as nitrogen. For example, steps *1*) and *2*) described above may optionally further comprise flowing inert gas through the vessel headspace. Without wishing to be bound by theory, it is thought that flowing inert gas though the reactor headspace may help to remove low-boiling impurities from the system.

### Starting Material a) Unsaturated Alcohol

The unsaturated alcohol used to prepare the promoter may have formula 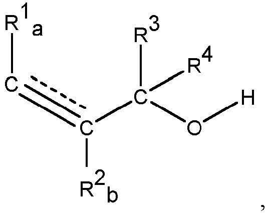 where R¹, R², R³, R⁴, and subscripts a and b are as described above. Suitable unsaturated alcohols are known in the art and are commercially available. For example, allyl alcohol and propargyl alcohol are available from Millipore Sigma of St. Louis, Missouri, USA. The alcohol may be used in a 1:1 ratio to starting material *d*) the SiH functional halosilane; alternatively, 1.1 Alcohol to 1 halosilane. Without wishing to be bound by theory, it is thought that it is important to avoid using too much alcohol as the -OH can react with SiH to generate hydrogen, especially in the case of propargyl alcohol, HC≡C-CH₂-OH, where hydrogen gas generation will slowly occur. It may also be important to minimize residual halosilane as halide impurities decrease the selectivity of the catalyst. It may also be also important to have minimal excess alcohol as alcohols are known to those in the art, to increase the solubility of ammonium salts in non-polar organic solvents, making the removal of ammonium halide salts by filtration, less effective.

### Starting Material b) Amine

Starting material *b*) in this process to prepare the promoter may be a tertiary amine. The tertiary amine may be a trialkyl amine. The trialkyl amine may have formula NR²¹₃, where each R²¹ is an independently selected alkyl group of 2 to 16 carbon atoms, alternatively 2 to 12 carbon atoms, alternatively 2 to 8 carbon atoms, and alternatively 2 to 4 carbon atoms. Alternatively, the trialkyl amine may be triethylamine. Tertiary amines are known in the art and are commercially available, e.g., from Millipore Sigma of St. Louis, Missouri, USA. Alternatively, starting material *b*) may comprise pyridine and derivatives thereof. Starting material *b*) the tertiary amine may be used in a 1:1 mole ratio to starting material *d*), the SiH functional halosilane, alternatively, the amounts of starting materials *b*) and *d*) may be such that a *b*) : *d*) ratio is 1.5:1; alternatively, 1:1 to 1.1:1. Without wishing to be bound by theory, it is thought that it is important to have a sufficient amount of starting material *b*) (e.g., trialkyl amine) to maximize consumption of the halide of *d*) the SiH functional halosilane. Without wishing to be bound by theory, it is thought that it is also important to have minimal excess amount of starting material *b*) (e.g., trialkyl amine), to increase the solubility of ammonium salts in non-polar organic solvents, making the removal of ammonium halide salts by filtration, less effective.

### Starting Material d) SiH-Functional Halosilane

Starting material d) in this process to prepare the promoter is an SiH-functional halosilane. The SiH-functional halosilane may have formula 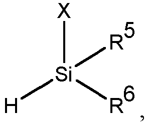 where R⁵ and R⁶ are as described above, and X is a halogen atom selected from the group consisting of F, Cl, Br, and I; alternatively F, Cl, and Br; alternatively Cl and Br; alternatively Cl; and alternatively Br. Examples of suitable SiH-functional halosilanes include diphenylchlorosilane (Ph₂HSiCl), phenylmethylchlorosilane (PhMeHSiCl), chloro-methyl-(2,4,6-tri-isopropyl-phenyl)silane, and chloro-di-(2,4,6-trimethylphenyl)silane. Suitable SiH-functional halosilanes are commercially available. For example, diphenylchlorosilane is available from Millipore Sigma of St. Louis, Missouri, USA. Alternatively, SiH-functional halosilanes may be synthesized by known methods, such as Grignard reaction of a hydridohalosilane (e.g., of formula R_{d}R²²ₑSiX_{(4-d-e)} where X is as described above; R²² is an alkyl group of 1 to 18 carbon atoms, alternatively 1 to 12 carbon atoms, alternatively 1 to 6 carbon atoms, alternatively methyl; subscript d is 1 or 2, subscript e is 0 or 1, and a quantity (d + e) < 4) and an aryl Grignard reagent, such as an arylmagnesium bromide in the presence of an ether and optionally a solvent as described herein for starting material e). One skilled in the art would be able to prepare the SiH-functional halosilane described above using processes such as those disclosed in U.S. Patent 7,456,308 and U.S. Patent 7,351,847, and the references cited therein, by varying appropriate starting materials.

### Starting Material e) Solvent

Starting material *e*) in this process to prepare the promoter is an SiH-functional halosilane is a solvent that may optionally be added during and/or after step *1*) and/or step *2*) of the process. Suitable solvents include, polyalkylsiloxanes, aromatic hydrocarbons, aliphatic hydrocarbons, mineral spirits, naphtha, or a combination thereof. Polyalkylsiloxanes with suitable vapor pressures may be used as the solvent, and these include hexamethyldisiloxane, octamethyltrisiloxane, hexamethylcyclotrisiloxane and other low molecular weight polyalkylsiloxanes, such as 0.5 to 1.5 cSt DOWSIL^{™} 200 Fluids and DOWSIL^{™} OS FLUIDS, which are commercially available from Dow Silicones Corporation of Midland, Michigan, U.S.A.

Alternatively, starting material e) may comprise an organic solvent. The organic solvent can be an aromatic hydrocarbon such as benzene, toluene, or xylene; an aliphatic hydrocarbon such as pentane, heptane, hexane, or octane; mineral spirits; naphtha; or a combination thereof.

The amount of solvent will depend on various factors including the type of solvent selected and the amount and type of other starting materials selected for the process described herein. However, the amount of solvent may be 0% to 95%, based on combined weights of starting materials *a*)*, b*)*, c*)*, d*) and *e*)*.* The solvent may be added during step *1*) and/or step 2), for example, to aid mixing and delivery of one or more starting materials. The process may optionally further comprise removing all or a portion of the solvent after step *2*).

Alternatively, the promoter described above may be synthesized, for example, by a process comprising using, as starting material a) a compound of formula M-O-CH₂-CH=CH₂; where M is selected from the group consisting of Li, Na, K, Rb, and Cs in a 1:1 ratio with starting material *d*) the SiH functional halosilane described above. Alternatively, the hydrocarbyloxy-functional arylsilane described above may be synthesized, for example, by a process comprising using, as starting material a) a compound of formula M'-(O-CH₂-CH=CH₂)₂; where M' = Mg, Ca, Sr, Ba which would give the corresponding metal halide salt.

The promoter is used in an amount sufficient to provide a platinum to promoter ratio ≥ 1:3; alternatively ≥ 1:5; and alternatively ≥ 1:8 or greater. However, the amount of promoter in the reaction mixture should be less than 5% of the total mass of reagents, catalysts, solvents, and promoters. Examples of promoters (and acronyms for promoters that will be discussed in Examples) are given in Table 1, below.

**Table 1 - Promoters and their corresponding acronyms.**

| Promoter | Acronym |
|---|---|
| Allyloxy-dimethylsilane | AMM |
| Allyloxy-diphenylsilane | APP |
| Allyloxy-bis(2,4,6-trimethylphenyl)silane | AEE |
| Allyloxy-methyl-(2,4,6-triisopropylphenyl)silane | ATM |
| (1-methyl)allyloxy-dimethylsilane | MIAMM |
| (1,1-dimethyl)allyloxy-dimethylsilane | M2AMM |
| (1-methyl)allyloxy-diphenylsilane | M1APP |
| (1,1-dimethyl)allyloxy-diphenylsilane | M2APP |
| Propargyloxy-dimethylsilane | PMM |
| (1-methyl-2-propyn-1-yl)oxy-diphenylsilane | M1PPP |
| Acetoxydimethylsilane | AcMM |

### Starting Material d) SiH- Terminated Siloxane Oligomer

Starting material d) in the process for making the cyclic siloxazane is an SiH-terminated siloxane oligomer. The oligomer may have formula 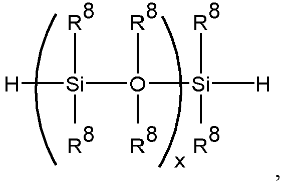 where each R⁸ is an independently selected monovalent hydrocarbon group of 1 to 18 carbon atoms and subscript x is 1 or 2. Each R⁸ may be an alkyl group or an aryl group. Suitable alkyl groups for R⁸ are exemplified by those described above for R⁹. Suitable aryl groups for R⁸ are exemplified by cyclopentadienyl, phenyl, tolyl, xylyl, anthracenyl, benzyl, 1-phenylethyl, 2-phenylethyl, and naphthyl. Monocyclic aryl groups may have 5 to 9 carbon atoms, alternatively 6 to 7 carbon atoms, and alternatively 5 to 6 carbon atoms. Polycyclic aryl groups may have 10 to 17 carbon atoms, alternatively 10 to 14 carbon atoms, and alternatively 12 to 14 carbon atoms. Alternatively, the aryl group for R⁸ may be phenyl. Alternatively, each R⁸ may be an alkyl group, alternatively methyl. Alternatively, the SiH-terminated siloxane oligomer may be selected from the group consisting of 1,1,3,3-tetramethyldisiloxane and 1,1,3,3,5,5-hexamethyltrisiloxane, which are available from Dow Silicones Corporation of Midland, MI, USA and Gelest, Inc. of Morrisville, PA, USA, respectively. The amounts of starting materials a) and d) are such that the allyl-functional amine to oligomer ratio may range from 5:1 to 1:2, alternatively 2: 1 to 1:1.2, and alternatively 1.2:1 to 1:1.1.

### Starting Material e) Solvent

Starting material e) in the process for preparing the cyclic siloxazane is a solvent that may optionally be added during and/or after step 1) of the process. Suitable solvents include, polyalkylsiloxanes, aromatic hydrocarbons, aliphatic hydrocarbons, glycol dialkyl ethers, dialkyl ethers, alkyl-polyglycol ethers, cyclic alkyl ethers, tetrahydrofuran, mineral spirits, naphtha, or a combination thereof. Polyalkylsiloxanes with suitable vapor pressures may be used as the solvent, and these include hexamethyldisiloxane, octamethyltrisiloxane, and other low molecular weight polyalkylsiloxanes, such as 0.5 to 1.5 cSt DOWSIL^{™} 200 Fluids and DOWSIL^{™} OS FLUIDS, which are commercially available from Dow Silicones Corporation of Midland, Michigan, U.S.A.

Alternatively, starting material e) may comprise an organic solvent. The organic solvent can be an aromatic hydrocarbon such as benzene, toluene, or xylene; an aliphatic hydrocarbon such as heptane, hexane, or octane; tetraglyme, or ethylene glycol n-butyl ether, di-n-butyl ether, tetrahydrofuran; mineral spirits; naphtha; or a combination thereof.

The amount of solvent will depend on various factors including the type of solvent selected and the amount and type of other starting materials selected for use in the process for making the cyclic siloxazane described above. However, the amount of solvent may be 0% to 50%, based on combined weights of starting materials a), b), c), d) and e). The solvent may be added during step 1) and/or step 2), for example, to aid mixing and delivery of one or more starting materials.

### Additional Detail about the Process Steps

Step 1) of the process described herein comprises combining starting materials comprising a) the allyl-functional amine, b) the platinum catalyst capable of catalyzing hydrosilylation reaction, optionally c) the hydrosilylation reaction promoter and optionally e) the solvent, as described above. Combining in step 1) may be performed by mixing the starting materials a), and b), and, when present, c) to form a reaction mixture, and heating the reaction mixture to a temperature up to 150°C, alternatively up to 120°C, alternatively up to 110°C, alternatively up to 95°C, and alternatively 50°C to 150°C.

Alternatively, when starting material c) is used, starting material b), the platinum catalyst, and starting material c), the hydrosilylation reaction promoter, may be combined before combining starting material a), the allyl-functional amine in step 1). For example, starting material b) and starting material c) may be combined by mixing, optionally in the presence of e) the solvent, under ambient conditions (RT and ambient pressure) for at least 1 day, alternatively at least 1 week, alternatively 2 weeks, alternatively 1 month, alternatively at least 4 h, and alternatively 4 h to 4 months, before combining with starting material a) in step 1). When starting material c) contains a carbon-carbon triple bond, it is combined with starting material b) the platinum catalyst before combining the resulting mixture with either starting material a) the allyl-functional amine or d) a SiH-terminated siloxane oligomer. The mixture prepared by combining starting materials b) and c) may be aged for at least 1 week at room temperature, alternatively 2 weeks, alternatively 1 month before combining with starting material a) or starting material d). Alternatively, if starting materials b) and c) are mixed at elevated temperature, e.g., > 30 °C to 90 °C, the aging time may be reduced.

In step 2) of the process for making the cyclic siloxazane, step 2) may be performed at a temperature of 20 °C to 200 °C, alternatively 50 °C to 150 °C, alternatively 70 °C to 110 °C and alternatively 70 °C to < 110 °C. Without wishing to be bound by theory, it is thought that adding d) the SiH-terminated siloxane oligomer intermittently improves safety of the process and yield of the cyclic siloxazane product described herein. By controlling temperature and intermittently (rather than continuously) adding d) the SiH-terminated siloxane oligomer, potential for uncontrolled exothermic reaction may be minimized. For example, step 2) may comprise
i) feeding to the reaction mixture a first aliquot of d) the SiH-terminated siloxane oligomer sufficient to provide a first SiH concentration of 100 ppm to 1000 ppm, based on weight of the reaction mixture;
ii) stopping feeding d) the SiH-terminated siloxane oligomer until a second SiH concentration less than the first SiH concentration is measured;
iii) feeding to the reaction mixture a second aliquot of d) the SiH-terminated siloxane oligomer sufficient to provide a third SiH concentration in the reaction mixture which is higher than the second concentration, where the third SiH concentration is 100 ppm to 1000 ppm, based on weight of the reaction mixture; and
iv) steps ii) and iii) are repeated one or more times until adding d) the SiH-terminated siloxane oligomer is complete; thereby preparing a reaction product comprising the cyclic siloxazane and a by-product comprising hydrogen (H₂).

In the process described above, feeding the first aliquot in step i) may be performed by measuring SiH concentration in the reaction mixture, for example, by using an in-situ measuring technique such as Raman spectroscopy or FTIR. Alternatively, feeding the first aliquot in step i) may be performed over 2 minutes to 30 minutes, alternatively 10 minutes to 20 minutes, depending on the size of the reactor used. Alternatively, the first aliquot may be > 0 to 40% of the total amount of d) the SiH-terminated siloxane oligomer to be added. Step ii) may be performed for 1 to 20 hours. The exact time depends on various factors including the temperature and the desired reduction in the concentration of unreacted SiH. Step iii) may be performed as described above for step i). Steps ii) and iii) may then be repeated until all of d) the SiH-terminated polyorganosiloxane oligomer has been added. Alternatively, in step i) (and/or step iii)), d) the SiH-terminated polyorganosiloxane oligomer may be fed until SiH concentration in the reaction mixture is measured at 100 ppm to 1000 ppm, alternatively 200 ppm to 500 ppm, and alternatively 250 ppm to 350 ppm. Step ii) may comprise shutting off the feed of d) the SiH-terminated polyorganosiloxane oligomer until SiH concentration drops to < 100 ppm, alternatively 100 ppm to 150 ppm, provided that SiH concentration in step ii) is lower than SiH concentration in step i) and step iii).

The process further may optionally further comprise step 3): removing at least a portion of the hydrogen (H₂) during step 2). Removing hydrogen may be performed by, for example, purging the reaction mixture or the headspace of the reaction apparatus used for step 2) with an inert gas, such as nitrogen. Without wishing to be bound by theory, it is thought that by-product hydrogen can build up to a concentration that may deactivate the catalyst as the reaction progresses. Therefore, without wishing to be bound by theory, it is thought that removing hydrogen, e.g., by purging with nitrogen, can prevent or minimize catalyst deactivation.

The process may optionally further comprise: 4) heating the reaction mixture after step 2). Heating may be performed at a temperature, for example of 110 °C to 150 °C for 1 to 6 hours, alternatively 2 to 4 hours. Without wishing to be bound by theory, it is thought that step 4) will allow for consumption of all or substantially all unreacted SiH. Step 4) may be performed during and/or after step 3).

The process may optionally further comprise step 5) purifying the cyclic siloxazane after steps 2) and 3), and step 4), when present. For example, the process described above produces a reaction product comprising the cyclic siloxazane, an unreacted starting material, and when used, solvent. Step 5) may be performed by stripping and/or distillation, optionally under vacuum, e.g., by heating up to 120°C.

Alternatively, step 5) may comprise a reactive distillation, which may be performed in a batch distillation apparatus comprising a distillation column having a top and a bottom, a reboiler coupled to the bottom of the column, and a reflux condenser coupled to the top of the column. Step 5) comprises i) combining a redistribution catalyst and the reaction product prepared as described above in the distillation apparatus. For example, the redistribution catalyst and reaction product may be combined in the reboiler of the batch distillation apparatus.

The redistribution catalyst may be a Bronsted acid or Lewis acid. For example, mineral acids such as hydrochloric acid, acidic salts such as ammonium acid salts such as ammonium sulfate, ammonium triflate, or an alkyl ammonium halide; organic acids such as p-toluenesulfonic acids; and Lewis acids such as methylchlorosilanes may be used. Alternatively, ammonium sulfate may be used as the redistribution catalyst. The amount of redistribution catalyst depends on various factors including the specific catalyst selected, however, the amount may be 100 ppm to 5,000 ppm, alternatively 400 ppm to 5,000 ppm, based on weight of the reaction product to be distilled.

The resulting catalyzed reaction mixture may then be heated to boiling in the reboiler. The column may be put on total reflux until the overheads is free (or substantially free) of the cyclic siloxazane. The distillation column may have at least 5 theoretical trays, alternatively at least 10, and alternatively at least 15. The maximum number of trays is not critical and may be selected for practicality, however, the number of trays in the column may be up to 100.

In step ii) of the reactive distillation in step 5), the distillation can be run under conventional methods to remove low boilers comprising unreacted a) allyl-functional amine and, if present, d) SiH-terminated siloxane oligomer and/or solvent as an overheads cut. Reflux ratio during this step may be, for example, 5 to 200, alternatively 20 to 200, alternatively 10 to 100, and alternatively 15 to 50. The bulk of the low boilers can be removed as an overheads cut in this step ii). For example, when a) is allyl amine and b) is 1,1,3,3-tetramethyldisiloxane, the disparate boiling point of allylamine (~52 °C) and the product 1,1,3,3-tetramethyl-2-oxa-7-aza-1,3-disilacycloheptane (~180 °C) are relatively easy to separate, hence a low reflux ratio can be utilized at this early stage of distillation.

When the cyclic siloxazane starts to concentrate in the overheads, such as the vapor temperature being > 5 °C above solvent boiling point, the reflux may be increased to a higher rate (e.g., 20 to 200, alternatively 30 - 100, and alternatively 30 - 80) until the overheads is substantially free of solvent, such as condensate temperature 10°C < product cyclic siloxazane boiling point. At this point, the reboiler temperature may drop as the rearrangement starts to happen more substantially, depending on heat input and boilup rate.

In step iii) of the reactive distillation in step 5), the reflux ratio used is relatively high (which may be higher than reflux ratio used in step ii)) and the reactive distillation is continued for a period of time to reactively distill out trace allyl-functional amine. The reflux ratio may be 40 to 200, alternatively 50 to 200, and alternatively 60 to 200. Without wishing to be bound by theory, it is thought that bound allyl-functional amine is redistributed to free allyl-functional amine via reaction in the reboiler, and the resulting free allyl-functional amine moves up the column where there is no catalyst, thereby preventing further rearrangement, therefore, the free allyl-functional amine is distilled and concentrated in the column overheads while the slow takeoff due to the high reflux ratio selected removes the allyl-functional amine as it forms without removing much product cyclic siloxazane with it. The process is held at this high reflux ratio for a period of time sufficient to allow allyl-functional amine to be removed to levels < 30 ppm, alternatively < 10 ppm, and alternatively < 1 ppm in the cyclic siloxazane. This period of time may be 1 or more hours, alternatively 2 to 8 hours, alternatively 3 to 6 hours, and alternatively 4 to 6 hours. Without wishing to be bound by theory, it is thought that this long period of time at high reflux ratio in step iii) allows redistributable allyl-functional amines to distill overhead with only minimal cyclic siloxazane losses.

Thereafter, step 5) may further comprise iv) collecting the (purified) cyclic siloxazane. This may be performed by continuing the distillation and collecting the cyclic siloxazane as an overheads cut. In this step iv), the reflux ratio may be 1 to 10, alternatively 1 to 5. Step 5) may provide the benefit of a high yield and purity of the desired cyclic siloxazane.

The process may optionally further comprise one or more additional steps, as follows. After the distillation is completed and the cyclic siloxazane product is recovered, the light distillation cuts comprising a) allyl-functional amine and solvent, if any, may be recycled to the next batch to improve overall yield. The first allyl-functional amine/solvent rich cut from step ii) of the distillation in step 5) can be recycled in step 1) of the process described herein. Additionally, the mid-cut lights from steps ii) and iii) in step 5) contain cyclic siloxazane product. These mid-cut lights can be recycled into the next batch after step 4) and before and/or during step 5) to optimize recovery of the cyclic siloxazane product.

### Cyclic Siloxazane

The process described above produces a cyclic siloxazane. The cyclic siloxazane has a general formula selected from the group consisting of 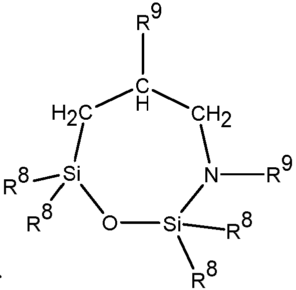 (when subscript x = 0) and 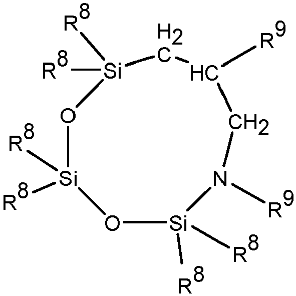 (when subscript x = 1), where R⁸ and R⁹ are as described above.

For example, when the SiH-terminated siloxane oligomer is 1,1,3,3-tetramethyldisiloxane and the allyl-functional amine is allyl amine (each R⁸ is methyl and each R⁹ is hydrogen) then the cyclic siloxazane has formula: 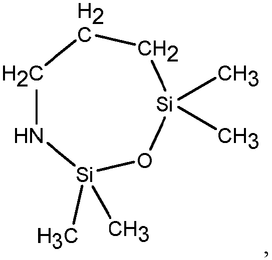 which can be abbreviated -SiMe₂OSiMe₂C₃H₆NH- (i.e., 1,1,3,3,-tetramethyl-2-oxa-7-aza-1,3-disilacycloheptane); and when the SiH-terminated siloxane oligomer is 1,1,3,3,5,5-hexamethyltrisiloxane, and the allyl-functional amine is allyl amine (each R⁸ is methyl and each R⁹ is hydrogen) then the cyclic siloxazane has formula: 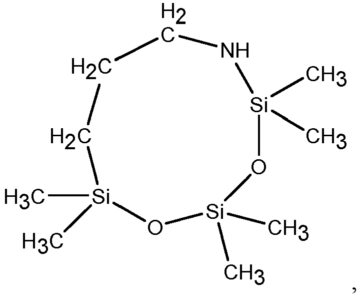 which can be abbreviated - SiMe₂OSiMe₂OSiMe₂C₃H₆NH- (i.e., 1,1,3,3,5,5-hexamethyl-2,4-di-oxa-9-aza-1,3,5-trisilacyclononane).

Alternatively, when the SiH-terminated siloxane oligomer is 1,1,3,3-tetramethyldisiloxane and the allyl-functional amine is N-allyl-N,N-dimethylamine, the cyclic siloxazane has formula: 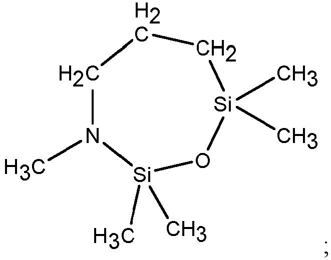 and when the SiH-terminated siloxane oligomer is 1,1,3,3,5,5-hexamethyltrisiloxane, and the allyl-functional amine is N-allyl-N,N-dimethylamine, the cyclic siloxazane has formula

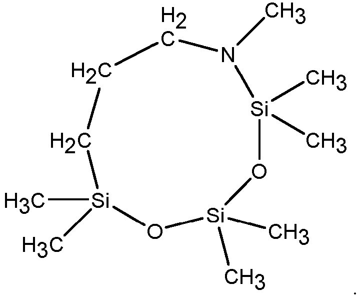

Alternatively, when the SiH-terminated siloxane oligomer is 1,1,3,3-tetramethyldisiloxane and the allyl-functional amine is 2-methyl-allylamine, then the cyclic siloxazane has formula: 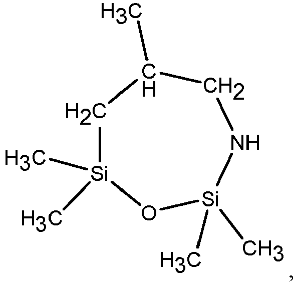 which can be abbreviated, - SiMe₂OSiMe₂CH₂CH(CH₃)CH₂NH- (i.e., 1,1,3,3,5-pentamethyl-2-oxa-7-aza-1,3,5-disilacycloheptane). And, when the SiH-terminated siloxane oligomer is 1,1,3,3,5,5-hexamethyltrisiloxane and the allyl-functional amine is 2-methyl-allylamine, then the cyclic polysiloxazane has formula 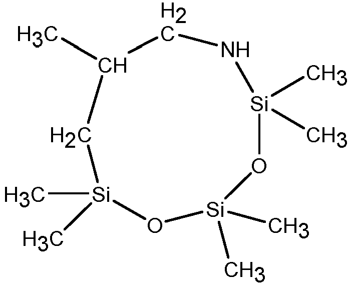 i.e., 1,1,3,3,5,5,7-heptamethyl-2,3-di-oxa-9-aza-1,3,5-trisilacyclononane. The cyclic siloxazanes prepared by the process described above are useful for preparing amino-functional polyorganosiloxanes.

Without wishing to be bound by theory, it is thought that the process described herein may produce a cyclic siloxazane with a beneficial purity profile. For example, the cyclic siloxazane may have an SiH content < 100 ppm, an unsaturated olefin content < 100 ppm, and/or an allyl-functional amine content < 50 ppm, wherein said contents were measured by GC-FID, GC-mass spec, ¹H NMR, ¹³C NMR and ²⁹Si NMR (impurities undetectable with a conservative instrument Limit of Detection of 50 ppm), as described in the examples, below. Furthermore, it is thought that this purity profile is beneficial for forming amino-functional polyorganosiloxanes suitable for use in personal care applications. Allyl-functional amines and SiH containing components are generally undesirable in personal care compositions, such as hair care compositions. Therefore, the cyclic siloxazane described above is useful for capping silanol-functional polyorganosiloxanes, such as silanol terminated polydimethylsiloxanes, thereby preparing amino-functional polyorganosiloxanes suitable for use in personal care compositions. Furthermore, the inventors surprisingly found that during the synthesis of cyclic -SiMe₂OSiMe₂C₃H₆NH-, a new intermediate formed. The intermediate had formula H₂N(C₃H₆)SiMe₂OSiMe₂NH-CH₂CH=CH₂.

### Part II. Preparing An Amino-Functional Polyorganosiloxane

### A. Process for preparing an amino-functional polyorganosiloxane using the cyclic siloxazane

A process for preparing an amino-functional organosilicon compound (e.g., amino-functional silane and/or amino-functional polyorganosiloxane) comprises:
1) combining starting materials comprising:
   A) the cyclic siloxazane prepared as described above, and
   D) a silanol-functional organosilicon compound, which may be selected from the group consisting of D-I) a silanol-functional silane, D-II) a silanol-functional polyorganosiloxane or both D-I) and D-II; thereby preparing a reaction product comprising the amino-functional organosilicon compound; and
optionally 2) recovering the amino-functional organosilicon compound.

### Starting Material D-I) Silanol-Functional Silane

The silanol-functional silane may have formula HOSiR²¹R²²R²³, where R²¹, R²², and R²³ are each independently selected monovalent hydrocarbon groups of 1 to 18 carbon atoms, as described and exemplified above for R⁸. Alternatively, R²¹, R²², and R²³ may each be independently an alkyl group of 1 to 15 carbon atoms, alternatively 1 to 12 carbon atoms, and alternatively 1 to 6 carbon atoms. Alternatively, R²¹, R²², and R²³ may each be independently an methyl, ethyl, propyl (e.g., iso-propyl and/or n-propyl), butyl (e.g., isobutyl, n-butyl, tert-butyl, and/or sec-butyl), pentyl (e.g., isopentyl, neopentyl, and/or tert-pentyl), hexyl, heptyl, octyl, nonyl, and decyl, as well as branched saturated monovalent hydrocarbyl groups of 6 or more carbon atoms including cycloalkyl groups such as cyclopentyl and cyclohexyl. Alternatively, each alkyl group for R²¹, R²², and R²³ may be methyl, ethyl, propyl, or butyl; alternatively ethyl or propyl. Silanol-functional silanes are known in the art and are commercially available. For example, triethylsilanol and triisopropylsilanol are commercially available from Millipore Sigma of St. Louis, Missouri, USA.

### Starting Material D-II) Silanol-Functional Polyorganosiloxane

Starting material D-II) in the process for preparing an amino-functional polyorganosiloxane comprises a silanol-functional polyorganosiloxane. The silanol-functional polyorganosiloxane has at least one silicon-bonded hydroxyl (silanol) group per molecule. The silanol-functional polyorganosiloxane may be linear, branched, partly branched, cyclic, resinous (i.e., have a three-dimensional network), or may comprise a combination of different structures. For example, the silanol-functional polyorganosiloxane may comprise any combination of M, D, T and/or Q units, so long as the silanol-functional polyorganosiloxane includes at least one silicon-bonded hydroxyl group. These siloxy units can be combined in various manners to form cyclic, linear, branched and/or resinous (three-dimensional networked) structures. Alternatively, the silanol-functional polyorganosiloxane may be a silanol-functional polydiorganosiloxane. The silanol-functional polyorganosiloxane may have silanol groups at terminal positions, at pendant positions, or both terminal and pendant positions.

The silanol groups may be present in any M, D, and/or T unit present in the silanol-functional polyorganosiloxane and may be bonded to the same silicon atom (in the case of M and/or D siloxy units). The silanol-functional polyorganosiloxane may comprise, for example, as M units: (R⁸₃SiO_{1/2}), (R⁸₂(OH)SiO_{1/2}), (R⁸(OH)₂SiO_{1/2}), and/or ((OH)₃SiO_{1/2}), where R⁸ is as described above. The silanol-functional polyorganosiloxane may comprise, for example, as D units: (R⁸₂SiO_{2/2}), (R⁸(OH)SiO_{2/2}), and/or ((OH)₂SiO_{2/2}). The silanol-functional polyorganosiloxane may comprise, for example, as T units: (R⁸SiO_{3/2}) and/or ((OH)SiO_{3/2}). Such siloxy units may be combined in any manner, optionally along with Q units, to give a silanol-functional polyorganosiloxane having at least one silicon-bonded OH group per molecule.

The silanol-functional polyorganosiloxane is branched or resinous when the D-II) silanol-functional polyorganosiloxane includes T units and/or Q units. When the silanol-functional polyorganosiloxane is branched or resinous, the silanol-functional polyorganosiloxane is typically a copolymer including T units and/or Q units in combination with M units and/or D units. For example, the silanol-functional polyorganosiloxane can be a DT resin, an MT resin, an MDT resin, a DTQ resin, an MTQ resin, an MDTQ resin, a DQ resin, an MQ resin, a DTQ resin, an MTQ resin, or an MDQ resin. Alternatively, the silanol-functional polyorganosiloxane may be linear, in which case the silanol-functional polyorganosiloxane is a silanol-functional polydiorganosiloxane comprising D units in combination with M units.

The silanol-functional polyorganosiloxane for starting material D-II) may be a silanol-functional polydiorganosiloxane. The silanol-functional polydiorganosiloxane may comprise unit formula (D1): (R⁸₃SiO_{1/2})ₑ(R⁸₂SiO_{2/2})_{f}(R⁸(OH)SiO_{2/2})_{g}(R⁸₂(OH)SiO_{1/2})ₕ, where R⁸ is as described above; and the subscripts have values such that: 2 ≥ e ≥ 0, 4000 ≥ f ≥ 0, 4000 ≥ g ≥ 0, and 2 ≥ h ≥ 0, with the provisos that a quantity (e + h) = 2, a quantity (g + h) ≥ 2, and a quantity 4 ≤ (e + f + g + h) ≤ 8000. Alternatively, 4 ≤ (e + f + g + h) ≤ 4000. Alternatively, 10 ≤ (e + f + g + h) ≤ 2,000. Alternatively, subscripts e to h may have values sufficient to provide the silanol functional polydiorganosiloxane with a viscosity of 8 mPa·s to 100,000,000 mPa·s; alternatively, 8 mPa·s to 40,000,000 mPa·s, 70 mPa·s to less than 1,000,000 mPa·s, alternatively 70 mPa·s to 500,000 mPa·s, alternatively 10 mPa·s to 150,000 mPa·s, and alternatively, 70 mPa·s to 16,000 mPa·s measured at 25°C. Alternatively, each R⁸ may be selected from alkyl and aryl. Alternatively, each R⁸ may be selected from methyl and phenyl. Alternatively, at least 80% of all R⁸ groups are methyl.

Alternatively, the silanol-functional polydiorganosiloxane may be a silanol-terminated polydiorganosiloxane. The silanol-terminated polydiorganosiloxane may have formula (D2): 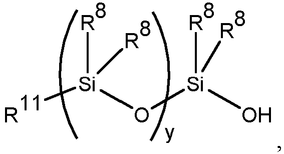 where R¹¹ is selected from the group consisting of OH and R⁸ and subscript y has a value sufficient to provide the silanol functional polydiorganosiloxane with a viscosity of 8 mPa·s to 100,000,000 mPa·s; alternatively, 8 mPa·s to 40,000,000 mPa·s, 70 mPa·s to less than 1,000,000 mPa·s, alternatively 70 mPa·s to 500,000 mPa·s; alternatively 70 mPa·s to 500,000 mPa·s, alternatively 10 mPa·s to 150,000 mPa·s, and alternatively, 70 mPa·s to 16,000 mPa·s measured at 25°C (alternatively, y may be 2 to 4000; and alternatively y may be 2 to 2000). Silanol-terminated polydiorganosiloxanes suitable for use as starting material A) may be prepared by methods known in the art, such as hydrolysis and condensation of the corresponding organohalosilanes or equilibration of cyclic polydiorganosiloxanes.

Alternatively, the silanol-functional polyorganosiloxane may be a silanol-functional polysiloxane resin. The polysiloxane resin may have unit formula (D3): (R²⁰₃SiO_{1/2})_{A}(R²⁰₂SiO_{2/2})_{B}(R²⁰SiO_{3/2})_{C}(SiO_{4/2})_{D}, where subscripts A, B, C, and D are mole fractions that have values such that 0 ≤ A ≤ 0.6, 0 ≤ B ≤ 0.5, 0 ≤ C ≤ 1, 0 ≤ D ≤ 1, with the provisos that a quantity (C + D) > 0. In the polysiloxane resin, each R²⁰ is independently a monovalent hydrocarbon group as described above for R⁸ or a hydrolysable group (*e.g.,* a hydroxyl group or an alkoxy group). At least one R²⁰ per molecule is a hydrolysable group. Suitable hydrolysable groups include hydroxyl; alkoxy such as methoxy and ethoxy; alkyloxy such as isopropenyloxy; amidoxy such as acetamidoxy; and aminoxy such as N,N-dimethylaminoxy.

Alternatively, the polysiloxane resin may be (D4) a polyorganosilicate resin or (D5) a silsesquioxane resin. The polyorganosilicate resin comprises monofunctional units (M units) of formula R²⁰₃SiO_{1/2} and tetrafunctional silicate units (Q units) of formula SiO_{4/2}, where R²⁰ is as described above. Alternatively, in the polyorganosilicate resin, the monovalent hydrocarbon group for R²⁰ may be independently selected from the group consisting of alkyl, alkenyl and aryl, such as those described above for R⁸. Alternatively, the monovalent hydrocarbon group for R²⁰ may be selected from alkyl and aryl. Alternatively, the monovalent hydrocarbon group for R²⁰ may be selected from methyl and phenyl. Alternatively, at least one-third, alternatively at least two thirds of the R²⁰ groups are methyl groups. Alternatively, the M units in the polyorganosilicate resin may be exemplified by (Me₃SiO_{1/2}) and (Me₂PhSiO_{1/2}). The polyorganosilicate resin is soluble in solvents, exemplified by liquid hydrocarbons, such as benzene, toluene, xylene, and heptane, or in liquid organosilicon compounds such as low viscosity linear and cyclic polydiorganosiloxanes (such as the solvents described above for starting material e) in the process for preparing the cyclic siloxazane.

When prepared, the polyorganosilicate resin comprises the M and Q units described above, and the polyorganosiloxane further comprises units with silicon bonded hydroxyl groups and may comprise neopentamer of formula Si(OSiR²⁰₃)₄, where R²⁰ is as described above, *e.g.*, the neopentamer may be tetrakis(trimethylsiloxy)silane. ²⁹Si NMR spectroscopy (as described below) may be used to measure hydroxyl content and molar ratio of M and Q units, where said ratio is expressed as {M(resin)}/{Q(resin)}, excluding M and Q units from the neopentamer. M:Q ratio represents the molar ratio of the total number of triorganosiloxy groups (M units) of the resinous portion of the polyorganosilicate resin to the total number of silicate groups (Q units) in the resinous portion. M:Q ratio may be 0.5:1 to 1.5:1, alternatively 0.6:1 to 0.9:1.

The MQ silicone resin may contain 5.0% or less, alternatively 0.7 % or less, alternatively 0.3 % or less, of terminal units represented by the formula X"SiO_{3/2}, where X" represents a hydrolyzable group such as hydroxyl; alkoxy such as methoxy and ethoxy; alkenyloxy such as isopropenyloxy; amidoxy such as acetamidoxy; and aminoxy such as N,N-dimethylaminoxy. The concentration of silanol groups present in the silicone resin can be determined using ¹H NMR and/or ²⁹Si NMR.

The Mn to achieve the desired flow characteristics of the MQ silicone resin can depend at least in part on the Mn of the silicone resin and the type of hydrocarbon group, represented by R²⁰, that are present in this starting material. The Mn of the MQ silicone resin is typically greater than 1,000 Da, alternatively 1,000 Da to 15,000 Da, alternatively >3,000 Da to 8,000 Da, and alternatively 4,500 to 7,500 Da.

The MQ silicone resin can be prepared by any suitable method. Silicone resins of this type have reportedly been prepared by cohydrolysis of the corresponding silanes or by silica hydrosol capping methods known in the art. Briefly stated, the method involves reacting a silica hydrosol under acidic conditions with a hydrolyzable triorganosilane such as trimethylchlorosilane, a siloxane such as hexamethyldisiloxane, or a combination thereof, and recovering a product comprising M and Q units (MQ resin). The resulting MQ resins may contain from 2 to 5 percent by weight of silicon-bonded hydroxyl groups.

The intermediates used to prepare the polyorganosilicate resin may be triorganosilanes and silanes with four hydrolyzable substituents or alkali metal silicates. The triorganosilanes may have formula R⁸₃SiX¹, where R⁸ is as described above and X¹ represents a hydrolyzable substituent such as that described above for X". Silanes with four hydrolyzable substituents may have formula SiX²₄, where each X² is halogen, alkoxy or hydroxyl. Suitable alkali metal silicates include sodium silicate.

The polyorganosilicate resin prepared as described above typically contain silicon bonded hydroxyl groups, *i.e.,* of formulae, HOSi_{3/2}, (HO)₂Si_{2/2}, (HO)₃Si_{1/2}, and/or HOR²⁰₂SiO_{1/2}. The polyorganosilicate resin may comprise up to 5% of silicon bonded hydroxyl groups, as measured by FTIR spectroscopy. For certain applications, it may be desirable for the amount of silicon bonded hydroxyl groups to be below 0.7%, alternatively below 0.3%, alternatively less than 1%, and alternatively 0.3% to 0.8%. Silicon bonded hydroxyl groups formed during preparation of the polyorganosilicate resin can be converted to trihydrocarbon siloxane groups or to a different hydrolyzable group by reacting the silicone resin with a silane, disiloxane, or disilazane containing the appropriate terminal group. Silanes containing hydrolyzable groups may be added in molar excess of the quantity required to react with the silicon bonded hydroxyl groups on the polyorganosilicate resin.

In one embodiment, starting material D) comprises (D6) a polyorganosilicate resin comprising unit formula (R²⁰₃SiO_{1/2})*_{c}*(R²⁰₂SiO_{2/2})*_{d}*(SiO_{4/2})*ₑ*, where subscripts *c*, *d,* and *e* are mole fractions that have values such that 0 < *c* < 0.6, 0 ≤ *d <* 0.5, 0.4 *< e* < 1; and R²⁰ is as described above, with the proviso that at least one R²⁰ per molecule is a hydrolyzable group in (D6). Alternatively, the hydrolyzable group for R²⁰ is selected from a hydroxyl group or an alkoxy group, such as methoxy or ethoxy, and alternatively the hydrolyzable group is a hydroxyl group.

Various suitable polyorganosilicate resins are commercially available from sources such as Dow Silicones Corporation of Midland, MI, U.S.A., Momentive Performance Materials of Albany, N.Y., U.S.A., and Bluestar Silicones USA Corp. of East Brunswick, N.J., U.S.A. For example, DOWSIL^{™} MQ-1600 Solid Resin, DOWSIL^{™} MQ-1601 Solid Resin, and DOWSIL^{™} 1250 Surfactant, Momentive SR-1000, and Wacker TMS-803, all of which are commercially available from Dow Silicones Corporation of Midland, Michigan, USA, are suitable for use in the methods described herein. Alternatively, a resin containing M, T, and Q units may be used, such as DOWSIL^{™} MQ-1640 Flake Resin, which is also commercially available from Dow Silicones Corporation. Such resins may be supplied in organic solvent.

Alternatively, the polysiloxane resin may comprise (D7) a silsesquioxane resin, *i.e.,* a resin comprising T units of formula (R²⁰SiO_{3/2}), where R²⁰ is as described above with the proviso that at least one R²⁰ per molecule is a hydrolyzable group in (D7). Silsesquioxane resins suitable for use herein are known in the art and are commercially available. For example, a methylmethoxysiloxane methylsilsesquioxane resin is commercially available as DOWSIL^{™} US-CF 2403 Resin from Dow Silicones Corporation of Midland, Michigan, U.S.A. Alternatively, the silsesquioxane resin may have phenylsilsesquioxane units, methylsilsesquioxane units, or a combination thereof. Such resins are known in the art and are commercially available as DOWSIL^{™} 200 Flake resins, also available from Dow Silicones Corporation. Alternatively, the silsesquioxane resin may further comprise D units of formulae (R⁸₂SiO_{2/2}) and/or (R⁸X"SiO_{2/2}) and T units of formulae (R⁸SiO_{3/2}) and/or (X"SiO_{3/2}), *i.e.,* a DT resin, where R⁸ and X" are described above. DT resins are known in the art and are commercially available, for example, methoxy functional DT resins include DOWSIL^{™} 3074 and DOWSIL^{™} 3037 resins; and silanol functional resins include DOWSIL^{™} 800 Series resins, which are also commercially available from Dow Silicones Corporation. Other suitable resins include DT resins containing methyl and phenyl groups.

Starting material D) may be one silanol-functional organosilicon compound or may comprise two or more silanol-functional organosilicon compounds differing in at least one of the following properties: structure, viscosity, average molecular weight, siloxane units, and sequence. Alternatively, starting material D) may comprise a mixture of two or more polyorganosilicate resins. Alternatively, starting material D) may comprise a mixture of two or more silanol-functional polyorganosiloxanes, such as a bis-hydroxyl-terminated polydiorganosiloxane and a polyorganosilicate resin. Alternatively, starting material D) may comprise a mixture of a silanol-functional silane and a silanol-functional polyorganosiloxane. Alternatively, starting material D) may comprise a mixture of two or more silsesquioxane resins.

The amount of starting materials depends on various factors including the species of starting material D) selected and the silanol content thereof. For example, a 1:1 to 1: 1.25 mole ratio of SiOH to cyclic siloxazane can be used when starting material D) comprises linear silanol-functional polydiorganosiloxanes. Alternatively, a 2% to 5% molar excess of cyclic siloxazane relative to silanol content of starting material D) may be used, alternatively up to a 20% molar excess silanol may be used. Addition of cyclic siloxazane substoichiometric to silanol content of starting material D-II) may give reaction product mixtures with residual silanol-functional polyorganosiloxane, terminal amino-functional polyorganosiloxane, and polyorganosiloxanes with both a silanol and organoamino-functional termination. For resinous starting materials D-II), on average 5% to 30% of residual silanol might not be consumed and a maximum of >99% can typically be capped.

Step 1) (combining starting materials comprising A) and D)) in the process for preparing the amino-functional organosilicon polyorganosiloxane described above may be performed by any convenient means, such as mixing, optionally with heating. Mixing and heating may be performed using any convenient means, such as loading the starting materials into a vessel such as an agitated, jacketed batch reactor or reactive distillation apparatus having a jacketed reboiler, which jackets can be heated and cooled by passing steam/water or heat transfer fluid through the jacket. The process may be performed at a temperature of at least 50°C, alternatively at least 85°C, and alternatively at least 90°C. Alternatively, heating in step 1) may be performed at 50°C to 150°C, alternatively 85°C to 150°C, and alternatively 90°C to 150°C. The process is performed for a time sufficient to form the amino-functional polyorganosiloxane.

In step 1), one of starting material A) and starting material D) may be added continuously or in increments into a vessel containing the other of starting material A) and starting material D). Such addition may be performed manually or using metering equipment.

The process described above may optionally further comprise one or more additional steps. The process may optionally further comprise step 3) adding one or more additional starting materials to the reaction mixture in step 1). Alternatively, step 3) may be performed during and/or after step 1) and before step 2). The additional starting material may be selected from the group consisting of E) an acid precatalyst, F) an aminoalkyl-functional alkoxysilane, G) an endblocker, H) a solvent, and a combination of two or more of E), F), G) and H).

### Starting Material E) Acid Precatalyst

Starting material E) in the process for preparing the amino-group-terminated polydiorganosiloxane comprises an acid precatalyst. The acid precatalyst may be a carboxylic acid. Without wishing to be bound by theory, it is thought that the carboxylic acid will react with the amino-functional group in the cyclic siloxazane (or, when present, the α-alkoxy-ω-amino-functional polysiloxane, as described below) to form a carboxylate salt catalyst. The carboxylic acid can be chosen from a wide range of carboxylic acids. The carboxylic acid can, for example, be an aliphatic carboxylic acid having 1 to 20 carbon atoms, alternatively 2 to 20 carbon atoms. For example, acetic acid, propionic acid, octanoic, decanoic or lauric acid are suitable for use herein. Alternatively, aliphatic carboxylic acids substituted by a hydrophilic group such as hydroxyl, for example lactic acid, can be used. Alternatively, carboxylic acids substituted by an electron-withdrawing moiety, for example halogen such as fluorine or chlorine or a hydroxyl group, may be used, and examples of such acids substituted by an electron-withdrawing moiety are lactic acid and fluoroalkanoic acids such as fluoroacetic acid or 4,4,4-trifluorobutanoic acid. Other suitable carboxylic acids include benzoic acid, citric acid, maleic acid, myristic acid, and salicylic acid. Alternatively, a combination of two or more of the above carboxylic acids may be used.

### F) Aminoalkyl-Functional Alkoxysilane

The process for preparing the amino-functional polyorganosiloxane may optionally further comprise: adding starting material F), an aminoalkyl-functional alkoxysilane. Without wishing to be bound by theory, it is thought that adding F) the amino-functional alkoxysilane will provide an amino-functional organosilicon product, which can be an amino-group-terminated polyorganosiloxane which further comprises pendant amino-functional groups.

Starting material F) contains an aminoalkyl group and an alkoxy group bonded to Si. The aminoalkyl group may have formula (F1): R¹³-(NH-A')_{q}-NH-A- wherein A and A' are each independently a linear or branched alkylene group having 1 to 6 carbon atoms and optionally containing an ether linkage; subscript q is 0 to 4; R¹³ is hydrogen, an alkyl group, or a hydroxyalkyl group having 1 to 4 carbon atoms. Alternatively, R¹³ may be hydrogen; q may be 0 or 1; and A and A'(if present) each contain 2 to 4 carbon atoms. Examples of suitable aminoalkyl groups include -(CH₂)₃NH₂, -(CH₂)₄NH₂, -(CH₂)₃NH(CH₂)₂NH₂, -CH₂CH(CH₃)CH₂NH(CH₂)₂NH₂, -(CH₂)₃NHCH₂CH₂NH(CH₂)₂NH₂, -CH₂CH(CH₃)CH₂NH₂, -CH₂CH(CH₃)CH₂NH(CH₂)₃NH₂, -(CH₂)₃NH(CH₂)₄NH₂, and -(CH₂)₃O(CH₂)₂NH₂. The alkoxy group bonded to Si can contain an unreactive substituent or linkage such as an ether linkage. The aminoalkyl-functional alkoxysilane may have formula (F2): 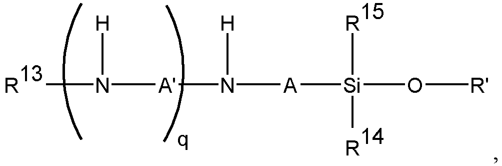 where A, A', R¹³, and subscript q are as defined above; R' is an alkyl group or an alkoxyalkyl group having 1 to 6 carbon atoms, for example, methyl, ethyl, butyl or methoxyethyl; and R¹⁴ and R¹⁵ are each independently a group -OR' or an optionally substituted alkyl or aryl group. Alternatively, for the preparation of linear polydiorganosiloxanes, the group R¹⁴ may be an alkyl group such as methyl and the group R¹⁵ may have the formula -OR', such as methoxy or ethoxy. Examples of aminoalkyl-functional alkoxysilanes suitable for starting material F) include F3) 3-aminopropylmethyl dimethoxysilane, F4) 3-aminopropylmethyl diethoxysilane, F5) aminoethyl-aminoisobutyl methyl dimethoxy silane, F6) aminoethyl-aminoisobutyl methyl diethoxysilane, F7) 3-aminopropyldimethyl ethoxysilane, F8) 3-aminopropyldimethyl methoxysilane, F9) 3-(2-aminoethylamino)propyl-dimethoxymethylsilane, F10) 3-(2-aminoethylamino)propyl-diethoxymethylsilane, F11) aminopropyl methyl dimethoxy silane, F12) aminopropyl methyl diethoxysilane, and F13) a combination of two or more of F3) to F12). In one embodiment, the aminoalkyl-functional alkoxysilane comprises a monoalkoxysilane, such as F7) 3-aminopropyldimethyl ethoxysilane or F9) 3-aminopropyldimethyl methoxysilane, and the amino-functional polydiorganosiloxane has amino-functional pendant groups therefrom.

### Starting Material G) Endblocker

The process for preparing the amino-functional organosilicon compound, such as the amino-functional polyorganosiloxane (prepared when starting material D-II) is used in the process described above) may optionally further comprise: adding starting material G), an endblocker. Without wishing to be bound by theory, it is thought that the endblocker may be used to cap some of the silanol groups on starting material D-II), for example, when an amino-functional polydiorganosiloxane to be prepared by the process described herein will have some trihydrocarbylsilyl-terminated (*e*.*g*., trialkyl-silyl terminated, such as trimethylsilyl-terminated) groups and some amino-functional groups. The endblocker is capable of reacting with a silanol group and generating an endblocking triorganosilyl unit where the triorganosilyl functionality is unreactive with the silanol groups of starting material A). Suitable endblockers are exemplified by (G1) a monoalkoxysilane, (G2) a silazane, or (G3) both (G1) and (G2).

The (G1) monoalkoxysilane may have formula (G4): R¹⁶₃SiOR¹⁷, where each R¹⁶ is independently a monovalent organic group unreactive with silanol functionality and each R⁵ is a monovalent hydrocarbon group of 1 to 6 carbon atoms. Alternatively, R¹⁷ may be an alkyl group of 1 to 6 carbon atoms, alternatively 1 to 4 carbon atoms, alternatively 1 to 2 carbon atoms, and alternatively R¹⁷ may be methyl. Each R¹⁶ may be a monovalent hydrocarbon group selected from alkyl, alkenyl, and aryl groups. Alternatively, each R¹⁶ may be an alkyl group of 1 to 6 carbon atoms, an alkenyl group of 2 to 6 carbon atoms or a phenyl group. Alternatively, each R¹⁶ may be an alkyl group of 1 to 6 carbon atoms, alternatively 1 to 4 carbon atoms, and alternatively each R¹⁶ may be methyl. Examples of monoalkoxysilanes for starting material (G1) include (G5) trimethylmethoxysilane and (G6) trimethylethoxysilane.

Suitable (G2) silazanes may have formula (G7): (R¹⁸R¹⁹₂Si)₂NH, where each R¹⁸ is independently selected from a monovalent hydrocarbon group (as described herein for R⁸) and a monovalent halogenated hydrocarbon group (such as a monovalent hydrocarbon group of R⁸ wherein at least one hydrogen has been replaced with a halogen atom, such as Cl or F), each R¹⁹ is an independently selected monovalent hydrocarbon group of 1 to 6 carbon atoms, as described above for R¹⁷. Each R¹⁸ may be an alkyl group, an alkenyl group, or a halogenated alkyl group. Suitable alkyl groups for R¹⁸ include methyl, ethyl, propyl, and butyl. Suitable alkenyl groups include vinyl and allyl. Suitable halogenated alkyl groups include trifluoropropyl. Examples of suitable silazanes for starting material (G2) include (G8) hexamethyldisilazane, (G9) sym-tetramethyldivinyldisilazane, and (G10) [(CF₃CH₂CH₂)(CH₃)₂Si]₂NH.

The endblocker is optional, and the exact amount depends on various factors including the desired structure and amine content of the amino-functional polyorganosiloxane to be formed. However, the endblocker may be added in an amount up to 5%, alternatively 0.1% to 5%, based on combined weights of all starting materials used in the process. When present, all or a portion of starting material G) may be added in step 1). Alternatively, a first portion of starting material G) may be added in step 1) and a second portion of starting material G) may be added in an additional step added to the process after step 1) and before step 2).

### Starting Material H) Solvent

The process for preparing the amino-functional organosilicon compound may optionally further comprise: adding starting material H), a solvent. The solvent may be as described above for starting material e) in the process for making the cyclic siloxazane. Without wishing to be bound by theory, it is thought that the solvent may be used to introduce one or more of the starting materials, such as starting material D-II) when a polysiloxane resin is selected therefor. The process may use 0% to 200% of solvent based on combined weights of all starting materials used in the process. Alternatively, 0% to 90% solvent (on the same basis) may be used. Whether a solvent is used depends on various factors including the selection of starting material D). For example, a solvent may be used when a silanol-functional polyorganosiloxane resin that is solid at RT is selected as starting material D). Alternatively, the process may be run neat when starting material D) is a silanol-functional silane and/or a silanol-functional polydiorganosiloxane that is a liquid at RT.

The process for preparing the amino-functional polyorganosiloxane may optionally further comprise one or more additional steps in addition to those described above. For example, the process may optionally further comprise: 4) removing residual acid (when E) the acid precatalyst is added) before and/or during step 2) recovering the amino-functional polyorganosiloxane from the reaction mixture. The amino-functional polyorganosiloxane may be recovered from the reaction mixture by any convenient means, such as stripping and/or distillation, optionally under vacuum. One or more of the process steps may be performed under an inert atmosphere, such as nitrogen.

The process for preparing the amino-functional polyorganosiloxane may optionally further comprise quenching unreacted cyclic siloxazane, unreacted silanol-functional polyorganosiloxane, or both. Quenching may be performed by adding a starting material selected from the group consisting of I) water, and B) an alcohol of formula R¹⁰OH, where R¹⁰ is an alkyl group of 1 to 8 carbon atoms. Quenching may be performed after step 1), alternatively, any time before step 2) in the process for preparing the amino-functional polyorganosiloxane.

### B. Process for Making Alkoxy-Functional Capping Agent

Alternatively, the cyclic siloxazane described above may be further reacted to prepare an α-alkoxy-ω-amino-functional polysiloxane useful as a capping agent, e.g., before combining the capping agent with D) the silanol-functional organosilicon compound, such as D-II) the silanol-functional polyorganosiloxane, described above. A process for preparing the α-alkoxy-ω-amino-functional polysiloxane comprises:
I) combining starting materials comprising
   A) the cyclic siloxazane prepared by the process described above, and
   B) an alcohol of formula R¹⁰OH, where R¹⁰ is an alkyl group of 1 to 8 carbon atoms; thereby preparing a reaction product comprising C) an α-alkoxy-ω-amino-functional polysiloxane of formula 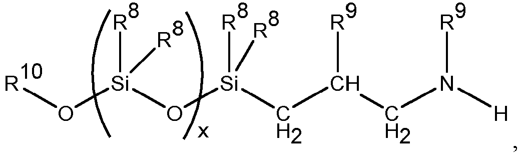 where each R⁸ R⁹, R¹⁰, and subscript x are as described above; and
optionally II) purifying the reaction product to recover C) the α-alkoxy-ω-amino-functional polysiloxane.

Alternatively, in the α-alkoxy-ω-amino-functional polysiloxane, each R⁸ may be an alkyl group such as methyl, and each R⁹ may be hydrogen. Starting material B) in this method, the alcohol, may be selected from the group consisting of methanol and ethanol.

The process described above produces a α-alkoxy-ω-primary amino-functional polysiloxane of formula: 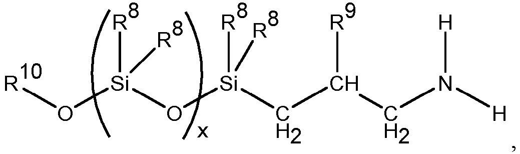 where each R⁸ , R⁹ , and R¹⁰, and subscript x are as described above. Alternatively, each R⁸ may be an independently selected alkyl group of 1 to 18 carbon atoms, alternatively methyl. Alternatively, each R⁹ may be hydrogen. Alternatively, each R¹⁰ may be methyl or ethyl.

### C. Alternative process for making the amino-functional polyorganosiloxane.

The α-alkoxy-ω-amino-functional polysiloxane described above is useful in an alternative process for preparing an amino-functional organosilicon compound, which comprises:
1) combining starting materials comprising
   the reaction product formed in step I) and/or C) the α-alkoxy-ω-amino-functional polysiloxane of formula 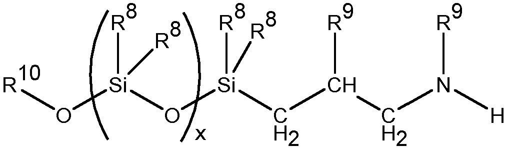 purified in step II) of the process described above; and
   D) a silanol-functional organosilicon compound (as described above); thereby preparing a reaction mixture;
optionally 2) heating the reaction mixture up to 150°C, alternatively up to 90°C, and alternatively 90°C to 150°C; and
3) adding E) an acid precatalyst to the reaction mixture. This process may optionally further comprise: 4) adding F) an aminoalkyl-functional alkoxysilane to the reaction mixture. Starting materials D), E), and F) and their amounts are as described above. Without wishing to be bound by theory, it is thought that adding starting material E) the acid precatalyst may be optional when the process is run at > 90°C, and adding precatalyst is performed when the process is run at 90°C or lower.

In the process for preparing the amino-functional organosilicon compound, mixing and heating may be performed using any convenient means, such as loading the starting materials into a vessel such as an agitated, jacketed batch reactor or reactive distillation apparatus having a jacketed reboiler, which jackets can be heated and cooled by passing steam/water or heat transfer fluid through the jacket. The starting materials and/or the reaction mixture may be kept at RT or heated up to 150°C, alternatively heated up to 90°C to facilitate the reaction. The process is performed for a time sufficient to form the amino-functional organosilicon compound.

In steps 1) and 2), one of starting material A) and starting material D) may be added continuously or in increments into a vessel containing the other of starting material A) and starting material D). Such addition may be performed manually or using metering equipment.

The process described above may optionally further comprise one or more additional steps. The process may optionally further comprise step 4) adding an additional starting material to the reaction mixture in step 1) and/or step 2). The additional starting material may be selected from the group consisting of F) an aminoalkyl-functional alkoxysilane, G) an endblocker, H) a solvent, and a combination two or more of F), G), and H). Alternatively, step 4) may be performed during and/or after step 1), before and/or after step 2), or before and/or during step 3). Starting materials D), E), F), G), and H) are as described above. The process for preparing the amino-functional organosilicon compound may optionally further comprise quenching unreacted α-alkoxy-ω-amino-functional polysiloxane, unreacted silanol-functional organosilicon compound, or both. Quenching may be performed by adding a starting material selected from the group consisting of I) water, and B) an alcohol of formula R¹⁰OH, where R¹⁰ is an alkyl group of 1 to 8 carbon atoms. Quenching may be performed after step 1), alternatively, any time before recovering the amino-functional polyorganosiloxane. The amino-functional polyorganosiloxane may be recovered from the reaction mixture by stripping and/or distillation, optionally under vacuum. One or more of the process steps may be performed under an inert atmosphere, such as nitrogen. For example, steps 1) and 2) described above may optionally further comprise flowing inert gas through the vessel headspace. Without wishing to be bound by theory, it is thought that flowing inert gas through the reactor headspace may help to remove odors and low-boiling impurities from the system.

### III. Amino-functional Polyorganosiloxane

The processes described above produce an amino-functional polyorganosiloxane. When a silanol-terminated polydiorganosiloxane is used as starting material D-II), the amino-functional polyorganosiloxane is an amino-group-terminated polydiorganosiloxane. When each R⁹ is hydrogen, then the amino-group-terminated polydiorganosiloxane is a primary amino-group-terminated polydiorganosiloxane of formula: 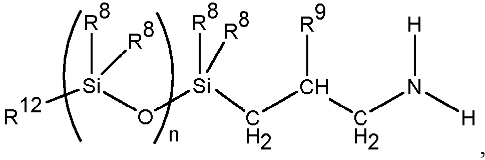 where R¹² is selected from the group consisting of OH, R⁸, and -CH₂CH(R⁹)CH₂NH₂ and subscript n = (x + y + 1). Alternatively, R¹² may be selected from the group consisting of OH, R⁸, and - CH₂CH₂CH₂NH₂

Alternatively, when a silanol-functional polysiloxane resin is used as starting material D), the amino-functional polyorganosiloxane is an amino-functional polyorganosiloxane resin. When each R⁹ is hydrogen, then the amino-functional polyorganosiloxane resin is a primary amino-functional polyorganosiloxane resin. The primary amino-functional polyorganosiloxane resin may comprise unit formula: [(H₂NCH₂CH₂CH)R⁸₂SiO_{1/2}]_{J}[(H₂NCH₂CH₂CH)R⁸SiO_{2/2}]_{K} [(H₂NCH₂CH₂CH)SiO_{3/2}]_{L}(R²⁰₃SiO_{1/2})_{G}(R²⁰₂SiO_{2/2})_{H}(R²⁰SiO_{3/2})_{F}(SiO_{4/2})_{D}, where R⁸ and R²⁰ are as described above, subscript D is as described above, subscript G ≤ A, subscript H ≤ B, subscript F ≤ C. Subscript G ≥ 0, subscript H ≥ 0, subscript F ≥ 0, subscript D ≥ 0. A quantity (J + K + L) > 1. A quantity (L + F + D) > 1. A quantity (J + K + L + G + H + F + D) has a value sufficient to give the resin a Mn of 1,000 g/mol to 12,000 g/mol.

### Personal Care Products

The amino-functional polyorganosiloxane (e.g., the amino-functional polydiorganosiloxane) described above may be formulated into personal care products. Generally, such products can be prepared at room temperature, if no materials which are solid at room temperature are present, using simple propeller mixers, Brookfield counter-rotating mixers, or homogenizing mixers. No special equipment or processing conditions are typically required. Depending on the type of form made, the method of preparation will be different, but such methods are known in the art.

The personal care products may be functional with respect to the portion of the body to which they are applied, cosmetic, therapeutic, or some combination thereof. Conventional examples of such products include, but are not limited to: antiperspirants and deodorants, skin care creams, skin care lotions, moisturizers, facial treatments such as acne or wrinkle removers, personal and facial cleansers, bath oils, perfumes, colognes, sachets, sunscreens, pre-shave and after-shave lotions, shaving soaps, and shaving lathers, hair shampoos, hair conditioners (either leave in or rinse off), hair colorants, hair relaxants, hair styling aids such as sprays, fixatives, mousses, and/or gels; permanents, depilatories, and cuticle coats, make-ups, color cosmetics, foundations, concealers, blushes, lipsticks, eyeliners, mascara, oil removers, color cosmetic removers, powders, medicament creams, pastes or sprays including dental hygienic, antibiotic, healing promotive, and/or nutritive, which may be preventative and/or therapeutic. In general the personal care products may be formulated with a carrier that permits application in any conventional form, including but not limited to liquids, rinses, lotions, creams, pastes, gels, foams, mousses, ointments, sprays, aerosols, soaps, sticks, soft solids, solid gels, and gels. What constitutes a suitable carrier would be apparent to one of ordinary skill in the art.

The amino-functional polyorganosiloxane can be used in a variety of personal, household, and healthcare applications. In particular, the amino-functional polydiorganosiloxane may be used in the personal care products disclosed in U.S. Patent 6,051,216 to Barr et al.; U.S. Patent 5,919,441 to Mendolia et al.; U.S. Patent 5,981,680 to Petroff et al.; U.S. Patent Application 2010/0098648 to Yu; and WO 2004/060101 to Yu; in sunscreen compositions as disclosed in U.S. Patent 6,916,464 to Hansenne et al.; in cosmetic compositions also containing film-forming resins, as disclosed in WO2003/105801 to Yu; in cosmetic compositions as disclosed in U.S. Patent Application 2003/0235553 to Lu, U.S. Patent Application 2003/0072730 to Tornilhac, U.S. Patent Application 2003/0170188 to Ferrari et al., EP 1,266,647 to Tornilhac, EP 1,266,648 to Ferrari, et al., EP1,266,653 to Ferrari et al., WO2003/105789 to Lu, WO2004/000247 to Lu and WO2003/106614 to Lu; as additional agents to those disclosed in WO2004/054523 to Tournilhac; in long wearing cosmetic compositions as disclosed in U.S. Patent Application Publication 2004/0180032; and in transparent or translucent care and/or make up compositions as discussed in WO 2004/054524.

Alternatively, the amino-functional polyorganosiloxane can be used as part of colorant or fixative compositions and applied as pre-, during- , post-treatment in the process of coloring or perming hair. The purposes could range from color retention and color enhancement to again conditioning of the colored hair fibers. Examples can be found in the patent publications U.S. Patent Application Publication 2003/0152534 to Legrand et al., U.S. Patent Application Publication 2003/0152541 to Legrand et al., U.S. Patent Application Publication 2003/0147840 to Legrand et al., U.S. Patent 6,953,484 to Devin-Baudoin et al., U.S. Patent 6,916,467 to Devin-Baudoin et al., U.S. Patent Application Publication 2004/0045098 to Devin-Baudoin et al., U.S. Patent Application Publication 2003/0126692 to Devin-Baudoin et al., PCT Publication WO2007/071684 to Audousset, and U.S. Patent Application Publication 2008/0282482 to Audousset, et al by L'Oreal and U.S. Patent 7,335,236 to McKelvey by Noxell Corp.

The personal care products according to this invention can be used by standard methods, such as applying them to the human body, e.g., skin or hair, using applicators, brushes, applying by hand, pouring them and/or possibly rubbing or massaging the product onto or into the body. Removal methods, for example for color cosmetics are also well known standard methods, including washing, wiping, and peeling. For use on the skin, the personal care products according to the present invention may be used in a conventional manner, for example, for conditioning the skin. An effective amount of the product for the purpose is applied to the skin. Such effective amounts generally range from 1 mg/cm² to 3 mg/cm². Application to the skin typically includes working the composition into the skin. This method for applying to the skin comprises the steps of contacting the skin with the composition in an effective amount and then rubbing the composition into the skin. These steps can be repeated as many times as desired to achieve the desired benefit.

The use of the personal care products according to the invention on hair may use a conventional manner for conditioning hair. An effective amount of the product for conditioning hair is applied to the hair. Such effective amounts generally range from 0.5 g to 50 g, alternatively from 1 g to 20 g. Application to the hair typically includes working the composition through the hair such that most or all of the hair is contacted with the product. This method for conditioning the hair comprises the steps of applying an effective amount of the hair care product to the hair, and then working the composition through the hair. These steps can be repeated as many times as desired to achieve the desired conditioning benefit.

Non-limiting examples of additives which may be formulated into the personal care products in addition to the amino-functional polyorganosiloxane include: (i) additional silicones, (ii) anti-acne agents, (iii) anti-carie agents, (iv) anti-dandruff agents, (v) antioxidants, (vi) biocides, (vii) botanicals, (viii) cleansing agents, (ix) colorants, (x) conditioning agents, (xi) deposition agents such as cationic deposition aids, (xii) electrolytes, (xiii) emollients, (xiv) exfoliating agents, (xv) foam boosters, (xvi) fragrances, (xvii) humectants, (xviii) occlusive agents, (xix) oils, (xx) pediculicides, (xxi) pH control agents, (xxii) pigments, (xxiii) preservatives, (xxiv) rheology-modifying agents, (xxv) solvents, (xxvi) stabilizers, (xxvii) stabilizing agents, (xxviii) sun-screening agents, (xxix) surfactants, (xxx) suspending agents, (xxxi) tanning agents, (xxxii) thickening agents, (xxxiii) vitamins, (xxxiv) waxes, (xxxv) wound healing-promotion agents, and (xxxvi) any two or more of (i) to (xxxv).

### EXAMPLES

These examples are intended to illustrate the invention to one skilled in the art. Table 2, below, show the starting materials used in these examples.

**Table 2 - Starting Materials In Examples for Making Cyclic Siloxazanes**

| Starting Material | Description | Source |
|---|---|---|
| | allyl alcohol | Sigma-Millipore |
| | allyl amine | Sigma-Millipore, Acros Organics, U.S. Amines |
| | allyloxydimethylsilane | Prepared in house via a synthetic method derived from a method used in US Patent 9,381,506 and modified to use the solvent in Example 1 |
| | allyloxydiphenylsilane | Prepared in house via a synthetic method derived from report by Mironov, V. F.; Kozlikov, V. L.; Fedotov, N. S., Zh. Org. Khim+, 1969, 39, 966. That used of Net₃ instead of PhNMe₂. |
| | Chloro-di-(2,4,6-trimethylphenyl)silane | Sigma-Millipore |
| MeSiCl2 | dichloromethylsilane | Sigma-Millipore |
| | 1,4-dioxane | Sigma-Millipore |
| | (NH₄)₂SO₄, ammonium sulfate | Sigma-Millipore |
| Solvent 1 | pentane | Sigma-Millipore |
| Karstedt's Catalyst | Pt (1,1,3,3-tetramethyl-divinyl-disiloxane complex) | Dow Silicones Corporation |
| Ashby's Catalyst | Pt (SiMeViO)₄ | Sigma-Millipore |
| TMDSO | 1,1,3,3-tetramethyldisiloxane | Dow Silicones Corporation |
| Solvent 2 | toluene | Sigma-Millipore |
| TEA | triethylamine | Sigma-Millipore |
| | 2,4,6-triisopropylphenylmagnesium bromide | Sigma-Millipore |

### Part I. Synthesis of Cyclic Siloxazanes

In this Reference Example 1, promoter allyloxy-di-(2,4,6-trimethylphenyl)silane was synthesized, as follows. 5.1302 g of chloro-di-(2,4,6-trimethylphenyl)silane was added to a 250 mL flask and dissolved in 110 mL pentane. In a separate flask 1.0328 g allyl alcohol, 1.9709 g triethylamine were combined and mixed. The mixture was then added to the chloro-di-(2,4,6-trimethylphenyl)silane over 1 hour, and copious amounts of white precipitate formed. The flask contents were stirred for 2 hours. The solid material was filtered off, and the supernatant liquid was collected. The solids were washed with 10 mL of pentane, which was combined with the supernatant liquid. The low-boiling volatile components were stripped off under vacuum to give a hazy liquid, which was dissolved in 60 mL of pentane, filtered again, stripped and collected to give 4.7018 g of allyloxy-di-(2,4,6-trimethylphenyl)silane as a liquid. The product was characterized by ¹H NMR, ²⁹Si NMR, and GC-Mass Spec.

In this Reference Example 2, promoter allyloxy-methyl-(2,4,6-tri-isopropylphenyl)silane was synthesized as follows. 30 mL of toluene was added to a 250 mL, half-jacket flask cooled to ca. -11°C. 4.9554 g (43.1 mmol) of dichloromethylsilane was added. Next, 25 mL of 0.5 M 2,4,6-triisopropylphenylmagnesium bromide was slowly added to the flask over 45 minutes, which gave a pale yellow solution and a colorless precipitate. The contents of the flask were stirred cold for 1 hour and then warmed to ambient temperature, where the contents were stirred for another hour. Next, 3.2534 g of 1,4-dioxane was added to the flask. Copious amount of white precipitate formed, and the flask contents were stirred for 1 hour. Salts were filtered away from the supernatant liquid. The solid was washed with 30 mL of pentane which was combined with the other liquid. Volatile components were removed under vacuum to give 2.9466 g of white micro-crystalline solid. The product was identified as chloro-methyl-(2,4,6-tri-isopropyl-phenyl)silane. The product was characterized by ¹H NMR, ²⁹Si NMR, and GC-Mass Spec.

2.7908 g of chloro-methyl-(2,4,6-tri-isopropyl-phenyl)silane was added to a 250 mL half-jacket flask, dissolved in 40 mL pentane, and cooled to ca. 4°C. In a separate flask, 0.6016 g allyl alcohol, 1.078 g triethylamine, and 4.7 g of pentane were combined and mixed. The mixture was then added to the chloro-methyl-(2,4,6-tri-isopropyl-phenyl)silane over 25 minutes. During this time, the flask contents warmed to 9.8°C, and copious amounts of white precipitate formed. The flask contents warmed to ambient temperature and stirred for 2 hours. The solid material was filtered off, and the supernatant liquid was collected. The solids were washed with 10 mL of pentane, which was combined with the supernatant liquid. The low-boiling volatile components were stripped off under vacuum to give a hazy liquid which was filtered again and collected as allyloxy-methyl-(2,4,6-tri-isopropyl-phenyl)silane. The product was characterized by ¹H NMR, ²⁹Si NMR, and GC-Mass Spec.

In this Reference Example 3, promoter (1-methyl-2-propyn-1-yl)oxy-diphenylsilane was synthesized as follows. 9.9272 g of chlorodiphenylsilane was added to a 250 mL half-jacket flask, dissolved in 100 mL pentane, and cooled to ca. 1°C. In a separate flask, 3.222 g 1-methyl-prop-2-yn-1-ol, 4.6258 g triethylamine, and 3.0000 g of pentane were combined and mixed to give a yellow solution. The mixture was then added to the chlorodiphenylsilane over 30 minutes. During this time, the flask contents warmed to 8.9°C, and copious amounts of white precipitate formed. The flask contents warmed to RT temperature and stirred for 2 hours. The solid material was filtered off, and the supernatant liquid was collected. The solids were washed with 30 mL of pentane twice, and the washings were combined with the supernatant liquid. The low-boiling volatile components were stripped off under vacuum to give a hazy liquid. The liquid was then combined with 15 mL of pentane, agitated, and then filtered to give a clear liquid. The liquid was stripped under reduced pressure to give 10.2342 g of a pale yellow, clear liquid consisting of (1-methyl-2-propyn-1-yl)oxy-diphenylsilane. The product was characterized by ¹H NMR, ²⁹Si NMR, and GC-Mass Spec.

In this Reference Example 4, a Pt - Promoter catalyst solution was prepared by mixing a stock solution of a soluble platinum source, such as Karstedt's catalyst [Pt₂O(SiMeVi)₃], or Ashby's Catalyst [Pt (SiMeViO)₄], and a promoter at RT. Reactivity was evident due to a quick color change from either a colorless or pale yellow solution to typically an orange to dark red solution as well as an exotherm. The mixture was ready for use within 1 h to 3 days, depending on the promoter used. The mixture was characterized by ¹H, ²⁹Si, and ¹⁹⁵Pt NMR. Combinations of Pt - promoter stock solutions evaluated are provided in Table 3 below.

**Table 3**

| Example | Promoter (from Table 1) | Pt Source | Mole Ratio of Promoter to Pt | Minimum Mixing Time Prior to Use | Solvent |
|---|---|---|---|---|---|
| 4a | AMM | 0.01 M Karstedt's Catalyst | 4.5 | 1 h | Toluene |
| 4b | APP | 0.01 M Karstedt's Catalyst | 5.5 | 1 h | Toluene |
| 4c | APP | 0.02 M Karstedt's Catalyst | 3 | 1 h | Toluene |
| 4d | AEE | 2% Karstedt's Catalyst | 3 | 1 d | Xylenes |
| 4e | ATM | 0.02 M Karstedt's Catalyst | 5.5 | 1d | Toluene |
| 4f | M2APP | 0.02 M Karstedt's Catalyst | 6.5 | 7 h | Toluene |
| 4g | M1PPP | 0.02 M Karstedt's Catalyst | 3.5 | 1 d | Toluene |

In this Example 5: cyclic siloxazane of formula -SiMe₂OSiMe₂C₃H₆NH- was prepared by the process of this invention where the mole ratio of allylamine to TMDSO was 2:1 or greater and the TMDSO was added to the allylamine. Quantities are given in the Table below. First, a Pt-Promoter solution was mixed with the allylamine and any solvent at RT in a glass reaction flask with a thermocouple, magnetic stir bar, and a condenser cooled to between -5°C to -20°C. The allylamine/catalyst solution was then heated to reflux temperature. The TMDSO was fed into the mixture over time and produced copious amounts of hydrogen within moments after addition, typically less than 5 seconds. The solution temperature gradually increased during the addition of TMDSO and also when feeding the TMDSO was halted as long as heat is put into the system. After feeding TMDSO was complete, the mixture was set to a temperature and stirred for 1 hour to 5 hours and then cooled to RT. The product, cyclic siloxazane, -SiMe₂OSiMe₂C₃H₆NH-, was characterized by GC-FID, GC-MS, ¹H NMR and/or ²⁹Si NMR. The cyclic siloxazane, - SiMe₂OSiMe₂C₃H₆NH-, was purified by a distillation method as described in EP 0 342 518 A2 and gave isolated yields of 65% to 85%.

**Table 4. Combinations of Pt-Promoter catalyst mixed with a 2+:1 ratio of allylamine and TMDSO**

| Ex. | Promo ter | Promot er Load (g) | Promo ter in Stock (g) | Pt Sourc e | Vol. of Pt Stoc k | Pt in Stoc k (pp m) | Stoc k Add ed (g) | Promo ter to Pt Ratio | Pt Loadi ng (ppm ) | Promo ter Conc. In Rxn (ppm) |
|---|---|---|---|---|---|---|---|---|---|---|
| 5a | ATM | 0.2024 | | Ashb y's Catal yst in D4-vinyl | 1.01 81 | 202 90 | 0.02 32 | 0.0 | 38.9 | 0 |
| 5b | M1PP P | | 0.028 4 | Karst edt in Tolue ne | 2.00 57 | 382 8 | 0.25 3 | 3.7 | 40.8 | 151 |
| | | | | | | | | | | |

| Exam ple | TMD SO (g) | Allylam ine (g) | Reage nt | Mole Ratio AA to TMD SO | Feed Tim e (h) | Initi al Tem p. (°C) | Max Tem p. (°C) | Post Feed Mixin g (h) | Post Feed Temp . (°C) | |
|---|---|---|---|---|---|---|---|---|---|---|
| 5a | 6.00 | 5.8806 | 3-7010 | 2.31 | 1.5 | 52.2 | 103. 7 | 4.5 | 103.7 | |
| 5b | 11.76 | 11.7522 | 3-7010 | 2.35 | 3 | 53.3 | 81 | 4 | 81 | |

In this Example 6 a cyclic siloxazane of formula -SiMe₂OSiMe₂C₃H₆NH- was prepared by the process of this invention where the mole ratio of allylamine to TMDSO was 1:1 to less than 1:2, and the TMDSO was added to the allylamine. Quantities are given in the Table below. First, a Pt-Promoter solution was mixed the allylamine and any solvent at ambient temperature in a glass reaction flask with a thermocouple, magnetic stir bar, and a condenser cooled to -5°C to -20°C. The allylamine/catalyst solution was then heated to reflux temperature. The TMDSO was fed into the mixture over time and produced copious amounts of hydrogen within moments after addition, typically less than 5 seconds. The solution temperature gradually increased during the addition of TMDSO until reaching a temperature of 70°C to 110°C but also when feeding the TMDSO was halted as long as heat was put into the system. After feeding TMDSO was complete, the mixture was set to a temperature of 60°C to 120°C and stirred for 30 minutes to 8 hours, and then cooled to RT. The product, cyclic siloxazane, -SiMe₂OSiMe₂C₃H₆NH-, was characterized by GC-FID, GC-MS, ¹H NMR and/or ²⁹Si NMR. The cyclic siloxazane, -SiMe₂OSiMe₂C₃H₆NH-, was purified by a distillation method as described in EP 0 342 518 A2, which gave isolated yields of 65% to 85%.

**Table 5. Combinations of Pt-Promoter catalyst mixed with a 1:1 to 1.25:1 ratio of allylamine and TMDSO**

| E x. | Prom oter | Prom oter Loadi ng (g) | Prom oter in Stock | Pt Type | Vol. of Pt Stoc k | Pt in Sto ck (pp m) | Stoc k Add ed (g) | Prom oter to Pt Ratio | Pt Loadi ng (ppm ) | Prom oter Conc. In Rxn (ppm) |
|---|---|---|---|---|---|---|---|---|---|---|
| 6a | AMM | 0.216 | | Karstedt in Toluene | | 195 2 | 0.5 | 447.2 | 46.3 | 20694 |
| 6 b | APP | | 0.115 0 | Karstedt in Toluene | 6 | 191 4 | 1 | 10.0 | 103.7 | 1038 |
| 6c | APP | | 0.064 4 | Karstedt in Toluene | 6 | 191 4 | 1 | 5.6 | 102.8 | 576 |
| 6 d | AMM | | 0.050 1 | Karstedt in Toluene | 6 | 191 4 | 1 | 4.4 | 103.0 | 449 |
| 6e | APP | | 0.064 4 | Karstedt in Toluene | 6 | 191 4 | 2 | 5.6 | 53.1 | 298 |
| 6f | APP | | 0.391 5 | Karstedt in Toluene | 34 | 382 8 | 1 | 3.0 | 121.9 | 367 |
| 6 g | ATM | | 0.085 8 | Karstedt in Toluene | 4 | 382 8 | 0.5 | 5.6 | 54.1 | 303 |
| 6 h | AEE | | 0.061 6 | Karstedt in Toluene | 1.00 79 | 200 00 | 0.11 | 3.1 | 62.7 | 192 |
| 6i | M1PP P | | 0.028 4 | Karstedt in Toluene | 2.00 57 | 382 8 | 0.25 3 | 3.7 | 27.4 | 102 |
| 6j | M1PP P | | 0.028 4 | Karstedt in Toluene | 2.00 57 | 382 8 | 0.87 | 3.7 | 15.8 | 59 |
| 6 k | M1PP P | | 0.391 5 | Karstedt in Toluene | 34 | 382 8 | 4.35 | 3.0 | 65.7 | 198 |
| 6l | M1PP P | | 0.391 5 | Karstedt in Toluene | 34 | 382 8 | 0.08 7 | 3.0 | 23.3 | 70 |
| 6 m | M1PP P | | 0.136 2 | Karstedt in Toluene | 2.00 32 | 200 00 | 0.48 75 | 3.4 | 31.9 | 108 |
| 6 n | M1PP P | | 0.136 2 | Karstedt in Toluene | 2.00 32 | 200 00 | 0.61 | 3.4 | 39.8 | 135 |
| 6 o | APP | | 1.212 6 | Karstedt in Toluene | 6.10 12 | 200 00 | 0.80 73 | 9.9 | 32.7 | 325 |
| 6 p | M2A PP | | 0.025 0 | Karstedt in Toluene | 1.01 | 382 8 | 0.35 | 6.5 | 74.3 | 480 |

| | Solvent | Solve nt Loadi ng (g) | TMD SO (g) | Allylam ine (g) | Mole Ratio AA to TMD SO | Feed Time (h) | Initi al Tem p. (°C) | Max Tem p. (°C) | Post Feed Mixi ng (h) | Post Feed Tem p. (°C) |
|---|---|---|---|---|---|---|---|---|---|---|
| 6a | Tetraglyme | 2.807 8 | 11.59 | 5.9775 | 1.21 | 1.9 | 55.7 | 100. 7 | 0.9 | 95 |
| 6b | | | 11.67 | 5.798 | 1.17 | 2 | 54.3 | 88 | 0.5 | 85 |
| 6c | | | 11.69 | 5.9301 | 1.19 | 2.1 | 54.2 | 82 | 1.5 | 82 |
| 6d | | | 11.61 | 5.9701 | 1.21 | 3 | 54.3 | 83.4 | 0.6 | 82 |
| 6e | | | 46.16 | 23.916 | 1.22 | 7.5 | 54.5 | 82 | NA | 80 |
| 6f | | 12.88 | 11.54 | 5.98 | 1.22 | 5 | 52.7 | 79.5 | 0.5 | 70 |
| 6g | | | 23.10 | 11.76 | 1.20 | 6 | 54.1 | 78.6 | 0.75 | 70 |
| 6h | | | 23.14 | 11.7777 | 1.20 | 8.25 | 53 | 82.3 | | |
| 6i | | | 23.28 | 11.7522 | 1.19 | 11 | 53.3 | 84.6 | 0.6 | 107 |
| 6j | | | 142.08 | 67.39 | 1.12 | 9 + 10 = 19 (two separa te days) | 53.5 | 110 | 1 | 110 |
| 6k | | | 168.92 | 80.06 | 1.12 | 13.5 | 53.8 | 83 | 0 | |
| 6l | | | 9.28 | 4.9172 | 1.25 | | 62.5 | 130 | | |
| 6 m | | | 208.03 | 97.26 | 1.10 | 12.5 | 53.5 | 94.5 | | 110 |
| 6n | | | 212.80 | 93.2671 | 1.03 | 10.5 | 52.9 | 85 | 2.5 | 100 |
| 6o | | | 343.70 | 149.9 | 1.03 | 15 | 51.8 | 87.7 | 6 | 95 |
| 6p | | | 11.67 | 6.02 | 1.21 | 3 | 51.3 | 82 | 1 | 75 |

In this Example 7, an example from EP 0 342 518 A2 (corresponding to U.S. Patent 5,026,890) failed to complete a 1:1 TMDSO to allylamine process safely or with any reasonable yield. The report stated "Allylamine and TMDSO in a 1:1 molar ratio were combined with 40 ppm of catalyst in a nitrogen atmosphere, whereupon hydrogen evolution was immediately observed. The mixture was heated to reflux and the pot temperature rose from 43°C to 73 °C over 65 minutes; an exothermic reaction then occurred which caused an immediate rise to 155°C. The mixture was cooled to 45°C and stripped under vacuum, yielding a very small proportion of cyclic disiloxazane. The residue was steam stripped and shown to be a mixture of bis(3-aminopropyl)polydimethylsiloxanes." This example showed that the process of EP 0 342 518 A2 did not provide good yield or purity of the cyclic disiloxazane.

In this Example 8 slow addition of TMDSO to allylamine containing a ca. 100 ppm Pt (SiMeViO)₄ catalyst did not give a complete reaction and instead produced little product past 55% conversion even after 6 hours of mixing, and instead began to precipitate a fine black powder. GC-FID confirmed incomplete conversion to the cyclic siloxazane.

In this Example 9: cyclic siloxazane of formula -SiMe₂OSiMe₂C₃H₆NH- was prepared by the process of this invention where TMDSO, a Pt catalyst, and a promoter were added to an appropriately sized glass reaction flask with a thermocouple, magnetic stir bar, and a condenser cooled to -5°C to -20°C. The solution was heated to a temperature of 40°C to 75°C. Quantities are given in the Table below. The Pt catalyst and Promoter were either mixed together prior to addition with the TMDSO or added individually to the TMDSO. The combination of reagents turned the solution yellow. The allylamine was fed into the mixture over time and produced copious amounts of hydrogen within moments after addition, typically less than 5 seconds. There was also an exotherm that was controlled by the rate of feeding the allylamine and cooling through the walls of the reaction flask. The reaction flasks temperature was maintained at a temperature of 50°C to 110°C by controlling the exotherm and by putting heat into the system after feeding the TMDSO was halted. After feeding TMDSO was complete, the mixture was set to a temperature of 60°C to 120°C and stirred for 30 minutes to 4 hours, and then cooled to RT. The product, cyclic siloxazane, - SiMe₂OSiMe₂C₃H₆NH-, was characterized by GC-FID, GC-MS, ¹H NMR and/or ²⁹Si NMR. The cyclic siloxazane, -SiMe₂OSiMe₂C₃H₆NH-, was purified by a distillation method as described in EP 0 342 518 A2 and gave isolated yields of 65% to 85%.

| Exam ple | Prom oter | Prom oter Loadi ng (g) | Prom oter in Stock | Pt Type | Vol . of Pt Sto ck | Pt in Sto ck (pp m) | Stoc k Add ed (g) | Prom oter to Pt Ratio | Pt Load ing (ppm ) | Prom oter Conc. In Rxn (ppm) |
|---|---|---|---|---|---|---|---|---|---|---|
| 9a | AMM | 0.263 | | Karstedt in Toluene | | 195 1 | 1 | 136.4 | 85.7 | 11689 |
| 9b | AMM | 0.344 | | Karstedt in Toluene | | 195 1 | 1 | 179.5 | 100.0 | 17954 |
| 9c | AMM | 0.234 | | Karstedt in Toluene | | 195 1 | 1 | 121.4 | 103.5 | 12566 |
| 9d | AMM | 0.281 | | Karstedt in Toluene | | 195 1 | 2 | 36.5 | 199.2 | 7278 |
| 9e | AMM | 0.61 | | Karstedt in Toluene | | 195 1 | 1 | 323.3 | 105.1 | 33983 |
| 9f | AMM | 0.283 | | Karstedt in Toluene | | 195 1 | 1 | 146.9 | 88.3 | 12973 |
| 9g | AMM | 0.255 | | Karstedt in Toluene | | 195 1 | 1 | 131.9 | 71.2 | 9387 |
| 9h | AMM | 0.336 | | Karstedt in Toluene | | 195 2 | 5 | 7.0 | 426.6 | 2981 |
| 9i | CMM | 0.325 | | Karstedt in Toluene | | 195 2 | 0.5 | 678.2 | 54.2 | 36741 |
| 9j | M2A MM | 0.229 | | Karstedt in Toluene | | 195 2 | 1 | 118.8 | 106.5 | 12653 |
| 9k | APP | 0.299 7 | | Karstedt in Toluene | | 195 2 | 1 | 156.1 | 106.4 | 16600 |
| 9l | APP | | 0.115 0 | Karstedt in Toluene | 6 | 191 4 | 0.5 | 10.0 | 52.3 | 523 |

| Examp le | Solve nt | Solve nt Loadi ng (g) | TMDS O (g) | Allylami ne (g) | Mole Ratio AA to TMDS O | Fee d Tim e (h) | Initi al Tem p. (°C) | Max Tem p. (°C) | Post Feed Mixi ng (h) | Post Feed Tem p. (°C) |
|---|---|---|---|---|---|---|---|---|---|---|
| 9a | | | 11.50 | 10 | 2.05 | 1.8 5 | 60 | 74.4 | 0.5 | 60 |
| 9b | | | 11.43 | 6.73 | 1.39 | 1 | 60 | 76 | 1 | 60 |
| 9c | | | 11.40 | 6.22 | 1.28 | 0.6 | 60.4 | 90.9 | 1 | 60 |
| 9d | | | 11.40 | 5.9 | 1.22 | 1 | 60 | 85.9 | 0.3 | 75 |
| 9e | | | 11.41 | 5.54 | 1.14 | 1 | 60 | 82.6 | 1.25 | 60 |
| 9f | | | 11.43 | 9.385 | 1.93 | 1 | 60 | 70 | 1 | 70 |
| 9g | Tolue ne | 8.6 | 11.43 | 6.135 | 1.26 | 1 | 29.8 | 38.3 | 3 | 40 |
| 9h | | | 11.46 | 6.08 | 1.25 | 5 | 50 | 62 | 1 | 60 |
| 9i | | | 11.46 | 5.7311 | 1.18 | 0.6 7 | 60 | 70 | 0.5 | 70 |
| 9j | | | 11.54 | 5.563 | 1.13 | 0.7 5 | 70.1 | 80.6 | 1.25 | 70 |
| 9k | | | 11.56 | 5.49 | 1.12 | 1.5 | 70 | 88.8 | 1.5 | 70 |
| 9l | | | 11.81 | 6.0003 | 1.19 | 1.2 5 | 66.9 | | 1 | 65 |

In this Example 10, a cyclic siloxazane of formula -SiMe₂OSiMe₂C₃H₆NH- was synthesized by the process similar to that described in U.S. Patent 5,026,890, but with several changes, as follows. To a 250 mL flask with glass thermowell and a chilled reflux condenser were added 0.0224 g of 0.104 M Pt (SiMeViO)₄ (ca. 2% Pt) and 5.8641 g allyl-amine. The mixture was heated to reflux (Δ₀ = 53.4°C). 6.8820 g of 1, 1,3,3-tetramethyldisiloxane (TMDSO) was added in small aliquots to try and minimize the amount of the non-hydrosilylated intermediate (NHI) of formula H₂C=CHCH₂NHSiMe₂OSiMe₂H. This process step deviated from the examples in U.S. Patent 5,026,890 where TMDSO was added in one aliquot. The reason for this change was that the bulk addition of the TMDSO to allyl-amine would generate a quantitative amount of flammable, non-compressible hydrogen gas, which would be untenable in a large manufacturing reactor due to safety concerns associated with the enormous, spontaneous pressure increase and limited venting for safe handling of the toxic allyl-amine amine. As the TMDSO was added, the reflux temperature slowly rose. After 3 h, ca. 70% of the TMDSO had been added and the temperature rose to 61.5°C. The flask contents were analyzed by GC that showed predominantly the NHI was formed with only about 4% conversion to hydrosilylated cyclic -SiMe₂OSiMe₂C₃H₆NH-.

The heating was discontinued overnight and the solution was stirred overnight at ambient temperature. The next day, the heating to reflux was resumed. After 1.5 h, the remaining TMDSO was added and heating continued for another 9.5 h where the temperature rose to 73.9°C. The heating was discontinued, and the solution was stirred overnight at RT.

The next day, the solution was heated to reflux for 9 h where it reached 106.1°C. This also deviated from the process described in Patent 5,026,890 where the process was run during one block of heating. The heat source was removed due to safety reasons of leaving unreacted components at elevated temperature, and the experiment already demonstrated poor conversion. Additional time to complete the process demonstrated unreliability and sluggishness in the process described in U.S. Patent 5,026,890. Analysis by GC showed that 95+% of the NHI had been converted to the cyclic siloxazane of formula - SiMe₂OSiMe₂C₃H₆NH-. This comparative example showed that the process of U.S. Patent 5,026,890 was unsuitable for commercial scale operations due to safety concerns and insufficient conversion achieved during desired reaction time.

In this Example 11, cyclic -SiMe₂OSiMe₂CH₂CH₂CH₂NMe- was synthesized using (1-methyl-2-propyn-1-yl)oxy-diphenylsilane (M1PPP) as a hydrosilylation promoter. 4.92 g of N-methyl-allylamine and 0.087 g of the Pt/ M1PPP promoter catalyst solution from Example 4g (which gave *ca.* 23 ppm Pt and 70 ppm promoter in the final solution mixture) were added to a 250 mL 1-neck flask with a fused glass thermowell and a reflux condenser. The solution was heated to 62.5°C. 9.28 g of TMDSO was added over 3 hours where the temperature gradually increased to 92°C. A gas was generated during and after the addition. The solution temperature was then increased to 80°C and stirred for 1 hour, and then allowed to cool to ambient temperature. The crude product contained cyclic - SiMe₂OSiMe₂CH₂CH₂CH₂NMe-, which was characterized by GC-FID and GC-MS. In theory, this material could be purified by the reactive distillation process described herein.

In this Example 12, cyclic -SiMe₂OSiMe₂OSiMe₂CH₂CH₂CH₂NH- was synthesized using allyloxy-diphenylsilane (APP) as a hydrosilylation promoter. 11.58 g of allylamine and 0.3 g of the Pt/ APP promoter catalyst solution from Example 4c (which gave *ca.* 22 ppm Pt and 65 ppm promoter in the final solution mixture) were added to a 250 mL 1-neck flask with a fused glass thermowell and a reflux condenser. The solution was heated to 52.7 °C. 41.07 g of 1,1,3,3,5,5-hexamethyltrisiloxane (HMTSO) was added over 7.5 hours to the reaction mixture where the temperature gradually was increased to 82.4°C. The solution was then heated to *ca.* 95°C for 30 minutes and then allowed to cool to *ca.* 67°C where it was held for 1.5 hours. A gas was generated during and after the addition. The solution temperature was then increased to 80°C and stirred for 1 hour, and then allowed to cool to ambient temperature. The crude product contained cyclic - SiMe₂OSiMe₂OSiMe₂CH₂CH₂CH₂NH-, which was characterized by GC but only gave low yields (<25%) with the majority of the material converting into the product of allylamine undergoing a hydrosilylation reaction on both SiH moieties on the trisiloxane, HSiMe₂OSiMe₂OSiMe₂H, to give H₂NCH₂CH₂CH₂SiMe-₂OSiMe₂SiMe₂CH₂CH₂CH₂NH₂ as the major product. In theory, cyclic - SiMe₂OSiMe₂OSiMe₂CH₂CH₂CH₂NH-, could be purified by the reactive distillation process described herein.

In this Example 13: cyclic siloxazane of formula -SiMe₂OSiMe₂C₃H₆NH- was prepared by the process of this invention where the mole ratio of allylamine to TMDSO was 2.4:1. EP 0 342 518 A1, explained the ratio between the allylamine and TMDSO "should be at least about 2:1 and preferably about 2.2-2.5:1". Without wishing to be bound by theory, it is thought that this is to avoid the violent exotherm observed when it was performed with a ratio of 1:1.
In a N₂ filled glove box, 2 g of a stock Pt (3800 ppm)-APP Promoter (11,500 ppm) in toluene solution was mixed with 23.9 g (0.42 mol) allylamine in a 250 mL 1-neck reaction flask with a fused-glass thermowell with a thermocouple and a magnetic stir bar with a high efficiency condenser set to *ca.* -15 °C. The allylamine/Pt catalyst solution was then heated to reflux at *ca.* 52 °C. Then, using a syringe, 23.2 g (0.17 mol) of TMDSO was fed intermittently over 4 hours where the average pot temperature was approximately 64 °C.

Example 13 (cont.): (Purification of 1,1,3,3-tetramethyl-2-oxa-7-aza-1,3-disilacycloheptane was performed as follows using a simple Vigreux distillation column. The condenser on the reactor in the synthesis described above was replaced with a *ca.* 15 cm Vigreux distillation column connected to a distillation head with a condenser chilled to *ca. -* 15 °C connected to a receiver. The distillation apparatus was first heated at atmospheric pressure to *ca.* 94 °C to remove the bulk of the excess allylamine over 1.5 hours. Two small additional cuts (sum = *ca.* 1.1 g) were removed under a vacuum distillation. Then, 0.059 g (0.44 mmol) of ammonium sulfate was added to the crude mixture. The pot was then heated to *ca.* 113 °C to distill the product. 27.54 g of 96.1% pure cyclic siloxazane was collected. The receiving flask was switched and then 27.54 g (84.2% yield) of the 1,1,3,3-tetramethyl-2-oxa-7-aza-1,3-disilacycloheptane product cut was collected over 2 hours. However, GC-MS showed the material was only 96% pure and contained 3.5 % allylamine. It is thought that had the reactive distillation process of the present invention been used, a better yield and purity could have been obtained.

In this Example 14, synthesis of 1,1,3,3-tetramethyl-2-oxa-7-aza-1,3-disilacycloheptane was performed as follows. In a N₂ containing glove box, a 1L, 3-neck reaction flask connected to 1) in the top joint, a high-efficiency condenser cooled with silicone fluid to *ca.* -15 °C. 2) a compression fitting (Kalrez O-ring) with a thermowell. 3) a glass stopper. The top of the condenser was open to the glove box. To the reactor was added 161.4 g (2.83 mol) of allylamine and 0.82 g of a stock catalyst solution in xylenes containing *ca.* 1.8% Pt and *ca.* 16.6% of the hydrosilylation promoter, allyloxy-diphenylsilane (APP). Using a heating mantle, the reactor was heated to *ca.* 52 °C where the solution was in reflux. Then, using a syringe, 343.7 g (2.56 mol) of TMDSO was fed split over three days. On the first day, 137 g of TMDSO was added over 6.25 hours with intermittent aliquots (fed at 1-4 g/min). After gas evolution had stopped and the pot temperature effectively stopped increasing. The pot temperature increased from 52 to 63 °C. The reaction mixture was allowed to cool overnight. On the second day, 195 g of TMDSO was added via syringe over 9 hours. On the third day, the final 11.7 g of TMDSO was added and then the crude mixture was heated to *ca.* 102 °C for 6 hours. On days two and three, the average pot temperature was 80 °C.

Example 14 (cont.): (Purification of 1,1,3,3-tetramethyl-2-oxa-7-aza-1,3-disilacycloheptane was performed as follows using a simple Vigreux distillation column. The condenser on the reactor in the synthesis described above was replaced with a *ca.* 15 cm Vigreux distillation column connected to a distillation head with a condenser chilled to *ca. -* 15 °C connected to a receiver. 1.6 g (12.6 mmol) of ammonium sulfate was added and the reactor was heated to *ca.* 95 °C and then placed under vacuum. 48.75 g of forecut was collected slowly over three hours. The receiving flask was switched and then 291.5 g (60.1% yield) of the 1,1,3,3-tetramethyl-2-oxa-7-aza-1,3-disilacycloheptane product cut was collected over 1 hour. Quantified UHPLC-MS analysis revealed the 1,1,3,3-tetramethyl-2-oxa-7-aza-1,3-disilacycloheptane to contain *ca.* 59.1 ppm of allylamine. This comparative example showed that using a simple distillation column has limited ability to separate allylamine. This comparative example also showed a 10 to 15 % loss in yield relative to the distillation method of this invention.

In this Example 15, synthesis of 1,1,3,3-tetramethyl-2-oxa-7-aza-1,3-disilacycloheptane was performed as follows. The reactor described in Comparative Example 14 was set up in a N₂ containing glove box. To the reactor was added 150.1 g (2.63 mol) of allylamine and 2.51 g of a stock catalyst solution in xylenes containing *ca.* 0.5% Pt and *ca.* 5.4% of the hydrosilylation promoter, M2APP. Using a heating mantle, the reactor was heated to *ca.* 53 °C where the solution was in reflux. Then, using a syringe, 346.2 g (2.58 mol) of TMDSO was fed intermittently over 11 hours where the average pot temperature was approximately 80 °C. After adding *ca.* 80% of the TMDSO, there was a 5+ °C exotherm. The solution was then heated to *ca.* 110 °C for 2.5 hours and then allowed to cool to ambient temperature.

Example 15 (cont.) Purification of allylamine from 1,1,3,3-tetramethyl-2-oxa-7-aza-1,3-disilacycloheptane was performed as follows using a 5-tray column. The condenser on the reactor in Example 14 (synthesis) was replaced with 5-tray Oldershaw distillation column connected to a distillation head with a condenser chilled to *ca.* -15 °C connected to a receiver. 10.0 g of the crude mixture from Example 15 was removed for analysis. 1.3 g (9.8 mmol) of ammonium sulfate was added and the reactor was heated to *ca.* 95 °C and then placed under vacuum. 28.04 g of forecut was collected slowly over two hours. The receiving flask was switched and then 264.2 g (55.2% yield) of the cyclic siloxazane product cut was collected over 1 hour. Quantified UHPLC-MS analysis revealed the cyclic siloxazane to contain *ca.* 32.7 ppm of allylamine. Example 14 showed that while using a 5-tray column provided an improvement over the Vigreux column used in Example 13, the improvement was limited. Furthermore, this Example 15 also had a 15-20% decrease in yield relative to the reactive distillation method described herein.

In this Example 16, synthesis of ,1,3,3-tetramethyl-2-oxa-7-aza-1,3-disilacycloheptane was performed as follows using a continuous feed of TMDSO. In a fume hood, a 1L, 4-neck reaction flask connected to 1) in the top joint, a high-efficiency condenser cooled with silicone fluid to *ca.* -15 °C; 2) a compression fitting (Kalrez O-ring) adaptor fed with Tygon^{™} tubing connected to a 1L flask containing 1,1,3,3-tetramethyldisiloxane with a peristaltic pump to feed the siloxane; 3) a compression fitting with a thermowell; 4) a compression adaptor connect to an *in situ* Raman probe. The top of the condenser was connected a Schlenk line upstream and downstream an oil bubbler with a subsequent solution of *ca*.0.75 M HCl_{(aq)} to scrub any residual amine vapor in the stream. The reactor was inerted with N₂. To the reactor was added 156 g (2.73 mol) of allylamine and 9 g of a stock catalyst solution in toluene solution containing *ca.* 0.25% Pt and *ca.* 2.06% of the hydrosilylation promoter, M2APP. Using a heating mantle, the reactor was heated to *ca.* 51 °C where the solution was heated to reflux. Then, using the peristaltic pump, 273 g (2.03 mol) of TMDSO was fed over 8 hours, initially at a feed rate of 0.54 g/min over the first three hours which was shown to build up SiH in the system. The feed was paused for two hours while the SiH was gradually consumed. Then the rest of the TMDSO was fed at a rate of 0.98 g/min initially at a temperature of *ca.* 70-80 °C. After feeding *ca.* 60% of the TMDSO, there was a significant exotherm leading to a rise in temperature and a distinct > 5 °C exotherm. After the feed was complete, the mixture was heated to *ca.* 109 °C for 2.5 hours after which it was allowed to cool to ambient temperature. The synthesis in Example 15 showed that a continuous feed of a SiH-terminated siloxane oligomer was unsuitable for an industrial scale process to prepare a cyclic siloxazane due to the high exotherm of > 5 °C.

Example 16 (cont.): The reaction mixture prepared as described above was purified, as follows. The feed line of the reaction flask was replaced with a gas adaptor connected to the Schlenk line. Under a flow of nitrogen, the condenser was replaced with a 5-tray Oldershaw distillation column connected to a distillation head with a condenser chilled to *ca.* -15 °C. A magnet connected to a timed-actuator was used to direct the flow into and away from the receiver. Thermocouples were used to monitor the temperature of the distillation. The reaction was stripped at *ca.* 115 °C over four hours under vacuum with a reflux ratio between 3-6 when the column mostly dried up. The overheads contained only 20% of the cyclic siloxazane.

The solution was cooled and 0.5 g (3.78 mmol) of ammonium sulfate was added. The vacuum was then restored. A second forecut was collected (61.6 g) at a reflux ratio of 46 over four hours to give 97% pure cyclic siloxazane that contained 42.5 ppm of residual allylamine. The reflux ratio was then set between 3-6 and 226.6 g (1.20 mol) of the product cut of the cyclic siloxazane was collected. Quantified UHPLC-MS analysis revealed the cyclic siloxazane to contain 0.6 ppm of allylamine.

In this Example 17, synthesis of 1,1,3,3-tetramethyl-2-oxa-7-aza-1,3-disilacycloheptane was performed as follows using a continuous feed of HMDSO. The reactor described in Example 16 was modified to have the distillation column, head, and receiver already attached to the reactor and increased to ten trays. The reactor was inerted with N₂. To the reactor was added 1175 g (3.06 mol) of allylamine and 10 g of a stock catalyst solution in toluene solution containing *ca.* 0.25% Pt and *ca.* 3.78 % of the hydrosilylation promoter, M2APP. Using a heating mantle, the reactor was heated to *ca. 53* °C where the solution was at reflux. Then, using the peristaltic pump, 369.7 g (2.75 mol) of TMDSO was fed over 7 hours. For the first 5.5 hours, the TMDSO was fed at *ca.* 0.78 g/min. After adding *ca.* 65-70 % of the TMDSO, the reaction exotherm rapidly accelerated leading to a > 40 °C increase in temperature. After cooling to 70-90 °C, the remaining TMDSO was fed to the reactor at a rate of 1.22 g/min for 1.5 hours during which the SiH did not build up and there was a clear and constant, mild exotherm. The solution was then heated to *ca.* 109 °C and mixed for 2.5 hours and finally allowed to cool to ambient temperature.

In this Example 18, a cyclic siloxazane was purified by the reactive distillation method. The feed line of the reaction flask described in the synthesis portion of Example 17 was replaced with a glass stopper. 0.5 g (3.78 mmol) of ammonium sulfate was added and flask was placed under vacuum. A time-based distillation as described herein was implemented. The reaction mixture in the flask was heated under vacuum for 0.75 hours to stratify within the distillation column and then an initial cut (43.4 g) was collected at a reflux ratio of ca. 33 over ca. 5 hours to allow time for the allylamine to reform via transamination equilibration and be removed with other low boiling impurities. For the product cut, the reflux ratio was switched to 1-3 and 292.2 g (56.1 %yield) of the cyclic siloxazane was collected over 1.5 hours. Quantified UHPLC-MS analysis revealed the cyclic siloxazane to contain ca. 12.7 ppm of allylamine, demonstrating a clear improvement over the previous comparative examples. Example 18 showed that the cyclic siloxazane can be distilled to low level of allyl amine.

In this Example 19, the reactor setup described in Example 17 was used for synthesis. To the reactor was added 1175 g (3.06 mol) of allylamine and 10 g of a stock catalyst solution in toluene solution containing *ca.* 0.25% Pt and *ca.* 3.78 % of the hydrosilylation promoter, M2APP. Using a heating mantle, the reactor was heated to *ca. 52* °C where the solution was at reflux. Then, using the peristaltic pump, 144.3 (1.07 mol) of TMDSO was fed slowly, *ca.* 0.5 g/min for the first two hours, then paused for 1 hour, then fed for 1 hour, then paused for 1.5 hours, then another 30 g over 30 minutes. Unlike the other comparative examples, the rate of SiH consumption decreased significantly over this time resulting in a build-up of SiH in the system. The feed was halted to give time for the SiH to be consumed safely and the process was stopped with the pot temperature only reaching 70 °C.

In this Example 20, the reactor setup described in Example 17 was used in this process but modified to include a nitrogen purge line into the reaction flask that slowly fed an inert gas into and through the apparatus including the reaction flask and distillation column to push out any residual hydrogen. To the flask was added 1175 g (3.06 mol) of allylamine and 10.7 g of a stock catalyst solution in xylenes containing *ca.* 0.25% Pt and *ca.* 2.06 % of the hydrosilylation promoter, M2APP and 33.0 g (0.311 mol) of xylenes. Using a heating mantle, the flask was heated to *ca.* 54 °C where the solution was at reflux. Then, using the peristaltic pump, 331.4 g (2.47 mol) of TMDSO was fed to the reaction flask over two days. On the first day, the TMDSO was fed at an average rate of *ca.* 0.5 g/min in pulses that lasted between 0.8-1.5 hours each with an intermittent pause of 0.6-0.8 hours. The flask was allowed to cool overnight and then reheated to reflux temperature of *ca.* 72 °C and the remaining 137 g of TMDSO was fed at a rate of *ca.* 0.92 g/min over 2.75 hours during which the SiH did not build up and there was a clear and constant, mild exotherm. The reaction temperature was held between 80-90 °C during this process. Afterwards, the reactor was heated to *ca.* 122 °C for 2.5 hours. Example 19 shows that flushing out the reactor with an inert gas like nitrogen to minimize or eliminate H₂ build up in the reactor atmosphere and in solution. Without wishing to be bound by theory, it is thought that the H₂ appears to slowly poison the catalyst if not flushed from the system. This also shows that the use of shorter pulses is more effective for avoiding SiH build up.

Example 20 (cont.) The feed line of the reaction flask described above in the synthesis performed for Example 20 was replaced with a glass stopper. 0.4 g (3.02 mmol) of ammonium sulfate was added and flask was placed under vacuum. A time-based distillation described above was implemented. The crude mixture was heated under vacuum for 1.5 hours to stratify within the distillation column and then an initial cut was collected at a reflux ratio of 25 for 1.5 hours and then 50 for 4 hours to allow time for the allylamine to reform via equilibration and be removed with other low boiling impurities. 54.03 g of forecut material was collected. To test the efficiency of allylamine separation, a comparable quantity (59.8 g) of the product cyclic siloxazane was collected using a reflux ratio of 2 over 30 minutes. Quantified UHPLC-MS analysis revealed the cyclic siloxazane to contain *ca.* 1.5 ppm of allylamine. The receiving flask was switched again and another 295.66 g (76.1 %) of cyclic siloxazane was collected at a reflux ratio of *ca.* 2 for 2 hours and then a reflux ratio of 6 for another 4.5 hours. The cyclic siloxazane collected from this step was shown to contain *ca*.1.5 ppm of allylamine. Example 20 showed that a pure cyclic siloxazane product with low allyl amine content and good yield can be prepared by the process described herein.

In this Example 21, the reactor setup described in Example 20 was used in this process. To the flask was added 1175 g (3.06 mol) of allylamine and 10.2 g of a stock catalyst solution in toluene containing *ca.* 0.25% Pt and *ca.* 2.06 % of the hydrosilylation promoter, M2APP and 48.6 g (0.526 mol) of toluene. Using a heating mantle, the flask was heated to *ca.* 54 °C where the solution in the flask was at reflux. Then, using the peristaltic pump, 311.5.4 g (2.32 mol) of TMDSO was fed to the reaction flask over two days. On the first day, the TMDSO was fed at an average rate of *ca.* 0.85 g/min in pulses that lasted *ca. 20* minutes each with intermittent pauses of 20 minutes over seven hours. Then, the average feed rate was increased to 1.2 g/minute for another hour with intermittent pauses of 10 and 15 minutes, respectively. The flask was allowed to cool overnight and then reheated to reflux temperature of *ca.* 72 °C and the remaining 138 g of TMDSO was fed at an average rate of ca. 1.30 g/min in continued 20 minute pulses with 20 minute pauses over 4.5 hours during which the SiH did not build up and there was a clear and constant, mild exotherm. The reaction temperature was held at 75-90 °C during this process. Afterwards, the reactor was heated to *ca.* 118 °C for 2.5 hours. Working Example 20 showed that using an intermittent feed with 10 to 20 min intervals in which the SiH-terminated siloxane oligomer was fed resulted in little SiH build up and pseudo-continuous dehydrocoupling and hydrosilylation reactions as shown by in-situ Raman analysis.

Example 21 (cont.). The feed line of the reaction flask described in Example 21 (synthesis description above) was replaced with a glass stopper. 0.4 g (3.02 mmol) of ammonium sulfate was added and the flask was placed under vacuum. A reactive distillation described herein was implemented. The mixture in the flask was heated under vacuum for 0.5 hours to stratify within the distillation column and then an initial cut was collected at a reflux ratio of 20 for 6 hours and then 50 for 1 hour to allow time for the allylamine to reform via equilibration and be removed with other low boiling impurities. 50.56 g of forecut material was collected. The receiving flask was switched and 317 g (70.9 % yield) of the product cyclic siloxazane was collected at a reflux ratio of *ca.* 2 over 6.5 hours. Quantified UHPLC-MS analysis revealed the cyclic siloxazane collected from this step was shown to contain *ca*.0.3 ppm of allylamine. This Example 21 showed that allylamine can be removed using the process described herein even using a different solvent. Almost an order of magnitude lower allylamine concentration was achieved.

Without wishing to be bound by theory, it is thought that the examples above show the following benefits of the present invention. If by-product H₂ is not sufficiently removed, the catalyst can become poisoned during synthesis of a cyclic siloxazane, as described herein. Furthermore, the comparative (non-reactive) distillation utilizing a simple Vigreux column without redistribution catalyst generated a cyclic siloxazane product of 99% purity at 60% yield containing 60 ppm allylamine or more. However, switching to a 5 tray column with controlled reflux according to the process of this invention described above caused purity of the cyclic siloxazane product to improve to ≥ 99.5% at 59% yield with significantly less (e.g., 0.6 to 12 ppm allyl-functional amine). At 10 trays with a reflux ratio 50 during allyl-functional amine removal, followed by distillation at a reflux ratio of only 2 for the product cut gave 99.8 % purity at 76% yield with an average allyl-functional amine concentration of 0.4-1.5 ppm. The inventors surprisingly found that addition of the redistribution catalyst (e.g., ammonium sulfate in the Examples above) and resulting rearrangement required a distillation column due to high boiling point differences, however, it was surprisingly found that close boiling impurity chain extending siloxanes formed during the rearrangement, and formation of these was heretofore unknown. The application of high reflux reactive distillation to remove this close boiling impurity during the rearrangement generated product of excellent purity not achieved previously.

### Part II. Preparing An Amino-Functional Polyorganosiloxane

**Table 2 - Starting Materials for Examples for Preparing An Amino-Functional Polyorganosiloxane**

| Starting Material | Description | Source |
|---|---|---|
| MQ 1 Resin | MQ resin solution in xylenes with a ratio of M units / Q units (M/Q ratio) of 0.78, hydroxyl content of 15 mole % as determined by ²⁹Si NMR and a weight average molecular weight of 8,750 Dalton as measured by triple detection GPC. | Dow Silicones Corporation |
| EtOH | ethanol | |
| MeOH | methanol | |
| MeOH | Methanol | Fisher Scientific |
| OH-PDMS 1 | bis-silanol-terminated polydimethylsiloxane with a viscosity of 70 mPa·s measured as described below | Dow Silicones Corporation |
| OH-PDMS 2 | bis-silanol-terminated polydimethylsiloxane with an average Mw of 1,000 | Dow Silicones Corporation |
| OH-PDMS 3 | bis-silanol-terminated poly-dimethylsiloxane (Mw = 3100) | Dow Silicones Corporation |
| HMDZ | hexamethyldisilazane | DOWSIL^{™} Z-6079 Fluid |
| | HPLC grade xylenes | |

Starting materials in Table 2 with DOWSIL^{™}, SYL-OFF^{™}, and SILASTIC^{™} brands are commercially available from Dow Silicones Corporation of Midland, MI, USA.

In this Example I, a single source of cyclic -SiMe₂OsiMe₂C₃H₆NH- in a solution of MeOH was converted to MeO-SiMe₂OSiMe₂C₃H₆NH₂ as follows. To a 12 mL, scintillation vial, *ca*.0.50 g of a crude mixture consisting of ca. 55% cyclic - SiMe₂OsiMe₂C₃H₆NH- with the remainder consisting of hydrocarbon and siloxane materials as well as trace quantities of platinum. A condenser was added to the top of the flask and cooled to ca. -15°C. ca. 61.0 mL of methanol was added to the flask over 30 minutes resulting in a gradual exotherm of 21.3°C. The solution was refluxed around 72°C for 7 hours.

In this Working Example II, the MeO-SiMe₂OsiMe₂C₃H₆NH₂ was purified via distillation. The condenser on the flask from Working Example I was replaced with a 15 cm Vigreux column, a distillation head, and receiving flask. The flask was heated to ca. 115°C with no vacuum to remove excess methanol and other components with a boiling point below MeO-SiMe₂OsiMe₂C₃H₆NH₂. MeO-SiMe₂OsiMe₂C₃H₆NH₂ was collected under vacuum from -20 in Hg to -28 in Hg heated up to ca. 130°C. ca. 38% of the theoretical yield of MeO-SiMe₂OsiMe₂C₃H₆NH₂ was collected.

In this Example III, 1,13-diamino-4,4,6,6,8,8,10,10-octamethyl-5,7,9-trioxa-4,6,8,10-tetrasilatridecane (Bis-aminopropyl-tetrasiloxane), which is the hydrolysate of 1,1,3,3-tetramethyl-2-oxa-7-aza-1,3-disilacycloheptane (cyclic -SiMe₂OSiMe₂C₃H₆NH-) was synthesized as follows. To an N₂ inerted 250 mL 3-neck round bottom flask with a thermocouple, magnetic stir bar, gas adaptor, and a septum was added 60.15 g (0.318 mol) of cyclic -SiMe₂OSiMe₂C₃H₆NH-. 3.0 g (0.16 mol) of H₂O₍₁₎ was added to the flask with vigorous stirring in four aliquots over 50 minutes resulting in a reaction exotherm heating the mixture to *ca.* 50 °C from ambient temperature. The solution was stirred for 1 hour upon a GC-FID/-MS sample was drawn that showed there had been 69% conversion to the bis-aminopropyl-tetrasiloxane. The mixture was stirred at ambient temperature for an additional 20 hours and another GC-FID sample was drawn showing 95% conversion. In order to accelerate the process, 0.2 g (0.11 mol) of H₂O₍₁₎ was added and the mixture was heated to *ca.*82 °C for 3 hours, cooled to ambient temperature over 1 hour and another GC-FID was drawn to show that 99+% conversation to the bis-aminopropyl-tetrasiloxane had occurred. The flask was heated to 55 °C for 75 min under vacuum to remove excess water. The composition was confirmed by GC-FID/-MS, ¹H, ¹³C, and ²⁹Si NMR.

In this Example IV, bis-aminopropyl poly-dimethylsiloxane with Mw 1,400 g/mol and DP = 16 was synthesized as follows. To a 250 mL 3-neck round bottom flask with a thermocouple, magnetic stir bar, and a condenser with a gas adaptor was added ca. 100 g (0.1 mol) of bis-silanol-terminated polydimethylsiloxane (average Mw 1,000 g/mol) (OH-PDMS 2). The flask was continuously purged with N₂ and the OH-PDMS 2 was stirred vigorously. The flask was then heated to *ca.* 64°C at which time 39.16 g (0.207 mol) of 1,1,3,3-tetramethyl-2-oxa-7-aza-1,3-disilacycloheptane (cyclic -SiMe₂OSiMe₂C₃H₆NH-) was added over 10 minutes. The reaction mixture in the flask heated up to a maximum temperature of *ca.* 74°C and then began to cool. The applied heat was increased so that the reaction mixture was held at 75°C and stirred for 30 minutes. The heat was then stopped, and the reaction mixture was allowed to cool to RT and stir overnight while the headspace was flushed with nitrogen. The composition was confirmed by ¹H NMR and ²⁹Si NMR and the liquid had a viscosity of 8 mPa·s to 10 mPa·s.

In this Example V, a general procedure for preparing terminal bis-aminopropyl-terminated polydimethylsiloxane was performed as follows. 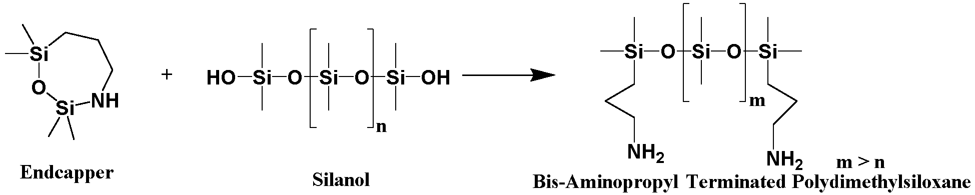 To a 20-mL vial, the following starting materials were charged: a bis-silanol-terminated polydimethylsiloxane and 1,1,3,3-tetramethyl-2-oxa-7-aza-1,3-disilacycloheptane. The resulting mixture was mixed at the reaction temperature until homogeneous. The resulting product was a bis-aminopropyl-terminated polydimethylsiloxane. The reaction progress was monitored using ²⁹Si-NMR. The polymer was stable for at least 6 months after aging at 45°C. The selection and amount of bis-hydroxy-terminated polydimethylsiloxane (Silanol), the amount of 1,1,3,3-tetramethyl-2-oxa-7-aza-1,3-disilacycloheptane (Endcapper), reaction conditions, and results are shown below in Table X.

**Table X - Bis-Aminopropyl-Terminated Polydimethylsiloxanes (Product) Prepared by the General Procedure of Reference Example VII**

| | Silanol viscosity (mPa·s) | wt % | | Reacti on temp (°C) | Reacti on time (h) | Product viscosity (mPa·s) | Capping efficien cy (%) |
|---|---|---|---|---|---|---|---|
| Sample | | Silan ol | Endcapp er | | | | |
| VIII-a | 20-50 | 71.41 | 28.59 | RT | 6-12 | 8-20 | 100 |
| VIII-b | 20-50 | 71.56 | 28.44 | 90 | 3 | 8-20 | 100 |
| VIII-c | 70-100 | 88.94 | 11.06 | 90 | 8 | 70-100 | 100 |
| VIII-d | 700-800 | 97.44 | 2.56 | 110 | 9 | 700-900 | 90 |
| Prophet ic VIIIe | 2000-2700 | 98.18 | 1.82 | RT | 72 | 2000-2700 | 100 |
| Prophet ic VIII-g | 2000-2700 | 98.18 | 1.82 | 45 | 72 | 2000-2700 | 100 |
| VIII-h | 13000-16000 | 99.05 | 0.95 | 110 | 6-8 | 13000-16000 | 100 |
| VIII-p | 700-800 | 97.77 | 2.23 | 150 | 4 | 700-800 | 100 |
| VIII-q | 700-800 | 97.19 | 2.81 | 90 | 10 | 700-800 | 100 |
| VIII-r | 2000-2700 | 98.27 | 1.73 | 90 | 11 | 2000-2700 | 100 |
| Prophet ic VII-s | 330000-350000 | 99.69 | 0.31 | 145 | 8 | 340000-360000 | 100 |
| VIII-t | 2000-2700 | 98.40 | 1.60 | 110 | 5 | 2000-2700 | 100 |

| | | | | | | | |
|---|---|---|---|---|---|---|---|
| *capping efficiency was analyzed by ²⁹Si-NMR | | | | | | | |

### INDUSTRIAL APPLICABILITY

Problems to be Addressed: Without wishing to be bound by theory, it is thought that in a process for making a reaction product comprising a cyclic siloxazane, when both hydrosilylation and dehydrocoupling reactions occur with an allyl-functional amine, the hydrosilylation reaction is inhibited. The inhibition of one reaction can result in excessive build-up of both silicon bonded hydrogen and allyl groups. As the primary amine concentration reduces due to dehydrocoupling, it is thought that a runaway reaction can occur due to hydrosilylation reaction acceleration. Additionally, it is further thought that when producing cyclic siloxazanes, high boiling oligomers are formed due to multiple reactive sites on the SiH-terminated siloxane oligomer. Furthermore, hydrolyzable allyl-functional amine can be attached to close boiling intermediates, resulting in potentially toxic amines being formed when the resulting reaction product is exposed to air or moisture.

Hydrosilylation reaction is known to be inhibited by primary amines. The inventors found that the hydrosilylation actually slows to almost no reaction as long as there is available SiH-terminated siloxane oligomer available for dehydrocoupling, thereby making it impracticable to feed the SiH-terminated siloxane oligomer continuously and slowly to eliminate the buildup of SiH and allyl groups in one reactor. I.e., it is thought that when the SiH-terminated siloxane oligomer described herein is fed into a reactor containing the allyl-functional amine and platinum catalyst, only one end dehydrocouples, so the SiH will build up because the other end SiH will not dehydrocouple.

Solutions: The working examples (W) above showed that cyclic siloxazanes can be prepared efficiently by the process described herein. By intermittent feed of the SiH-terminated siloxane oligomer, the problem of SiH buildup to dangerous levels can be prevented. Furthermore, using the process described herein, yield of the cyclic siloxazane can be improved by reactive distillation under the conditions described herein by eliminating loss of product in the forecut of the distillation.

The cyclic siloxazanes can be used as capping agents for silanol-functional organosilicon compounds including silanol-functional polyorganosiloxanes, such as silanol-terminated polydiorganosiloxanes. Polydiorganosiloxanes with terminal amino-functional groups can be prepared, and these polydiorganosiloxanes may have improved stability over amino-functional siloxanes prepared by conventional methods (e.g., as disclosed in U.S. Patent 7,238,768) as evidenced by, for example, Example XII described above, showing aminopropyl-terminated polydimethylsiloxanes prepared as described herein have low ammonia concentration after aging both at RT and 45°C, and Example XIII showing that viscosity of aminopropyl-terminated polydimethylsiloxanes prepared as described herein remains constant after aging both at RT and 45°C.

### DEFINITIONS AND USAGE OF TERMS

The abbreviations used herein have the definitions in Table 8.

**Table 8 - Abbreviations**

| Abbreviation | Definition |
|---|---|
| acac | acetylacetate |
| °C | degrees Celsius |
| cm | centimeters |
| DP | degree of polymerization |
| D unit | a siloxane unit of formula (Me₂SiO_{2/2}) |
| D^{Vi} unit | a siloxane unit of formula (MeViSiO_{2/2}) |
| Et | ethyl |
| FTIR | Fourier Transform Infra Red |
| g | grams |
| GC | gas chromatograph |
| g/mol | grams per mole |
| GPC | gel permeation chromatography |
| h | hours |
| in Hg | inches of mercury |
| L | liters |
| M | molar |
| Me | methyl |
| mL | milliliters |
| M^{me3+NH2} unit | a siloxane unit of formula ([NH₂CH₂CH₂CH₂]Me₂SiO_{1/2}) |
| min | minutes |
| mL | milliliters |
| mmHg | millimeters of mercury |
| mmol | millimoles |
| Mn | number average molecular weight measured by GPC |
| mPa·s | milliPascal·seconds |
| M^{Vi} unit | a siloxane unit of formula (Me₂ViSiO_{1/2}) |
| Mw | weight average molecular weight measured by GPC |
| NMR | nuclear magnetic resonance |
| Ph | phenyl |
| PTFE | polytetrafluoroethylene |
| Q unit | a siloxane unit of formula (SiO_{4/2}) |
| RPM | revolutions per minute |
| RT | ambient room temperature of 20 °C to 25 °C |
| (SiMeViO)₄ | tetramethyltetravinylcyclotetrasiloxane |
| TMDSO | 1,1,3,3-tetramethyldisiloxane |
| T^{Ph} unit | a siloxane unit of formula (PhSiO_{3/2}) |
| Vi | vinyl |

The following test methods were used to measure properties of the starting materials herein.

Viscosity of each polydiorganosiloxane having viscosities up to 250,000 mPa·s (such as bis-hydroxyl-terminated polydiorganosiloxanes for starting material D-II) and/or amino-functional polydiorganosiloxanes prepared therewith) was measured at 0.1 to 50 RPM on a Brookfield DV-III cone & plate viscometer with #CP-52 spindle. One skilled in the art would recognize that rotation rate decreases as viscosity increases and would be able to select the appropriate rotation rate when using this test method to measure viscosity.

The Williams plasticity number of any polyorganosiloxane considered as a gum may be determined by the American Society for Testing and Materials (ASTM) test method 926D as described in U.S. Patent 8,877,293 B2.

²⁹Si NMR and ¹³C NMR spectroscopy can be used to quantify the hydrocarbon group (e.g., R group, such as R⁸ and/or R⁹ described above) content in a polydiorganosiloxane. A ²⁹Si NMR spectrum should be acquired using the methodology outlined by Taylor et. al. in Chapter 12 of The Analytical Chemistry of Silicones, ed. A. Lee Smith, Vol. 112 in Chemical Analysis, John Wiley & Sons, Inc. (1991), pages 347-417, and section 5.5.3.1. In this chapter, the authors discuss general parameters unique to acquiring quantitative NMR spectra from Silicon nuclei. Each NMR spectrometer is different with respect to the electronic components, capabilities, sensitivity, frequency and operating procedures. One should consult instrument manuals for the spectrometer to be used in order to tune, shim and calibrate a pulse sequences sufficient for quantitative 1D measurement of ²⁹Si and ¹³C nuclei in a sample.

A key output of a NMR analysis is the NMR spectrum. Without standards, it is recommended that the signal to noise ratio of signal height to average baseline noise be no less than 10:1 to be considered quantitative. A properly acquired and processed NMR spectrum results in signals that can be integrated using any commercially available NMR processing software package.

From these integrations, the weight percent of total R group content can be calculated from the ²⁹Si NMR spectrum according to the following: (I^{M}) ·(U^{M}) = G^{M}; (I^{M(R)}) · (U^{M(R')}) = G^{M(R)}; (I^{D}) · (U^{D}) = G^{D}; (I^{D(R)}) · (U^{D(R)}) = G^{D(R)}; U^{R} / U^{M(R)} = Y^{R'}; U^{R} / U^{D(R)} = Y^{R"} ; Y^{R"} . [G^{M(R)} / (G^{M} + G^{M(R)} + G^{D} + G^{D(R)}) · 100] = W^{R'}; Y^{R‴} · [G^{D(R)} / (G^{M} + G^{M(R)} + G^{D} + G^{D(R)}) · 100] = W^{R"}; and W^{R'} + W^{R"} = TOTAL W^{R}; where I is the integrated signal of the indicated siloxy group; U is the unit molecular weight of the indicated siloxy group; G is a placeholder representing the grams unit; W is the weight percent of the indicated siloxy unit; Y is a ratio value for the specified siloxy unit; R is as described above; R' represents R groups only from M(R); and R" represents R groups only from D(R) groups.
- 1H-NMR and ¹⁹⁵Pt NMR were evaluated using the following instrument and solvent: a Varian 400 MHz Mercury spectrometer is used. C6D6 is used as the solvent.
- Gas Chromatography-Flame Ionization Detector (GC-FID) conditions: a capillary column with 30 meters length, 0.32 mm inner diameter, and containing a 0.25 µm thick stationary phase in the form of a coating on the inner surface of the capillary column, wherein the stationary phase was composed of phenyl methyl siloxane. Carrier gas is helium gas used at a flow rate of 105 mL per minute. GC instrument is an Agilent model 7890A gas chromatograph. Inlet temperature is 200 °C. GC experiment temperature profile consist of soaking (holding) at 50° C. for 2 minutes, ramping temperature up at a rate of 15° C./minute to 250° C., and then soaking (holding) at 250° C. for 10 minutes.
- GC-MS instrument and conditions: Sample is analyzed by electron impact ionization and chemical ionization gas chromatography-mass spectrometry (EI GC-MS and CI GC-MS). Agilent 6890 GC conditions include a DB-1 column with 30 meters (m) x 0.25 millimeter (mm) x 0.50 micrometer (µm) film configuration, an inlet temperature of 200 °C, an oven program of soaking at 50° C. for 2 minutes, ramping at 15° C./minute to 250° C., and soaking at 250° C. for 10 minutes. Helium carrier gas flowing at constant flow of at 1 mL/minute and a 50:1 split injection. Agilent 5973 MSD conditions include a MS scan range from 15 to 800 Daltons, an EI ionization and CI ionization using a custom CI gas mix of 5% NH₃ and 95% CH₄.

Number average molecular weight of polyorganosiloxane starting materials (e.g., starting material D), and the amino-functional polyorganosiloxane product described herein) may be measured by GPC according to the test method in U.S. Patent 9,593,209, Reference Example 1 at col. 31. Transmittance of the amino-functional polydimethylsiloxanes prepared in the examples described above was measured with reference to water using a Spectronic 21: Milton Rov.

## Claims

1. A process for preparing a cyclic siloxazane comprising:
1) combining starting materials comprising
a) an allyl-functional amine,
b) a platinum catalyst capable of catalyzing hydrosilylation reaction,
c) a hydrosilylation reaction promoter of formula 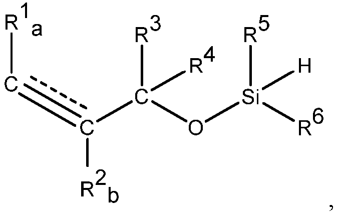 where - - - - - represents a bond selected from the group consisting of a double bond and a triple bond, subscript a is 1 or 2, subscript b is 0 or 1, with the provisos that when - - - - - is a double bond, then a = 2 and b = 1, and when - - - - - is a triple bond, then a = 1 and b = 0; each R¹ is independently selected from the group consisting of hydrogen, an alkyl group of 1 to 15 carbon atoms, and an aryl group of 6 to 20 carbon atoms; R² is selected from the group consisting of hydrogen, an alkyl group of 1 to 15 carbon atoms, and an aryl group of 6 to 20 carbon atoms; R³ is selected from the group consisting of hydrogen, an alkyl group of 1 to 15 carbon atoms, and an aryl group of 6 to 20 carbon atoms, and R⁴ is selected from the group consisting of hydrogen, an alkyl group of 1 to 15 carbon atoms, and an aryl group of 6 to 20 carbon atoms; R⁵ is an independently selected monovalent hydrocarbon group of 1 to 15 carbon atoms; and R⁶ is an independently selected monovalent hydrocarbon group of 1 to 15 carbon atoms;
thereby forming a reaction mixture; and thereafter
2) intermittently adding to the reaction mixture:
d) an SiH-terminated siloxane oligomer of formula 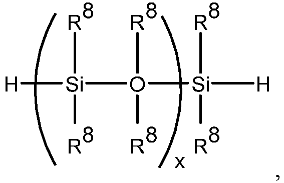 where each R⁸ is an independently selected monovalent hydrocarbon group of 1 to 18 carbon atoms 1 and subscript x is 1 or 2; thereby preparing a reaction product comprising the cyclic siloxazane and a by-product comprising hydrogen (H₂);
optionally 3) removing at least some of the hydrogen during step 2);
optionally 4) heating the reaction mixture at a temperature of 110 °C to 150 °C for 1 to 6 hours after step 2); and
optionally 5) performing a reactive distillation of the reaction product, thereby purifying the cyclic siloxazane.

2. A process for preparing a cyclic siloxazane comprising:
1) combining starting materials comprising
a) an allyl-functional amine,
b) a catalyst capable of catalyzing hydrosilylation reaction,
c) a hydrosilylation reaction promoter of formula 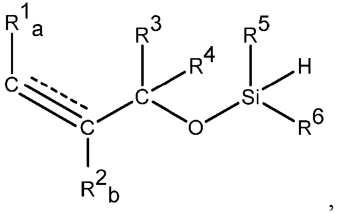 where - - - - - represents a bond selected from the group consisting of a double bond and a triple bond, subscript a is 1 or 2, subscript b is 0 or 1, with the provisos that when - - - - - is a double bond, then a = 2 and b = 1, and when - - - - - is a triple bond, then a = 1 and b = 0; each R¹ is independently selected from the group consisting of hydrogen, an alkyl group of 1 to 15 carbon atoms, and an aryl group of 6 to 20 carbon atoms; R² is selected from the group consisting of hydrogen, an alkyl group of 1 to 15 carbon atoms, and an aryl group of 6 to 20 carbon atoms; R³ is selected from the group consisting of hydrogen, an alkyl group of 1 to 15 carbon atoms, and an aryl group of 6 to 20 carbon atoms, and R⁴ is selected from the group consisting of hydrogen, an alkyl group of 1 to 15 carbon atoms, and an aryl group of 6 to 20 carbon atoms; R⁵ is an independently selected monovalent hydrocarbon group of 1 to 15 carbon atoms; and R⁶ is an independently selected monovalent hydrocarbon group of 1 to 15 carbon atoms;
thereby forming a reaction mixture; and thereafter
2) adding to the reaction mixture:
d) an SiH-terminated siloxane oligomer of formula 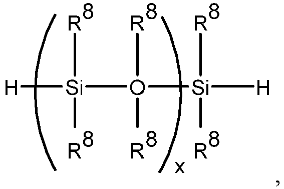 where each R⁸ is an independently selected monovalent hydrocarbon group of 1 to 18 carbon atoms and subscript x is 1 or 2; thereby preparing a reaction product comprising the cyclic siloxazane and a by-product comprising hydrogen;
optionally 3) removing at least some of the hydrogen during step 2);
optionally 4) heating the reaction mixture at a temperature of 110 °C to 150 °C for 1 to 6 hours after step 2); and
5) performing a reactive distillation of the reaction product, thereby purifying the cyclic siloxazane.

3. The process of claim 1 or claim 2, where starting material a), the allyl-functional amine, has formula 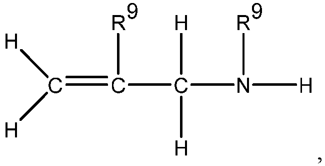 where each R⁹ is independently selected from the group consisting of hydrogen and an alkyl group of 1 to 15 carbon atoms.

4. The process of claim 3, where the allyl-functional amine is selected from the group consisting of 2-methyl-allylamine and allylamine.

5. The process of any one of claims 1 to 4, where starting material c), the promoter, is selected from the group consisting of: 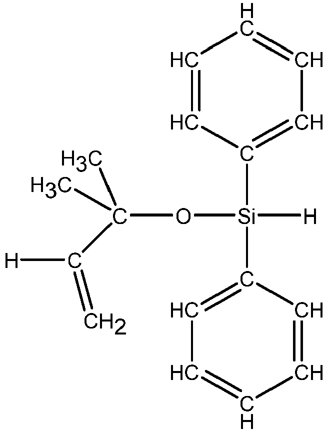 (1,1, -dimethyl-2-propenyl)oxydiphenylsilane, 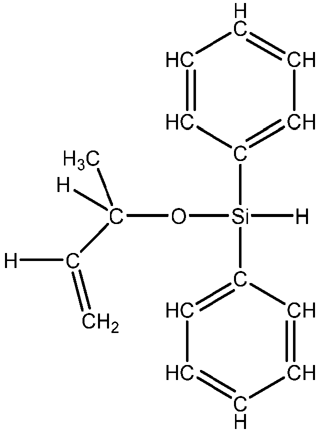 (1-methyl-2-propenyl)oxydiphenylsilane, 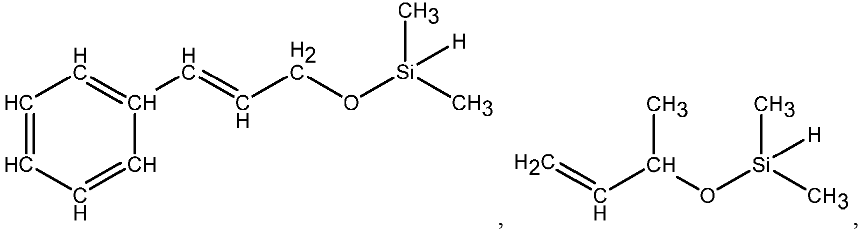 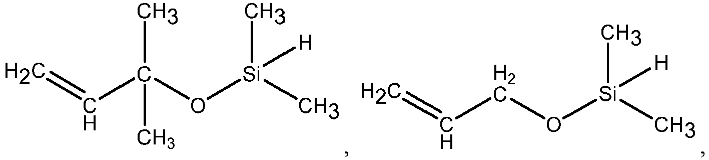 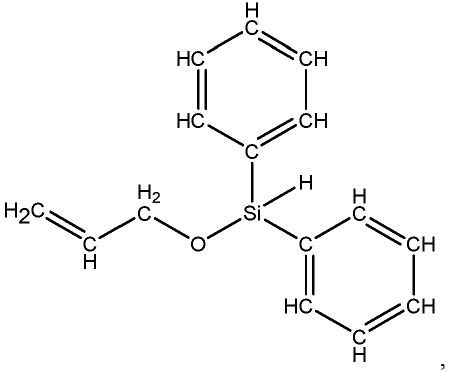 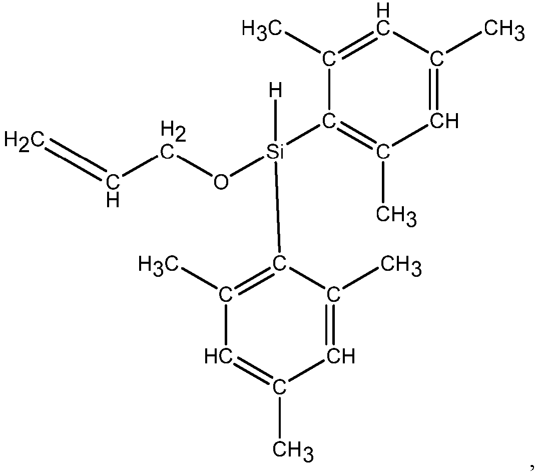 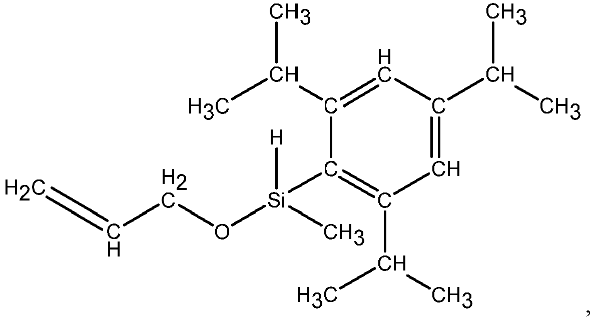 and

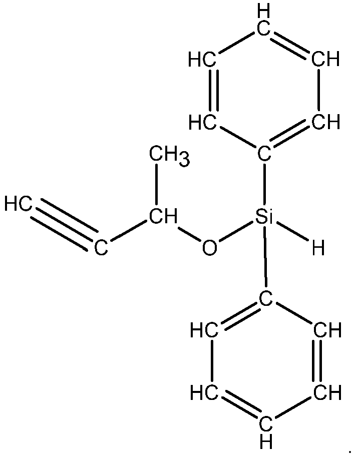

6. The process of any one of claims 1 to 5, where starting material d), the SiH-terminated siloxane oligomer, is selected from the group consisting of 1,1,3,3-tetramethyldisiloxane and 1,1,3,3,5,5-hexamethyltrisiloxane.

7. The process of any one of claims 1 to 6, where starting material e), a solvent, is added during and/or after step 1).

8. The process of any one of claims 1 to 7, where combining in step 1) is performed by mixing starting materials a), b), and c); and heating the reaction mixture to a temperature up to 110°C.

9. The process of any one of claims 1 to 8, where starting material c), the hydrosilylation reaction promoter, and starting material b), the platinum catalyst, are combined before combining starting material a), the allyl-functional amine.

10. The process of any one of the preceding claims, where step 2) is performed at a temperature of 20 °C to 200 °C and wherein adding d) the SiH-terminated siloxane oligomer in step 2) is performed by a process comprising
i) feeding to the reaction mixture a first aliquot of d) the SiH-terminated siloxane oligomer sufficient to provide a first SiH concentration of 100 ppm to 1000 ppm, based on weight of the reaction mixture;
ii) stopping feeding d) the SiH-terminated siloxane oligomer until a second SiH concentration less than the first SiH concentration is measured;
iii) feeding to the reaction mixture a second aliquot of d) the SiH-terminated siloxane oligomer sufficient to provide a third SiH concentration in the reaction mixture which is higher than the second concentration, where the third SiH concentration is 100 ppm to 1000 ppm, based on weight of the reaction mixture; and
iv) repeating steps ii) and iii) one or more times until adding d) the SiH-terminated siloxane oligomer is complete.

11. The process of any one of claims 1 to 10, where step 3) is present, and step 3) comprises purging with an inert gas.

12. The process of any one of claims 1 to 11, where step 5) is performed in a distillation apparatus comprising a distillation column having a top and a bottom, with at least 5 theoretical trays therebetween, a reboiler coupled to the bottom, and a reflux condenser coupled to the top; and the process comprises
i) combining a redistribution catalyst and the reaction product in the reboiler, thereby forming a redistribution reaction mixture;
ii) heating the redistribution reaction mixture to reflux in the distillation column and collecting an overheads cut comprising allyl-functional amine at a reflux ratio of 5 to 200 via the reflux condenser;
iii) distilling the redistribution reaction mixture at a reflux ratio of 40 to 200 for 1 hour to 48 hours; and thereafter
iv) collecting the cyclic siloxazane as an overheads cut; and
optionally v) recycling the overheads cut collected in step ii) and/or an overheads cut collected in step iii) when repeating step i).

13. A process for preparing an amino-functional organosilicon compound comprising:
pre-1) preparing A) a cyclic siloxazane by practicing a process comprising:
1) combining starting materials comprising
a) an allyl-functional amine,
b) a platinum catalyst capable of catalyzing hydrosilylation reaction,
optionally c) a hydrosilylation reaction promoter of formula 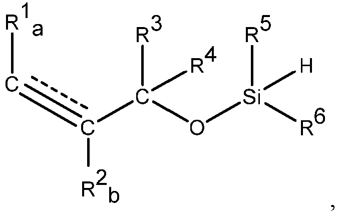 where - - - - - represents a bond selected from the group consisting of a double bond and a triple bond, subscript a is 1 or 2, subscript b is 0 or 1, with the provisos that when - - - - - is a double bond, then a = 2 and b = 1, and when - - - - - is a triple bond, then a = 1 and b = 0; each R¹ is independently selected from the group consisting of hydrogen, an alkyl group of 1 to 15 carbon atoms, and an aryl group of 6 to 20 carbon atoms; R² is selected from the group consisting of hydrogen, an alkyl group of 1 to 15 carbon atoms, and an aryl group of 6 to 20 carbon atoms; R³ is selected from the group consisting of hydrogen, an alkyl group of 1 to 15 carbon atoms, and an aryl group of 6 to 20 carbon atoms, and R⁴ is selected from the group consisting of hydrogen, an alkyl group of 1 to 15 carbon atoms, and an aryl group of 6 to 20 carbon atoms; R⁵ is an independently selected monovalent hydrocarbon group of 1 to 15 carbon atoms; and R⁶ is an independently selected monovalent hydrocarbon group of 1 to 15 carbon atoms;
thereby forming a reaction mixture; and thereafter
2) intermittently adding to the reaction mixture:
d) an SiH-terminated siloxane oligomer of formula 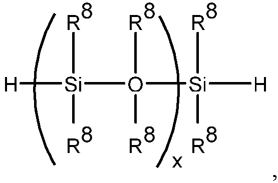 where each R⁸ is an independently selected monovalent hydrocarbon group of 1 to 18 carbon atoms and subscript x is 1 or 2; thereby preparing a reaction product comprising the cyclic polysiloxazane and a by-product comprising hydrogen (H₂);
optionally 3) removing at least some of the hydrogen during step 2);
optionally 4) heating the reaction mixture at a temperature of 110 °C to 150 °C for 1 to 6 hours after step 2); and
optionally 5) performing a reactive distillation of the reaction product, thereby purifying the cyclic siloxazane;
1) combining starting materials comprising:
A) the cyclic siloxazane, and
D) a silanol-functional organosilicon compound; thereby preparing a reaction product comprising the amino-functional organosilicon compound;
optionally 2) recovering the amino-functional organosilicon compound; and
optionally, before step 2), adding to the reaction mixture E) an acid precatalyst.

14. A process for preparing an α-alkoxy-ω-amino-functional polysiloxane comprising:
pre-I) preparing A) a cyclic siloxazane by practicing the process of any one of claims 1 to 12;
I) combining starting materials comprising
A) the cyclic siloxazane, and
B) an alcohol of formula R¹⁰OH, where R¹⁰ is an alkyl group of 1 to 8 carbon atoms; thereby preparing a reaction product comprising C) the α-alkoxy-ω-amino-functional polysiloxane of formula 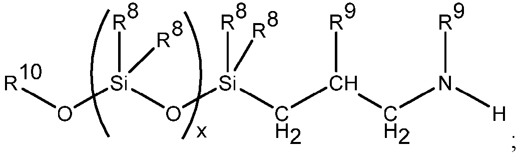
optionally II) purifying the reaction product to recover C) the α-alkoxy-ω-amino-functional polysiloxane.

## Patentansprüche

1. Prozess zum Herstellen eines cyclischen Siloxazans, umfassend:
1) Kombinieren von Ausgangsmaterialien, umfassend
a) ein Amin mit Allylfunktion,
b) einen Platinkatalysator, der die Hydrosilylierungsreaktion katalysieren kann,
c) einen Hydrosilylierungsreaktionspromotor der Formel 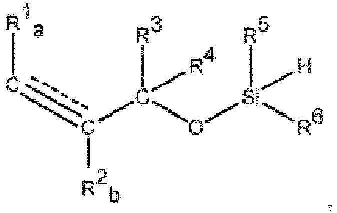 worin - - - - - eine Bindung darstellt, die aus der Gruppe ausgewählt ist, bestehend aus einer Doppelbindung und einer Dreifachbindung, der Index a 1 oder 2 ist, der Index b 0 oder 1 ist, mit der Maßgabe, dass, wenn - - - - - eine Doppelbindung ist, dann a = 2 und b = 1 ist, und wenn - - - - - eine Dreifachbindung ist, dann a = 1 und b = 0 ist; jedes R¹ unabhängig voneinander aus der Gruppe ausgewählt ist, bestehend aus einer Alkylgruppe aus 1 bis 15 Kohlenstoffatomen und einer Arylgruppe aus 6 bis 20 Kohlenstoffatomen; R² aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen; R³ aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen, und R⁴ aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen; R⁵ eine unabhängig ausgewählte einwertige Kohlenwasserstoffgruppe aus 1 bis 15 Kohlenstoffatomen ist; R⁶ eine unabhängig ausgewählte einwertige Kohlenwasserstoffgruppe aus 1 bis 15 Kohlenstoffatomen ist;
wodurch ein Reaktionsgemisch gebildet wird; und danach
2) intermittierendes Zugeben zum Reaktionsgemisch von:
d), einem SiH-terminierten Siloxanoligomer der Formel 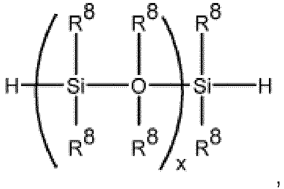 worin jedes R⁸ eine unabhängig ausgewählte einwertige Kohlenwasserstoffgruppe aus 1 bis 18 Kohlenstoffatomen ist und der Index x 1 oder 2 ist; wodurch ein Reaktionsprodukt, das das cyclische Siloxazan umfasst, und ein Nebenprodukt, das Wasserstoff (H₂) umfasst, hergestellt wird;
optional 3) Entfernen von mindestens einem Teil des Wasserstoffs während Schritt 2);
optional 4) Erhitzen des Reaktionsgemisches auf eine Temperatur von 110 °C bis 150 °C für 1 bis 6 Stunden nach Schritt 2) und
optional 5) Durchführen einer Reaktivdestillation des Reaktionsprodukts und dadurch Aufreinigen des cyclischen Siloxazans.

2. Prozess zum Herstellen eines cyclischen Siloxazans, umfassend:
1) Kombinieren von Ausgangsmaterialien, umfassend
a) ein Amin mit Allylfunktion,
b) einen Katalysator, der die Hydrosilylierungsreaktion katalysieren kann,
c) einen Hydrosilylierungsreaktionspromotor der Formel 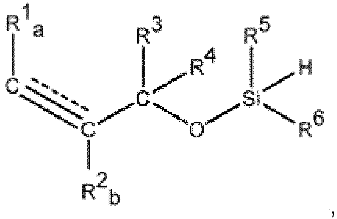 worin - - - - - eine Bindung darstellt, die aus der Gruppe ausgewählt ist, bestehend aus einer Doppelbindung und einer Dreifachbindung, der Index a 1 oder 2 ist, der Index b 0 oder 1 ist, mit der Maßgabe, dass, wenn - - - - - eine Doppelbindung ist, dann a = 2 und b = 1 ist, und wenn - - - - - eine Dreifachbindung ist, dann a = 1 und b = 0 ist; jedes R¹ unabhängig voneinander aus der Gruppe ausgewählt ist, bestehend aus einer Alkylgruppe aus 1 bis 15 Kohlenstoffatomen und einer Arylgruppe aus 6 bis 20 Kohlenstoffatomen; R² aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen; R³ aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen, und R⁴ aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen; R⁵ eine unabhängig ausgewählte einwertige Kohlenwasserstoffgruppe aus 1 bis 15 Kohlenstoffatomen ist; R⁶ eine unabhängig ausgewählte einwertige Kohlenwasserstoffgruppe aus 1 bis 15 Kohlenstoffatomen ist;
wodurch ein Reaktionsgemisch gebildet wird; und danach
2) Zugeben zum Reaktionsgemisch von:
d), einem SiH-terminierten Siloxanoligomer der Formel 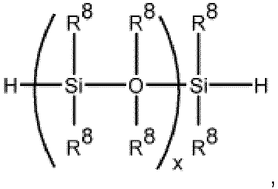 worin jedes R⁸ eine unabhängig ausgewählte einwertige Kohlenwasserstoffgruppe aus 1 bis 18 Kohlenstoffatomen ist und der Index x 1 oder 2 ist; wodurch ein Reaktionsprodukt, das das cyclische Siloxazan umfasst, und ein Nebenprodukt, das Wasserstoff umfasst, hergestellt wird;
optional 3) Entfernen von mindestens einem Teil des Wasserstoffs während Schritt 2);
optional 4) Erhitzen des Reaktionsgemisches auf eine Temperatur von 110 °C bis 150 °C für 1 bis 6 Stunden nach Schritt 2) und
5) Durchführen einer Reaktivdestillation des Reaktionsprodukts und dadurch Aufreinigen des cyclischen Siloxazans.

3. Prozess nach Anspruch 1 oder Anspruch 2, wobei das Ausgangsmaterial a), das Amin mit Allylfunktion, die Formel 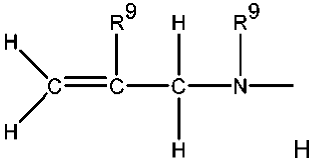 aufweist, worin jedes R⁹ unabhängig voneinander aus der Gruppe ausgewählt ist, bestehend aus Wasserstoff und einer Alkylgruppe aus 1 bis 15 Kohlenstoffatomen.

4. Prozess nach Anspruch 3, wobei das Amin mit Allylfunktion aus der Gruppe ausgewählt ist, bestehend aus 2-Methylallylamin und Allylamin.

5. Prozess nach einem der Ansprüche 1 bis 4, wobei das Ausgangsmaterial c), der Promotor, aus der Gruppe ausgewählt ist, bestehend aus: 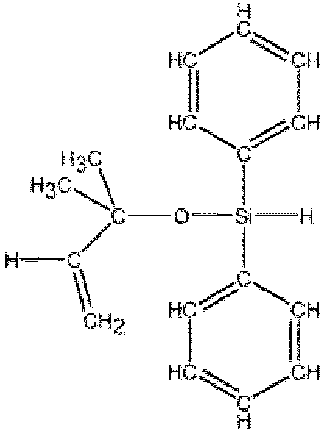 (1,1,-Dimethyl-2-propenyl)oxydiphenylsilan, 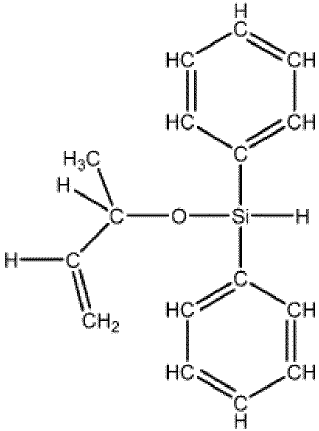 (1-Methyl-2-propenyl)oxydiphenylsilan 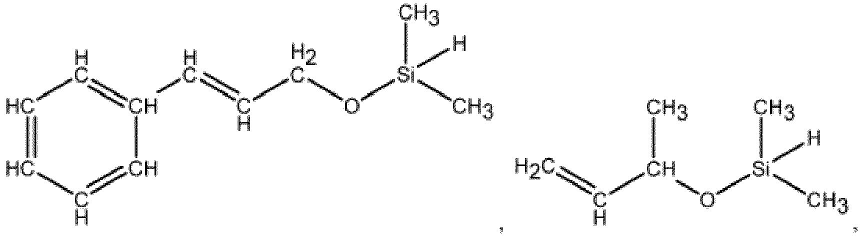 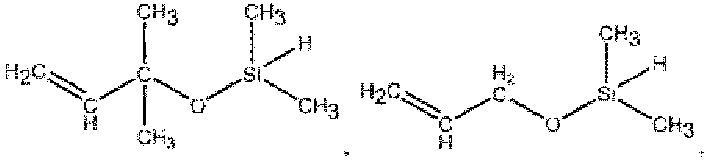 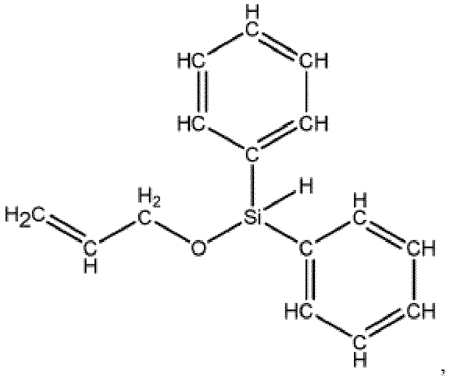 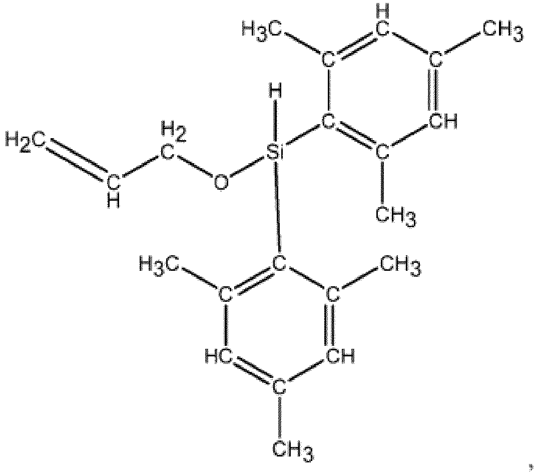 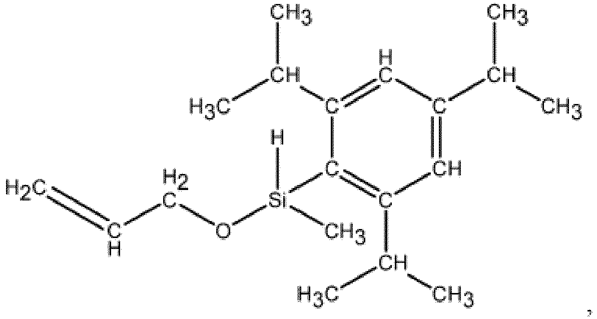 und

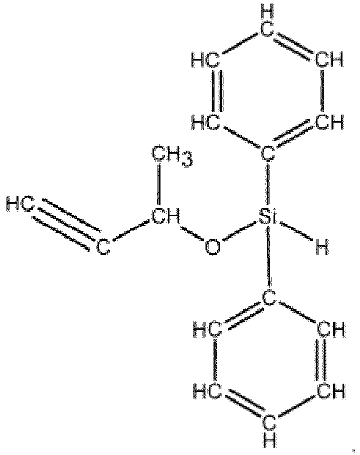

6. Prozess nach einem der Ansprüche 1 bis 5, wobei das Ausgangsmaterial d), das SiH-terminierte Siloxanoligomer, aus der Gruppe ausgewählt ist, bestehend aus 1,1,3,3-Tetramethyldisiloxan und 1,1,3,3,5,5-Hexamethyltrisiloxan.

7. Prozess nach einem der Ansprüche 1 bis 6, wobei das Ausgangsmaterial e), ein Lösungsmittel, während und/oder nach Schritt 1) zugegeben wird.

8. Prozess nach einem der Ansprüche 1 bis 7, wobei das Kombinieren in Schritt 1) durch Mischen der Ausgangsmaterialien a), b) und c) und Erhitzen des Reaktionsgemisches auf eine Temperatur von bis zu 110 °C durchgeführt wird.

9. Prozess nach einem der Ansprüche 1 bis 8, wobei das Ausgangsmaterial c), der Promotor der Hydrosilylierungsreaktion, und das Ausgangsmaterial b), der Platinkatalysator, kombiniert werden, bevor das Ausgangsmaterial a), das Amin mit Allylfunktion, kombiniert wird.

10. Prozess nach einem der vorstehenden Ansprüche, wobei Schritt 2) bei einer Temperatur von 20 °C bis 200 °C durchgeführt wird und wobei das Zugeben von d), des SiH-terminierten Siloxanoligomers, in Schritt 2) durch einen Prozess durchgeführt wird, umfassend
i) Zuführen eines ersten Aliquots von d), des SiH-terminierten Siloxanoligomers, zum Reaktionsgemisch, das ausreicht, um eine erste SiH-Konzentration von 100 ppm bis 1000 ppm, basierend auf dem Gewicht des Reaktionsgemisches, bereitzustellen;
ii) Stoppen des Zuführens von d), des SiH-terminierten Siloxanoligomers, bis eine zweite SiH-Konzentration gemessen wird, die geringer ist als die erste SiH-Konzentration;
iii) Zuführen eines zweiten Aliquots von d), des SiH-terminierten Siloxanoligomers, zum Reaktionsgemisch, das ausreicht, um eine dritte SiH-Konzentration im Reaktionsgemisch bereitzustellen, die höher ist als die zweite Konzentration, wobei die dritte SiH-Konzentration 100 ppm bis 1000 ppm, basierend auf dem Gewicht des Reaktionsgemisches, beträgt; und
iv) Wiederholen der Schritte ii) und iii) einmal oder mehrere Male, bis das Zugeben von d), des SiH-terminierten Siloxanoligomers, abgeschlossen ist.

11. Prozess nach einem der Ansprüche 1 bis 10, wobei Schritt 3) vorhanden ist und Schritt 3) das Spülen mit einem Inertgas umfasst.

12. Prozess nach einem der Ansprüche 1 bis 11, wobei Schritt 5) in einer Destillationsvorrichtung durchgeführt wird, die eine Destillationskolonne mit einem oberen und einem unteren Teil mit mindestens 5 theoretischen Böden dazwischen, einen mit dem unteren Teil verbundenen Verdampfer und einen mit dem oberen Teil verbundenen Rückflusskühler umfasst; und der Prozess umfasst
i) Kombinieren eines Umlagerungskatalysators und des Reaktionsprodukts im Verdampfer, wodurch ein Umlagerungsreaktionsgemisch gebildet wird;
ii) Erhitzen des Umlagerungsreaktionsgemisches auf Rückfluss in der Destillationskolonne und Auffangen eines Kopfprodukts, das ein Amin mit Allylfunktion umfasst, bei einem Rückflussverhältnis von 5 bis 200 über den Rückflusskühler;
iii) Destillieren des Umlagerungsreaktionsgemisches bei einem Rückflussverhältnis von 40 bis 200 für 1 Stunde bis 48 Stunden und danach
iv) Auffangen des cyclischen Siloxazans als Kopfprodukt und
optional v) Wiederverwenden des in Schritt ii) aufgefangenen Kopfprodukts und/oder eines in Schritt iii) aufgefangenen Kopfprodukts bei Wiederholung von Schritt i).

13. Prozess zum Herstellen einer Organosiliciumverbindung mit Aminfunktion, umfassend:
vor-1) Herstellen von A), eines cyclischen Siloxazans, durch Ausführen eines Prozesses, umfassend:
1) Kombinieren von Ausgangsmaterialien, umfassend
a) ein Amin mit Allylfunktion,
b) einen Platinkatalysator, der die Hydrosilylierungsreaktion katalysieren kann,
optional c) einen Hydrosilylierungsreaktionspromotor der Formel 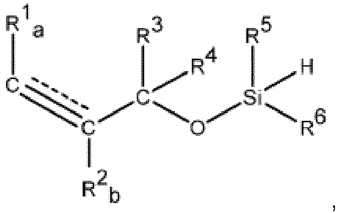 worin - - - - - eine Bindung darstellt, die aus der Gruppe ausgewählt ist, bestehend aus einer Doppelbindung und einer Dreifachbindung, der Index a 1 oder 2 ist, der Index b 0 oder 1 ist, mit der Maßgabe, dass, wenn - - - - - eine Doppelbindung ist, dann a = 2 und b = 1 ist, und wenn - - - - - eine Dreifachbindung ist, dann a = 1 und b = 0 ist; jedes R¹ unabhängig voneinander aus der Gruppe ausgewählt ist, bestehend aus einer Alkylgruppe aus 1 bis 15 Kohlenstoffatomen und einer Arylgruppe aus 6 bis 20 Kohlenstoffatomen; R² aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen; R³ aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen, und R⁴ aus der Gruppe ausgewählt ist, bestehend aus Wasserstoff, einer Alkylgruppe aus 1 bis 15 Kohlenstoffatomen und einer Arylgruppe aus 6 bis 20 Kohlenstoffatomen; R⁵ eine unabhängig ausgewählte einwertige Kohlenwasserstoffgruppe aus 1 bis 15 Kohlenstoffatomen ist; R⁶ eine unabhängig ausgewählte einwertige Kohlenwasserstoffgruppe aus 1 bis 15 Kohlenstoffatomen ist;
wodurch ein Reaktionsgemisch gebildet wird; und danach
2) intermittierendes Zugeben zum Reaktionsgemisch von:
d), einem SiH-terminierten Siloxanoligomer der Formel 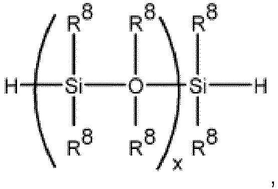 worin jedes R⁸ eine unabhängig ausgewählte einwertige Kohlenwasserstoffgruppe aus 1 bis 18 Kohlenstoffatomen ist und der Index x 1 oder 2 ist; wodurch ein Reaktionsprodukt, das das cyclische Polysiloxazan umfasst, und ein Nebenprodukt, das Wasserstoff (H₂) umfasst, hergestellt wird;
optional 3) Entfernen von mindestens einem Teil des Wasserstoffs während Schritt 2);
optional 4) Erhitzen des Reaktionsgemisches auf eine Temperatur von 110 °C bis 150 °C für 1 bis 6 Stunden nach Schritt 2) und
optional 5) Durchführen einer Reaktivdestillation des Reaktionsprodukts und dadurch Aufreinigen des cyclischen Siloxazans;
1) Kombinieren von Ausgangsmaterialien, umfassend:
A) das cyclische Siloxazan und
D) eine Organosiliciumverbindung mit Silanolfunktion; wodurch ein Reaktionsprodukt, das die Organosiliciumverbindung mit Aminofunktion umfasst, hergestellt wird;
optional 2) Rückgewinnen der Organosiliciumverbindung mit Aminofunktion und optional vor Schritt 2), Zugeben eines sauren Präkatalysators zu dem Reaktionsgemisch E).

14. Prozess zum Herstellen eines Polysiloxans mit α-Alkoxy-ω-aminoFunktion, umfassend:
vor-I) Herstellen von A), einem cyclischen Siloxazan, durch Durchführen des Prozesses nach einem der Ansprüche 1 bis 12;
I) Kombinieren von Ausgangsmaterialien, umfassend
A) das cyclische Siloxazan und
B) einen Alkohol der Formel R¹⁰OH, wobei R¹⁰ eine Alkylgruppe aus 1 bis 8 Kohlenstoffatomen ist; wodurch ein Reaktionsprodukt hergestellt wird, umfassend
C), das Polysiloxan mit α-Alkoxy-ω-amino-Funktion der Formel 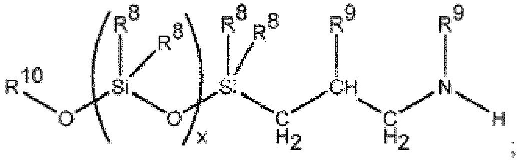
optional II) Reinigen des Reaktionsprodukts zur Rückgewinnung von C), des Polysiloxans mit α-Alkoxy-ω-amino-Funktion.

## Revendications

1. Procédé de préparation d'un siloxazane cyclique comprenant :
1) la combinaison de matières de départ comprenant
a) une amine à fonctionnalité allyle,
b) un catalyseur de platine capable de catalyser une réaction d'hydrosilylation,
c) un promoteur de réaction d'hydrosilylation de formule 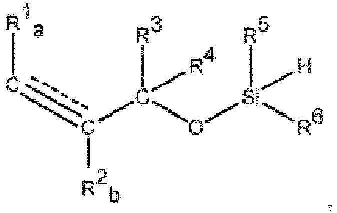 où - - - - - représente une liaison choisie dans le groupe constitué d'une double liaison et d'une triple liaison, l'indice a vaut 1 ou 2, l'indice b vaut 0 ou 1, à condition que, lorsque - - - - - est une double liaison, alors a = 2 et b = 1, et lorsque - - - - - est une triple liaison, alors a = 1 et b = 0 ; chaque R¹ est choisi indépendamment dans le groupe constitué d'hydrogène, un groupe alkyle de 1 à 15 atomes de carbone, et un groupe aryle de 6 à 20 atomes de carbone ; R² est choisi dans le groupe constitué d'hydrogène, un groupe alkyle de 1 à 15 atomes de carbone, et un groupe aryle de 6 à 20 atomes de carbone ; R³ est choisi dans le groupe constitué d'hydrogène, un groupe alkyle de 1 à 15 atomes de carbone, et un groupe aryle de 6 à 20 atomes de carbone, et R⁴ est choisi dans le groupe constitué d'hydrogène, un groupe alkyle de 1 à 15 atomes de carbone, et un groupe aryle de 6 à 20 atomes de carbone ; R⁵est un groupe hydrocarboné monovalent de 1 à 15 atomes de carbone, choisi indépendamment ; et R⁶ est un groupe hydrocarboné monovalent de 1 à 15 atomes de carbone, choisi indépendamment ;
permettant ainsi de former un mélange réactionnel ; et par la suite
2) l'ajout par intermittence au mélange réactionnel de :
d) un oligomère de siloxane à terminaison SiH de formule 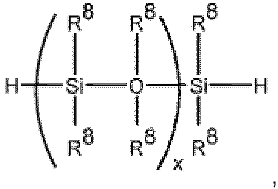 où chaque R⁸ est un groupe hydrocarboné monovalent de 1 à 18 atomes de carbone, choisi indépendamment, et l'indice x vaut 1 ou 2 ; permettant ainsi de préparer un produit de réaction comprenant le siloxazane cyclique et un sous-produit comprenant de l'hydrogène (H₂) ;
facultativement 3) l'élimination d'au moins une partie de l'hydrogène pendant l'étape 2) ;
facultativement 4) le chauffage du mélange réactionnel à une température de 110 °C à 150 °C pendant 1 à 6 heures après l'étape 2) ; et
facultativement 5) la réalisation d'une distillation réactive du produit de réaction, permettant ainsi de purifier le siloxazane cyclique.

2. Procédé de préparation d'un siloxazane cyclique comprenant :
1) la combinaison de matières de départ comprenant
a) une amine à fonctionnalité allyle,
b) un catalyseur capable de catalyser une réaction d'hydrosilylation,
c) un promoteur de réaction d'hydrosilylation de formule 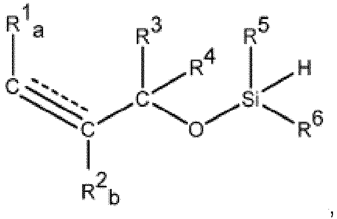 où - - - - - représente une liaison choisie dans le groupe constitué d'une double liaison et d'une triple liaison, l'indice a vaut 1 ou 2, l'indice b vaut 0 ou 1, à condition que, lorsque - - - - - est une double liaison, alors a = 2 et b = 1, et lorsque - - - - - est une triple liaison, alors a = 1 et b = 0 ; chaque R¹ est choisi indépendamment dans le groupe constitué d'hydrogène, un groupe alkyle de 1 à 15 atomes de carbone, et un groupe aryle de 6 à 20 atomes de carbone ; R² est choisi dans le groupe constitué d'hydrogène, un groupe alkyle de 1 à 15 atomes de carbone, et un groupe aryle de 6 à 20 atomes de carbone ; R³ est choisi dans le groupe constitué d'hydrogène, un groupe alkyle de 1 à 15 atomes de carbone, et un groupe aryle de 6 à 20 atomes de carbone, et R⁴ est choisi dans le groupe constitué d'hydrogène, un groupe alkyle de 1 à 15 atomes de carbone, et un groupe aryle de 6 à 20 atomes de carbone ; R⁵ est un groupe hydrocarboné monovalent de 1 à 15 atomes de carbone, choisi indépendamment ; et R⁶ est un groupe hydrocarboné monovalent de 1 à 15 atomes de carbone, choisi indépendamment ;
permettant ainsi de former un mélange réactionnel ; et par la suite
2) l'ajout au mélange réactionnel de :
d) un oligomère de siloxane à terminaison SiH de formule 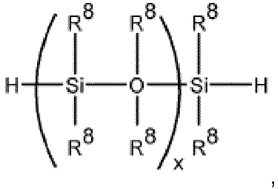 où chaque R⁸ est un groupe hydrocarboné monovalent de 1 à 18 atomes de carbone, choisi indépendamment, et l'indice x vaut 1 ou 2 ; permettant ainsi de préparer un produit de réaction comprenant le siloxazane cyclique et un sous-produit comprenant de l'hydrogène ;
facultativement 3) l'élimination d'au moins une partie de l'hydrogène pendant l'étape 2) ;
facultativement 4) le chauffage du mélange réactionnel à une température de 110 °C à 150 °C pendant 1 à 6 heures après l'étape 2) ; et
5) la réalisation d'une distillation réactive du produit de réaction, permettant ainsi de purifier le siloxazane cyclique.

3. Procédé selon la revendication 1 ou la revendication 2, dans lequel la matière de départ a), l'amine à fonctionnalité allyle, a la formule suivante 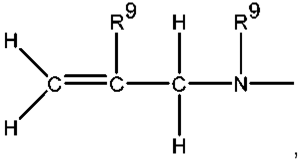 où chaque R⁹ est choisi indépendamment dans le groupe constitué d'hydrogène et un groupe alkyle de 1 à 15 atomes de carbone.

4. Procédé selon la revendication 3, où l'amine à fonctionnalité allyle est choisie dans le groupe constitué de 2-méthyl-allylamine et allylamine.

5. Procédé selon l'une quelconque des revendications 1 à 4, où la matière de départ c), le promoteur, est choisi dans le groupe constitué de : 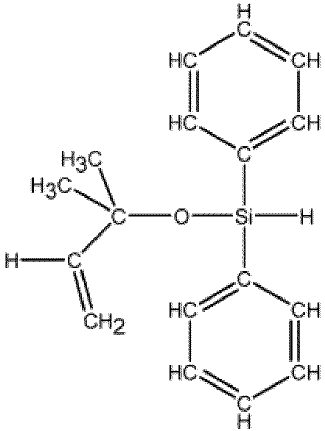 (1,1,-diméthyl-2-propényl)oxydiphénylsilane, 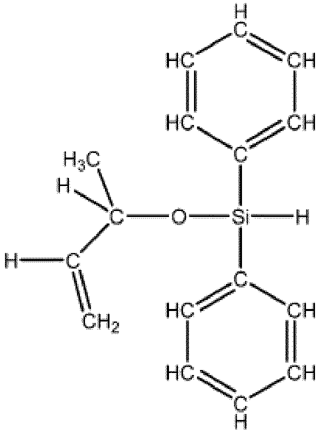 (1-méthyl-2-propényl)oxydiphénylsilane, 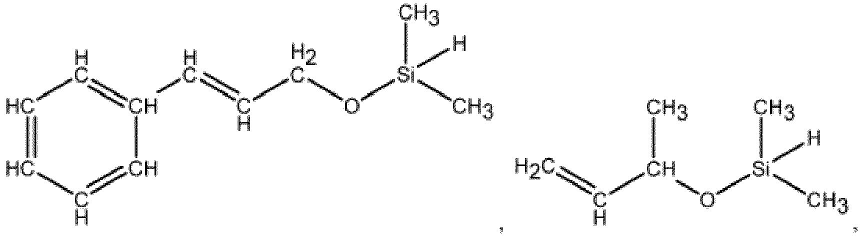 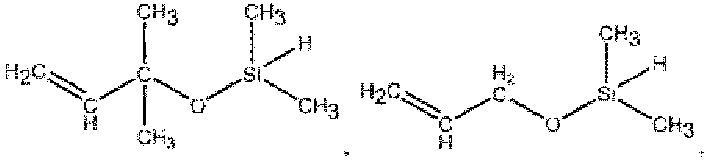 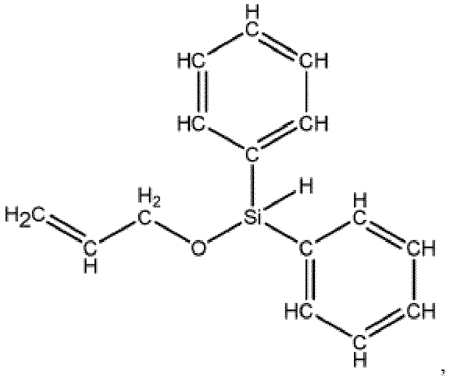 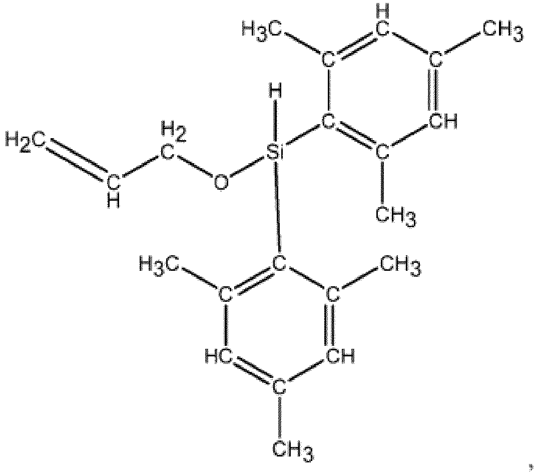 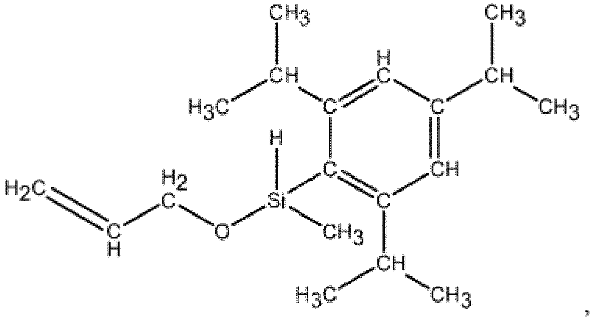 et

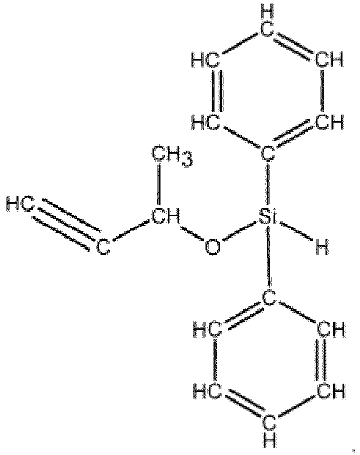

6. Procédé selon l'une quelconque des revendications 1 à 5, où la matière de départ d), l'oligomère siloxane à terminaison SiH, est choisie dans le groupe constitué de 1,1,3,3-tétraméthyldisiloxane et 1,1,3,3,5,5-hexaméthyltrisiloxane.

7. Procédé selon l'une quelconque des revendications 1 à 6, où la matière de départ e), un solvant, est ajoutée pendant et/ou après l'étape 1).

8. Procédé selon l'une quelconque des revendications 1 à 7, où la combinaison à l'étape 1) est réalisée en mélangeant les matières de départ a), b), et c) ; et en chauffant le mélange réactionnel jusqu'à une température de 110 °C.

9. Procédé selon l'une quelconque des revendications 1 à 8, où la matière de départ c), le promoteur de réaction d'hydrosilylation, et la matière de départ b), le catalyseur de platine, sont combinées avant de combiner la matière de départ a), l'amine à fonctionnalité allyle.

10. Procédé selon l'une quelconque des revendications précédentes, où l'étape 2) est réalisée à une température de 20 °C à 200 °C et dans lequel l'ajout de d) l'oligomère de siloxane à terminaison SiH à l'étape 2) est réalisé par un procédé comprenant
i) l'introduction dans le mélange réactionnel d'une première partie aliquote de d) l'oligomère siloxane à terminaison SiH suffisante pour fournir une première concentration en SiH de 100 ppm à 1 000 ppm, sur la base du poids du mélange réactionnel ;
ii) l'arrêt de l'introduction de d) l'oligomère siloxane à terminaison SiH jusqu'à ce qu'une deuxième concentration en SiH inférieure à la première concentration en SiH soit mesurée ;
iii) l'introduction dans le mélange réactionnel d'une seconde partie aliquote de d) l'oligomère siloxane à terminaison SiH suffisante pour obtenir une troisième concentration en SiH dans le mélange réactionnel qui est supérieure à la deuxième concentration, où la troisième concentration en SiH est de 100 ppm à 1 000 ppm, sur la base du poids du mélange réactionnel ; et
iv) la répétition des étapes ii) et iii) une ou plusieurs fois jusqu'à ce que l'ajout de d) l'oligomère de siloxane à terminaison SiH soit terminé.

11. Procédé selon l'une quelconque des revendications 1 à 10, où l'étape 3) est présente, et l'étape 3) comprend la purge avec un gaz inerte.

12. Procédé selon l'une quelconque des revendications 1 à 11, où l'étape 5) est réalisée dans un appareil de distillation comprenant une colonne de distillation ayant une partie supérieure et une partie inférieure, avec au moins 5 plateaux théoriques entre elles, un rebouilleur accouplé à la partie inférieure, et un condenseur de reflux accouplé à la partie supérieure ; et le procédé comprend
i) la combinaison d'un catalyseur de redistribution et du produit de réaction dans le rebouilleur, permettant ainsi de former un mélange réactionnel de redistribution ;
ii) le chauffage du mélange réactionnel de redistribution à reflux dans la colonne de distillation et la collecte d'une coupe de tête comprenant une amine à fonctionnalité allyle à un taux de reflux de 5 à 200 par l'intermédiaire du condenseur de reflux ;
iii) la distillation du mélange réactionnel de redistribution à un taux de reflux de 40 à 200 pendant 1 heure à 48 heures ; et par la suite
iv) la collecte du siloxazane cyclique en tant que coupe de tête ; et
facultativement v) le recyclage de la coupe de tête collectée à l'étape ii) et/ou d'une coupe de tête collectée à l'étape iii) lors de la répétition de l'étape i).

13. Procédé de préparation d'un composé organosilicié à fonctionnalité amino comprenant :
avant 1), la préparation de A) un siloxazane cyclique par la mise en œuvre d'un procédé comprenant :
1) la combinaison de matières de départ comprenant
a) une amine à fonctionnalité allyle,
b) un catalyseur de platine capable de catalyser une réaction d'hydrosilylation,
facultativement c) un promoteur de réaction d'hydrosilylation de formule 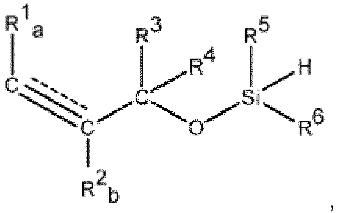 où - - - - - représente une liaison choisie dans le groupe constitué d'une double liaison et d'une triple liaison, l'indice a vaut 1 ou 2, l'indice b vaut 0 ou 1, à condition que, lorsque - - - - - est une double liaison, alors a = 2 et b = 1, et lorsque - - - - - est une triple liaison, alors a = 1 et b = 0 ; chaque R¹ est choisi indépendamment dans le groupe constitué d'hydrogène, un groupe alkyle de 1 à 15 atomes de carbone, et un groupe aryle de 6 à 20 atomes de carbone ; R² est choisi dans le groupe constitué d'hydrogène, un groupe alkyle de 1 à 15 atomes de carbone, et un groupe aryle de 6 à 20 atomes de carbone ; R³ est choisi dans le groupe constitué d'hydrogène, un groupe alkyle de 1 à 15 atomes de carbone, et un groupe aryle de 6 à 20 atomes de carbone, et R⁴ est choisi dans le groupe constitué d'hydrogène, un groupe alkyle de 1 à 15 atomes de carbone, et un groupe aryle de 6 à 20 atomes de carbone ; R⁵ est un groupe hydrocarboné monovalent de 1 à 15 atomes de carbone, choisi indépendamment ; et R⁶ est un groupe hydrocarboné monovalent de 1 à 15 atomes de carbone, choisi indépendamment ;
permettant ainsi de former un mélange réactionnel ; et par la suite
2) l'ajout par intermittence au mélange réactionnel de :
d) un oligomère de siloxane à terminaison SiH de formule 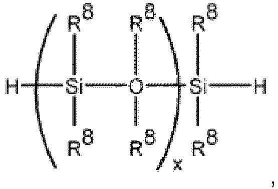 où chaque R⁸ est un groupe hydrocarboné monovalent de 1 à 18 atomes de carbone, choisi indépendamment, et l'indice x vaut 1 ou 2 ; permettant ainsi de préparer un produit de réaction comprenant le polysiloxazane cyclique et un sous-produit comprenant de l'hydrogène (H₂) ;
facultativement 3) l'élimination d'au moins une partie de l'hydrogène pendant l'étape 2) ;
facultativement 4) le chauffage du mélange réactionnel à une température de 110 °C à 150 °C pendant 1 à 6 heures après l'étape 2) ; et
facultativement 5) la réalisation d'une distillation réactive du produit de réaction, permettant ainsi de purifier le siloxazane cyclique ;
1) la combinaison de matières de départ comprenant :
A) le siloxazane cyclique, et
D) un composé organosilicié à fonctionnalité silanol ; permettant ainsi de préparer un produit de réaction comprenant le composé organosilicié à fonctionnalité amino ;
facultativement 2) la récupération du composé organosilicié à fonctionnalité amin\o ; et
facultativement, avant l'étape 2), l'ajout au mélange réactionnel E) d'un précatalyseur acide.

14. Procédé de préparation d'un polysiloxane à fonctionnalité α-alcoxy-ω-amino comprenant :
avant I), la préparation de A) un siloxazane cyclique par la mise en œuvre du procédé selon l'une quelconque des revendications 1 à 12 ;
I) la combinaison de matières de départ comprenant
A) le siloxazane cyclique, et
B) un alcool de formule R¹⁰OH, où R¹⁰ est un groupe alkyle de 1 à 8 atomes de carbone ; permettant ainsi de préparer un produit de réaction comprenant C) le polysiloxane à fonctionnalité α-alcoxy-ω-amino de formule 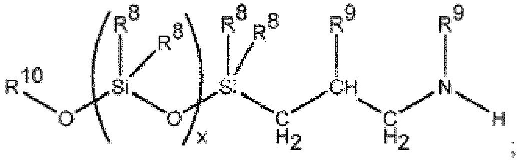
facultativement II) la purification du produit de réaction afin de récupérer C) le polysiloxane à fonctionnalité α-alcoxy-ω-amino.
